# FASCICULE DE BREVET EUROPEEN

(11) **EP 1 410 326 B1**
(45) Date de publication et mention de la délivrance du brevet: **26.01.2011**
(21) Numéro de dépôt: 02743349.9
(22) Date de dépôt: 05.06.2002
(51) Int. Cl.: G06T 1/00

(54) **PROCEDE ET SYSTEME POUR MODIFIER LA QUALITE D'IMAGE**
VERFAHREN UND SYSTEM ZUR QUALITÄTSVERBESSERUNG VON BILDERN
METHOD AND SYSTEM FOR MODIFYING IMAGE QUALITY

(30) Priorité: 12.07.2001 FR 0109291; 12.07.2001 FR 0109292
(43) Date de publication de la demande: 21.04.2004
(73) Titulaire: DxO Labs, 92100 Boulogne Billancourt (FR)
(72) Inventeur: LIEGE, Bruno, F-75015 PARIS (FR); GUICHARD, Frédéric, F-75012 PARIS (FR); LAVEST, Jean-Marc, F-63000 CLERMONT-FERRAND (FR)
(74) Mandataire: Grynwald, Albert
(86) Numéro de dépôt international: PCT/FR2002/001911
(87) Numéro de publication internationale: WO 2003/007240

(56) Documents cités:
- EP-A- 0 647 921
- EP-A- 0 686 945
- EP-A- 0 964 353
- EP-A- 1 104 175
- WO-A-01/35052
- WO-A-99/27470
- PATENT ABSTRACTS OF JAPAN vol. 1999, no. 03, 31 mars 1999 (1999-03-31) & JP 10 319929 A (MATSUSHITA ELECTRIC IND CO LTD), 4 décembre 1998 (1998-12-04)
- WATANABE M ET AL: "AN IMAGE DATA FILE FORMAT FOR DIGITAL STILL CAMERA" FINAL PROGRAM AND ADVANCE PRINTING OF PAPERS. ANNUAL CONFERENCE. IMAGING ON THE INFORMATION SUPERHIGHWAY, XX, XX, 1995, pages 421-424, XP000618775
- CLUNIE, D.: "Medical image format FAQ - Part 3. Proprietary formats" NONAME, [en ligne] 3 juin 2001 (2001-06-03), XP002178669 Extrait de l'Internet: <URL:http://www.dclunie.com/medical-image- faq/html/part3.html> [extrait le 2001-09-27]
- CHANG S-K ET AL: "SMART IMAGE DESIGN FOR LARGE IMAGE DATABASES" JOURNAL OF VISUAL LANGUAGES AND COMPUTING, LONDON, GB, vol. 3, no. 4, 1 décembre 1992 (1992-12-01), pages 323-342, XP000472773

## Description

La présente invention concerne un procédé et un système pour modifier la qualité d'au moins une image provenant ou destinée à une chaîne d'appareils

De Watanabe et al., "An Image Data File Format for Digital Still Camera", Final Program and Advance Printing of Papers. Annual Conference Imaging on the Information Superhighway, 1994, pp. 421 - 424, on connaît déjà le format EXIF pour codifier les parmètres relatives aux conditions de capture d'image dans le fichier de ladite image. Ce document mentionne par exemple les paramètres relatives à l'espace de couleurs. Les paramètres sont lisibles par un ordinateur destiné à afficher l'image.

### Solution

### Procédé

L'invention est definie dans les revendications independantes de procédé 1 de systéme 19 L'invention concerne un procédé pour modifier la qualité d'au moins une image provenant ou destinée à une chaîne d'appareils déterminée, la chaîne d'appareils déterminée comprend au moins un appareil de capture d'image et/ou au moins un appareil de restitution d'image, les appareils de capture d'image et/ou les appareils de restitution d'image, progressivement mis sur le marché par des acteurs économiques distincts, appartiennent à un ensemble indéterminé d'appareils, les appareils de l'ensemble d'appareils présentent des défauts qui peuvent être caractérisés par des informations formatées. le procédé comprend, pour l'image concernée, les étapes suivantes :
- l'étape de répertorier des sources d'informations formatées relatives aux appareils de l'ensemble d'appareils,
- l'étape de rechercher de manière automatique, parmi les informations formatées ainsi répertoriées, des informations formatées spécifiques relatives à la chaîne d'appareils déterminée,
- l'étape de modifier de manière automatique l'image au moyen de logiciels de traitement d'images et/ou de composants de traitement d'images en tenant compte des informations formatées spécifiques ainsi obtenues.

De préférence, selon l'invention, le procédé est tel que la recherche automatique est réalisée au moyen d'index obtenus directement ou indirectement à partir d'une analyse :
- de l'image, et/ou
- des appareils de la chaîne d'appareils, et/ou
- des moyens de chargement de l'image dans les logiciels ou composants de traitement d'image, et/ou
- des moyens de chargement de l'image modifiée par les logiciels ou composants de traitement d'image vers des moyens de restitution.

Selon l'invention, les appareils de la chaîne d'appareils sont identifiés par des identifiants, notamment un code barre, l'analyse en vue de rechercher les informations formatées spécifiques comporte l'étape de déterminer les identifiants.

De préférence, selon l'invention, le procédé est tel que l'image, l'index et/ou l'identifiant sont contenus dans un même fichier. Il résulte de la combinaison des traits techniques qu'il est possible de mettre en oeuvre a posteriori le procédé selon l'invention dans le cas où certains appareils de la chaîne ont été mis sur le marché avant que les informations formatées les concernant n'aient été établies.

De préférence, selon l'invention, le procédé est tel que l'image et au moins une partie des informations formatées spécifiques sont contenues dans un même fichier image. Il résulte de la combinaison des traits techniques qu' il est possible de rechercher de manière automatique les informations formatées dans le fichier image.

De préférence, selon l'invention, le procédé comprend en outre l'étape de stocker au préalable au moins une partie des informations formatées dans une base de données, le procédé comprend en outre l'étape de mettre à jour la base de données.

De préférence, selon l'invention le procédé est tel que l'un des appareils de la chaîne d'appareils présente au moins une caractéristique variable selon l'image, notamment la focale. une fraction des informations formatées spécifiques est liée aux défauts de l'appareil présentant la caractéristique variable, le procédé comprenant en outre les étapes suivantes :
- l'étape de déterminer la valeur des caractéristiques variables, pour ladite image ;
- l'étape de déterminer la fraction desdites informations formatées spécifiques en tenant compte des valeurs des caractéristiques variables ainsi obtenues.

Ainsi, la mise en oeuvre du procédé pour un appareil présentant une caractéristique variable est ramenée à la mise en oeuvre du procédé pour un appareil ne présentant aucune caractéristique variable.

De préférence, selon l'invention, l'image est contenue dans un fichier, le procédé est tel que pour déterminer la valeur de la caractéristique variable, on utilise des données présentes dans le fichier, notamment des données, par exemple la focale, selon un format tel que le standard Exif. Il résulte de la combinaison des traits techniques qu'il est possible de mettre en oeuvre a posteriori le procédé selon l'invention dans le cas où l'appareil présentant la caractéristique variable a été mis sur le marché avant que les informations formatées le concernant n'aient été établies.

De préférence, selon l'invention, le procédé est tel que pour modifier la qualité d'au moins une image provenant ou destinée à une chaîne d'appareils :
- on détermine un appareil virtuel présentant des défauts équivalents à au moins une partie des défauts d'au moins un appareil de la chaîne d'appareils, ci après dénommés les défauts d'origine,
- on détermine les informations formatées virtuelles liées aux défauts de l'appareil virtuel,
- on substitue pour déterminer les informations formatées spécifiques liées à l'ensemble des appareils de la chaîne d'appareils, les informations formatées virtuelles, aux informations formatées spécifiques relatives aux défauts d'origine.

Il résulte de la combinaison des traits techniques que l'on obtient ainsi des informations formatées plus simples à mettre en oeuvre et permettant de calculer les modifications devant être apportées à l'image, plus rapidement et/ou en utilisant moins de mémoire et/ou avec plus de précision.

De préférence, selon l'invention, le procédé est destiné à modifier la qualité d'au moins un plan couleur d'une image couleur, le plan couleur est caractérisé par une couleur déterminée, les informations formatées spécifiques comprennent en outre des données relatives à la couleur déterminée, pour modifier l'image, on calcule un plan couleur en utilisant les données relatives à la couleur déterminée et à l'image.

De préférence, selon l'invention, le procédé comprend en outre, dans le cas où le processus de recherche des informations formatées spécifiques n'aboutit pas pour un des appareils de la chaîne d'appareils, l'étape de calculer les informations formatées inconnues.

De préférence, selon l'invention, le procédé comprend en outre l'étape de calculer les informations formatées inconnues, liées à un appareil de la chaîne d'appareils :
- en mesurant des défauts de l'appareil, et/ou
- en simulant l'appareil.

De préférence, selon l'invention, le procédé comprend en outre, pour un appareil de capture d'images de la chaîne d'appareils, l'étape de calculer les informations formatées inconnues :
- en réalisant une classe d'images de synthèse par projections mathématiques déterminées, d'au moins une scène de référence, sur une surface,
- en capturant au moins une image de référence de chaque scène de référence au moyen de l'appareil de capture d'images,
- en choisissant dans un ensemble de modèles de transformation paramétrables celui permettant de transformer l'image de référence en une image transformée proche de la classe d'images de synthèse de la scène de référence.

l'image transformée présentant un écart avec la classe d'images de synthèse, les informations formatées inconnues sont au moins en partie composées des paramètres des modèles de transformation paramétrables choisis.

De préférence, selon l'invention, le procédé comprend en outre :
- l'étape de calculer les écarts entre l'image transformée et la classe d'images de synthèse,
- l'étape d'associer les écarts auxdites informations formatées inconnues.

Il résulte de la combinaison des traits techniques qu'il est possible de déduire des informations étalonnées sur les scènes en trois dimensions. Il résulte de la combinaison des traits techniques qu'il est possible de combiner plusieurs images obtenues à partir de plusieurs appareils de capture d'images ayant fait l'objet d'un même processus de formatage.

De préférence, selon l'invention, le procédé est tel que l'un des appareils de la chaîne d'appareils présente au moins une caractéristique variable selon l'image, notamment la focale et/ou l'ouverture, une fraction des informations formatées spécifiques est liée aux défauts de l'appareil présentant la ou les caractéristiques variables, chaque caractéristique variable est susceptible d'être associée à une valeur pour former une combinaison constituée de l'ensemble des caractéristiques variables et des valeurs, le procédé comprend en outre l'étape de déterminer la fraction des informations formatées inconnues:
- en sélectionnant des combinaisons prédéterminées,
- en mettant en oeuvre un processus d'itération des précédentes étapes du procédé, pour chacune des combinaisons prédéterminées,
- en mettant en oeuvre un processus d'interpolation des informations formatées inconnues relatives à une combinaison quelconque, à partir des informations formatées inconnues obtenues au terme du processus d'itération.

De préférence, selon l'invention, le procédé comprend en outre, pour un moyen de restitution d'images de la chaîne d'appareils, l'étape de produire des données caractérisant des défauts des moyens de restitution des images, notamment les caractéristiques de distorsion, les informations formatées inconnues sont au moins en partie composées des données caractérisant des défauts des moyens de restitution.

De préférence, selon l'invention, le procédé est tel que les informations formatées spécifiques, liées à un appareil ou à plusieurs appareils de la chaîne d'appareils, sont déterminées de manière à pouvoir être appliquées à des appareils similaires. Il résulte de la combinaison des traits techniques que la mise en oeuvre du procédé n'implique qu'un nombre limité d'informations formatées.

De préférence, selon l'invention, le procédé est tel que l'image comporte des informations associées, notamment une signature numérique, les étapes du procédé sont mises en oeuvre de telle sorte qu'elles conservent ou modifient les informations associées.

De préférence, selon l'invention le procédé comporte en outre l'étape d'associer des informations à l'image modifiée, notamment l'information indiquant qu'elle a été modifiée.

De préférence, selon l'invention, le procédé est plus particulièrement destiné à modifier la qualité visuelle de l'image pour un observateur, les informations formatées liées aux défauts des appareils de la chaîne d'appareils comporte en outre des informations formatées liées aux caractéristiques de vision du observateur, notamment des anomalies de fonctionnement des yeux et/ou du cerveau du observateur.

### Application

L'invention concerne également une application du procédé précédemment décrit. L'application a pour objet d'améliorer la qualité des images traitées par les logiciels de traitement d'image ou les composants de traitement d'image, en corrigeant les effets d'au moins un des défauts des appareils de la chaîne d'appareils. Il résulte de la combinaison des traits techniques que la qualité des images traitées est améliorée sinon parfaite, sans pour autant faire appel à des appareils coûteux.

De préférence, l'application a pour objet que la qualité des images traitées par les logiciels de traitement d'image ou les composants de traitement d'image soit comparable à celles d'images produites avec une chaîne d'appareils de référence.

De préférence, l'application est telle que, pour que la qualité des images traitées soit comparable à celles d'images produites avec une chaîne d'appareils de référence, on produit des informations formatées relatives à la chaîne d'appareils en tenant compte des défauts de la chaîne d'appareils de référence.

### Système

L'invention concerne un système pour modifier la qualité d'au moins une image provenant ou destinée à une chaîne d'appareils déterminée, la chaîne d'appareils déterminée comprend au moins un appareil de capture d'image et/ou au moins un appareil de restitution d'image, les appareils de capture d'image et/ou les appareils de restitution d'image, progressivement mis sur le marché par des acteurs économiques distincts, appartiennent à un ensemble indéterminé d'appareils, les appareils de l'ensemble d'appareils présentent des défauts pouvant être caractérisés par des informations formatées, le système comprend des moyens de traitement informatique permettant, pour l'image concernée, de :
- répertorier des sources d'informations formatées relatives aux appareils de l'ensemble d'appareils,
- rechercher de manière automatique parmi les informations formatées ainsi répertoriées, des informations formatées spécifiques relatives à la chaîne d'appareils déterminée,
- modifier de manière automatique l'image au moyen de logiciels de traitement d'images et/ou de composants de traitement d'images en tenant compte des informations formatées spécifiques ainsi obtenues.

De préférence, selon l'invention, le système est tel que les moyens de traitement informatique effectuent la recherche de manière automatique au moyen d'index, l'index est obtenu directement ou indirectement par des moyens d'analyse à partir d'une analyse :
- de l'image, et/ou
- des appareils de la chaîne d'appareils, et/ou
- des moyens de chargement de l'image dans les logiciels ou composants de traitement d'image, et/ou
- des moyens de chargement de l'image modifiée par les logiciels ou composants de traitement d'image vers des moyens de restitution.

Selon l'invention, les appareils de la chaîne d'appareils sont identifiés par des identifiants, notamment un code barre, les moyens d'analyse comportent des moyens d'identification pour déterminer les identifiants.

De préférence, selon l'invention, le système est tel que l'image, l'index et/ou l'identifiant sont contenus dans un même fichier.

De préférence, selon l'invention, le système est tel que l'image et au moins une partie des informations formatées spécifiques sont contenus dans un même fichier image.

De préférence, selon l'invention, le système comprend en outre des moyens de stockage pour stocker au préalable au moins une partie des informations formatées dans une base de données, le système comprend en outre des moyens de mise à jour pour mettre à jour la base de données.

De préférence, selon l'invention, le système est tel que l'un des appareils de la chaîne d'appareils présente au moins une caractéristique variable selon l'image, notamment la focale. une fraction des informations formatées spécifiques est liée aux défauts de l'appareil présentant la caractéristique variable. le système comprend en outre des moyens de calcul pour déterminer :
- la valeur des caractéristiques variables, pour l'image concernée,
- la fraction des informations formatées spécifiques en tenant compte des valeurs des caractéristiques variables ainsi obtenues.

De préférence, selon l'invention, l'image est contenue dans un fichier. le système est tel que, pour déterminer la valeur de la caractéristique variable, le système comprend des moyens de traitement informatique pour traiter des données présentes dans le fichier, notamment des données, par exemple la focale, selon un format tel que le standard Exif.

De préférence, selon l'invention, le système est tel que, pour modifier la qualité d'au moins une image provenant ou destinée à une chaîne d'appareils, le système comprend des moyens de traitement informatique pour déterminer :
- un appareil virtuel présentant des défauts équivalents à au moins une partie des défauts d'au moins un appareil de la chaîne d'appareils, ci-après dénommés les défauts d'origine,
- les informations formatées virtuelles liées aux défauts du appareil virtuel
   le système est tel que, pour déterminer les informations formatées spécifiques liées à l'ensemble des appareils de la chaîne d'appareils, les moyens de traitement informatique comprennent des moyens de substitution pour substituer les informations formatées virtuelles aux informations formatées spécifiques relatives aux défauts d'origine.

De préférence, selon l'invention, le système est destiné à modifier la qualité d'au moins un plan couleur d'une image couleur. le plan couleur est caractérisé par une couleur déterminée. les informations formatées spécifiques comprend en outre des données relatives à la couleur déterminée. le système comprend des moyens de calcul pour calculer un plan couleur en utilisant les données relatives à la couleur déterminée et à l'image.

De préférence, selon l'invention, le système comprend en outre, dans le cas où le processus de recherche des informations formatées spécifiques n'aboutit pas pour un des appareils de la chaîne d'appareils, des moyens de calcul pour calculer les informations formatées inconnues.

De préférence, selon l'invention, le système est tel que les moyens de calcul pour calculer les informations formatées inconnues, liées à un appareil de la chaîne d'appareils, comprennent des moyens de traitement pour mesurer des défauts de l'appareil, et/ou pour simuler l'appareil.

De préférence, selon l'invention, le système comprend en outre, pour un appareil de capture d'images de la chaîne d'appareils, des moyens de calcul calculant les informations formatées inconnues en réalisant une classe d'images de synthèse par projections mathématiques déterminées, d'au moins une scène de référence, sur une surface. l'appareil de capture d'images capturant au moins une image de référence de chaque scène de référence. les moyens de calcul calculant les informations formatées inconnues en choisissant dans un ensemble de modèles de transformation paramétrables celui permettant de transformer l'image de référence en une image transformée proche de la classe d'images de synthèse de la scène de référence. l'image transformée présentant un écart avec la classe d'images de synthèse. les informations formatées inconnues sont au moins en partie composées des paramètres des modèles de transformation paramétrables choisis.

De préférence, selon l'invention, le système comprend en outre des moyens de traitement informatiques pour :
- calculer les écarts entre l'image transformée et la classe d'images de synthèse,
- associer les écarts aux informations formatées inconnues.

De préférence, selon l'invention, le système est tel que l'un des appareils de la chaîne d'appareils présente au moins une caractéristique variable selon l'image, notamment la focale et/ou l'ouverture. une fraction des informations formatées spécifiques est liée aux défauts de l'appareil présentant la ou les caractéristiques variables. chaque caractéristique variable est susceptible d'être associée à une valeur pour former une combinaison constituée de l'ensemble des caractéristiques variables et des valeurs. le système comprend en outre des moyens de traitement informatique pour déterminer la fraction des informations formatées inconnues :
- en sélectionnant des combinaisons prédéterminées,
- en mettant en oeuvre, pour chacune des combinaisons prédéterminées, un processus d'itération des moyens de calcul et des moyens de traitement informatique précédemment décrits,
- en mettant en oeuvre un processus d'interpolation des informations formatées inconnues relatives à une combinaison quelconque, à partir des informations formatées inconnues obtenues au terme du processus d'itération.

De préférence, selon l'invention, le système comprend en outre, pour un moyen de restitution d'images de la chaîne d'appareils, des moyens de traitement informatique pour produire des données caractérisant des défauts des moyens de restitution des images, notamment les caractéristiques de distorsion. les informations formatées inconnues sont au moins en partie composées des données caractérisant des défauts des moyens de restitution.

De préférence, selon l'invention, le système est tel que les informations formatées spécifiques, liées à un appareil ou à plusieurs appareils de la chaîne d'appareils, sont déterminées de manière à pouvoir être appliquées à des appareils similaires.

De préférence, selon l'invention, le système est tel que l'image comporte des informations associées, notamment une signature numérique. Le système est mise en oeuvre de telle sorte qu'il conserve ou modifie les informations associées.

De préférence, selon l'invention, le système comporte en outre des moyens de traitement informatique pour associer des informations à l'image modifiée, notamment l'information indiquant qu'elle a été modifiée.

De préférence, selon une variante de réalisation de l'invention, le système est plus particulièrement destiné à modifier la qualité visuelle de l'image pour un observateur. Les informations formatées liées aux défauts des appareils de ladite chaîne d'appareils comportent en outre des informations formatées liées aux caractéristiques de vision dudit observateur, notamment des anomalies de fonctionnement des yeux et/ou du cerveau dudit observateur.

### Description détaillée

D'autres caractéristiques et avantages de l'invention apparaîtront à la lecture de la description d'exemples de réalisation de l'invention donnée à titre non limitatif, et des figures qui représentent:
- figure 1 : une vue schématique d'une capture d'image,
- figure 2 : une vue schématique d'une restitution d'image,
- figure 3 : une vue schématique des pixels d'une image,
- figures 4a et 4b _{:} deux vues schématiques d'une scène de référence,
- figure 5 : l'organigramme de la méthode permettant de calculer la différence entre l'image mathématique et l'image corrigée,
- figure 6 : l'organigramme de la méthode permettant d'obtenir la meilleure transformation de restitution pour un moyen de restitution d'image,
- figure 7 : une vue schématique des éléments composant le système auquel s'applique l'invention,
- figure 8 : une vue schématique des champs des informations formatées,
- figure 9a : une vue schématique de face d'un point mathématique,
- figure 9b : une vue schématique de face d'un point réel d'une image,
- figure 9c : une vue schématique de profil d'un point mathématique,
- figure 9d : une vue schématique de profil d'un point réel d'une image,
- figure 10 : une vue schématique d'une grille de points caractéristiques,
- figure 11 : l'organigramme de la méthode permettant d'obtenir les informations formatées,
- figure 12 : l'organigramme de la méthode permettant d'obtenir la meilleure transformation pour un appareil de capture d'image,
- figures 13a à 13c: des diagrammes de liaison d'exemple de réalisation de systèmes permettant de corriger une image,
- figures 14a à 14c, des organigrammes d'exemple de réalisation de procédés permettant de mettre en oeuvre une correction automatique d'image,
- figure 15, un organigramme d'un procédé permettant de substituer un appareil virtuel à une chaîne d'appareils.
- figure 16-1, un diagramme faisant apparaître un appareil possédant des défauts ;
- figure 16.2, un diagramme faisant apparaître un appareil possédant des caractéristiques variables ;
- figure 16.3, un diagramme faisant intervenir un ou des défauts de vision d'un observateur ;
- figure 16.4, un diagramme de traitement des caractéristiques d'un appareil virtuel ;
- figure 16.5, un diagramme faisant apparaître l'adjonction d'informations associées à une image corrigée ;
- figure 16.6, un diagramme illustrant le fait que des informations formatées peuvent concerner un ou plusieurs lots d'appareils,
- figure 17, une description d'un exemple de mise en oeuvre du procédé et système selon l'invention,
- figure 18, une description d'un exemple de mise en oeuvre du procédé et système selon l'invention dans le cas d'une image couleur.

### Chaîne d'appareils

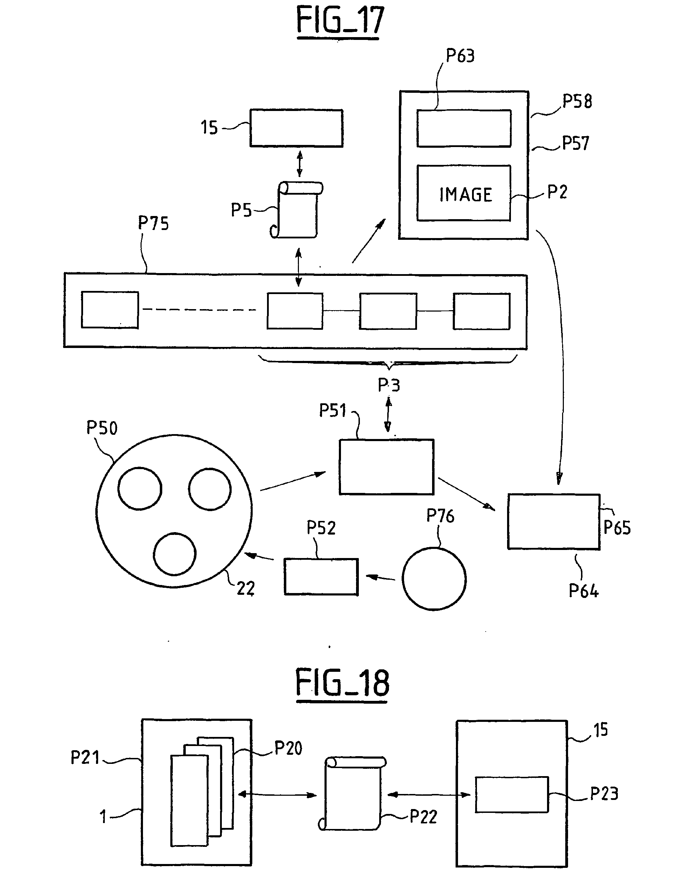

En se référant notamment à la figure 17, on va décrire la notion de chaîne d'appareils P3. Les appareils de la chaîne d'appareils P3, notamment des appareils de capture d'image et/ou des appareils de restitution d'image, sont progressivement mis sur le marché par des acteurs économiques distinct et appartiennent à un ensemble indéterminé d'appareils, appelé également ensemble d'appareils P75.

Au sens de l'invention, un appareil peut être notamment:
- un appareil de capture d'image, comme par exemple un appareil photo jetable, un appareil photo numérique, un appareil reflex, un scanner, un fax, un endoscope, un caméscope, une caméra de surveillance, un jouet, une caméra intégrée ou reliée à un téléphone, à un assistant personnel ou à un ordinateur, une caméra thermique, un appareil d'échographie,
- un appareil de restitution d'image ou moyen de restitution d'image 19 comme par exemple un écran, un projecteur, un téléviseur, des lunettes de réalité virtuelle ou une imprimante,
- un appareil y compris son installation, par exemple un projecteur, un écran et la façon dont ils sont positionnés,
- le positionnement d'un observateur par rapport à un appareil de restitution, qui introduit notamment des erreurs de parallaxe,
- un être humain ayant des défauts de vision, par exemple l'astigmatisme,
- un appareil auquel on veut ressembler, pour produire des images ayant par exemple un aspect similaire à celles produites par un appareil de marque Leica,
- un dispositif de traitement d'images, par exemple un logiciel de zoom qui a comme effet de bord d'ajouter du flou,
- un appareil virtuel équivalent à plusieurs appareils

Un appareil plus complexe comme un scanner/fax/imprimante, un Minilab d'impression photo, un appareil de vidéo-conférence peut être considéré comme un appareil ou plusieurs appareils.

On appelle chaîne d'appareils P3 un ensemble d'appareils. La notion de chaîne d'appareils P3 peut en outre inclure une notion d'ordre.

Les exemples suivants constituent des chaînes d'appareils P3:
- un seul appareil,
- un appareil de capture d'image et un appareil de restitution d'image,
- un appareil photo, un scanner, une imprimante par exemple dans un Minilab de tirage photo,
- un appareil photo numérique, une imprimante par exemple dans un Minilab de tirage photo,
- un scanner, un écran ou une imprimante, par exemple dans un ordinateur,
- un écran ou projecteur et l'oeil d'un être humain,
- un appareil et un autre appareil auquel on veut ressembler,
- un appareil photo et un scanner,
- un appareil de capture d'image, un logiciel de traitement d'images,
- un logiciel de traitement d'images, un appareil de restitution d'image,
- une combinaison des exemples précédents,
- un autre ensemble d'appareils.

### Défaut

En se référant notamment à la figure 17, on va maintenant décrire la notion de défaut P5. On appelle défaut P5 d'un appareil de l'ensemble d'appareils P75, un défaut lié aux caractéristiques de l'optique et/ou du capteur et/ou de l'électronique et/ou du logiciel intégré à un appareil ; des exemples de défauts P5 sont par exemple la distorsion, le flou, le vignetage, les aberrations chromatiques, le rendu des couleurs, l'uniformité du flash, le bruit du capteur, le grain, l'astigmatisme, l'aberration sphérique.

### Image

En se référant notamment à la figure 17, on va maintenant décrire la notion d'image P2. On appelle image P2 une image numérique capturée ou modifiée ou restituée par un appareil. L'image P2 peut provenir d'un appareil de la chaîne d'appareils P3. L'image P2 peut être destinée à un appareil de la chaîne d'appareils P3. De manière plus générale l'image P2 peut provenir et/ou être destinée à la chaîne d'appareils P3. Dans le cas d'images animées, par exemple vidéo, constituées d'une séquence dans le temps d'images fixes, on appelle image P2 : une image fixe de la séquence d'images.

### Informations formatées

En se référant notamment à la figure 17, on va maintenant décrire la notion d'informations formatées 15. On appelle informations formatées 15 des données liées aux défauts P5 d'un ou plusieurs appareils de la chaîne d'appareils P3 et permettant à des moyens de traitement d'images de modifier la qualité des images P2 en tenant compte des défauts P5 de l'appareil. Pour produire les informations formatées 15, on peut utiliser divers procédés et systèmes basés sur des mesures, et/ou des captures ou restitution de références, et/ou des simulations.

Pour produire les informations formatées 15, on peut par exemple utiliser le procédé et le système décrits dans la demande de brevet international déposée le même jour que la présente demande au nom de la société Vision IQ et sous le titre : "Procédé et système pour produire des informations formatées liées aux défauts des appareils d'une chaîne d'appareils et d'informations formatées destinées à des moyens de traitement d'image." Dans cette demande, il est décrit un procédé pour produire des informations formatées 15 liées aux défauts P5 des appareils d'une chaîne d'appareils P3. Les informations formatées 15 sont destinées à des moyens de traitement d'image, notamment des logiciels, en vue de modifier la qualité des images traitées par les moyens de traitement d'image. la chaîne d'appareils P3 comprend notamment au moins un appareil de capture d'image et/ou au moins un moyen de restitution et/ou au moins un observateur. le procédé comprend l'étape de produire des données caractérisant des défauts P5 des appareils de la chaîne d'appareils P3. les données sont des informations formatées 15.

Pour produire les informations formatées 15, on peut par exemple utiliser le procédé et le système décrits dans la demande de brevet international déposée le même jour que la présente demande au nom de la société Vision IQ et sous le titre : "Procédé et système pour produire des informations formatées liées aux distorsions géométriques." Dans cette demande, il est décrit un procédé pour produire des informations formatées 15 liées aux appareils d'une chaîne d'appareils P3. la chaîne d'appareils P3 comprend notamment au moins un appareil de capture d'image et/ou au moins un appareil de restitution d'image. le procédé comprend l'étape de produire des informations formatées 15 liées aux distorsions géométriques d'au moins un appareil de la chaîne.

De préférence, l'appareil permettant de capturer ou restituer une image sur un support. l'appareil comporte au moins une caractéristique fixe et/ou une caractéristique variable selon l'image. la caractéristique fixe et/ou caractéristique variable est susceptible d'être associée à une ou plusieurs valeurs de caractéristiques, notamment la focale et/ou la mise au point et leurs valeurs de caractéristiques associées. le procédé comprend l'étape de produire des informations formatées mesurées liées aux distorsions géométriques de l'appareil à partir d'un champ mesuré. les informations formatées 15 peuvent comprendre les informations formatées mesurées.

Pour produire les informations formatées 15, on peut par exemple utiliser le procédé et le système décrits dans la demande de brevet international déposée le même jour que la présente demande au nom de la société Vision IQ et sous le titre : "Procédé et système pour produire des informations formatées liées aux défauts d'au moins un appareil d'une chaîne, notamment au flou." Dans cette demande, il est décrit un procédé pour produire des informations formatées 15 liées aux appareils d'une chaîne d'appareils P3. la chaîne d'appareils P3 comprend notamment au moins un appareil de capture d'image et/ou au moins un appareil de restitution d'image. le procédé comprend l'étape de produire des informations formatées 15 liées aux défauts P5 d'au moins un appareil de la chaîne. De préférence, l'appareil permettant de capturer ou restituer une image comporte au moins une caractéristique fixe et/ou une caractéristique variable selon l'image (I). les caractéristiques fixe et/ou variables sont susceptibles d'être associées à une ou plusieurs valeurs de caractéristiques, notamment la focale et/ou la mise au point et leurs valeurs de caractéristiques associées. le procédé comprend l'étape de produire des informations formatées mesurées liées aux défauts P5 de l'appareil à partir d'un champ mesuré. les informations formatées 15 peuvent comprendre les informations formatées mesurées.

Pour fournir les informations formatées 15, on peut par exemple utiliser le procédé et le système décrits dans la demande de brevet international déposée le même jour que la présente demande au nom de la société Vision IQ et sous le titre : "Procédé et système pour fournir, selon un format standard, des informations formatées à des moyens de traitement d'images." Dans cette demande, il est décrit un procédé pour fournir, selon un format standard, des informations formatées 15 à des moyens de traitement d'images, notamment des logiciels et/ou des composants. les informations formatées 15 sont liées aux défauts P5 d'une chaîne d'appareils P3. la chaîne d'appareils P3 comprend notamment au moins un appareil de capture d'image et/ou un appareil de restitution d'image. les moyens de traitement d'images utilisent les informations formatées 15 pour modifier la qualité d'au moins une image P2 provenant ou destinée à la chaîne d'appareils P3. les informations formatées 15 comportent des données caractérisant des défauts P5 de l'appareil de capture d'image, notamment les caractéristiques de distorsion, et/ou des données caractérisant des défauts de l'appareil de restitution des images, notamment les caractéristiques de distorsion.

le procédé comprend l'étape de renseigner au moins un champ du format standard avec les informations formatées 15. le champ est désigné par un nom de champ. le champ contenant au moins une valeur de champ.

Pour produire les informations formatées 15, on peut par exemple utiliser le procédé et le système décrits dans la demande de brevet international déposée le même jour que la présente demande au nom de la société Vision IQ et sous le titre : "Procédé et système pour réduire la fréquence des mises à jour de moyens de traitement d'images." Dans cette demande, il est décrit un procédé pour réduire la fréquence des mises à jour de moyens de traitement d'images, notamment un logiciel et/ou un composant. les moyens de traitement d'images permettant de modifier la qualité des images numériques provenant ou destinées à une chaîne d'appareils P3. la chaîne d'appareil P3 comporte au moins un appareil de capture d'image et/ou au moins un appareil de restitution d'image. les moyens de traitement d'image mettent en oeuvre des informations formatées 15 liées aux défauts P5 d'au moins un appareil de la chaîne d'appareils P3. les informations formatées P3 dépendent d'au moins une variable. les informations formatées permettant d'établir une correspondance entre une partie des variables et des identifiants. les identifiants permettent de déterminer la valeur de la variable correspondante à l'identifiant en tenant compte de l'identifiant et de l'image. Il résulte de la combinaison des traits techniques qu'il est possible de déterminer la valeur d'une variable, notamment dans le cas où la signification physique et/ou le contenu de la variable ne sont connus que postérieurement à la diffusion des moyens de traitement d'image. Il résulte également de la combinaison des traits techniques que le temps entre deux mises à jour du logiciel de correction peut être espacé. Il résulte également de la combinaison des traits techniques que les divers acteurs économiques qui produisent des appareils et/ou des moyens de traitement d'image peuvent mettre à jour leurs produits indépendamment des autres acteurs économiques, même si ces derniers changent radicalement les caractéristiques de leurs produit ou ne peuvent forcer leur client à mettre à jour leur produits. Il résulte également de la combinaison des traits techniques qu'une nouvelle fonctionnalité peut être déployée progressivement en commençant par un nombre limité d'acteurs économiques et d'utilisateurs pionniers.

Pour exploiter les informations formatées 15, on peut par exemple utiliser le procédé et le système décrits dans la demande de brevet international déposée le même jour que la présente demande au nom de la société Vision IQ et sous le titre : "Procédé et système pour calculer une image transformée à partir d'une image numérique et d'informations formatées relatives à une transformation géométrique." Dans cette demande, il est décrit un procédé pour calculer une image transformée à partir d'une image numérique et d'informations formatées 15 relatives à une transformation géométrique, notamment des informations formatées 15 relatives aux distorsions et/ou aberrations chromatiques d'une chaîne d'appareils P3. le procédé comprend l'étape de calculer l'image transformée à partir d'une approximation de la transformation géométrique. Il en résulte que le calcul est économe en ressource mémoire, en bande passante mémoire, en puissance de calcul et donc en consommation électrique. Il en résulte également que l'image transformée ne présente pas de défaut visible ou gênant pour son utilisation ultérieure.

Pour exploiter les informations formatées 15, on peut par exemple utiliser le procédé et le système décrits dans la demande de brevet international déposée le même jour que la présente demande au nom de la société Vision IQ et sous le titre : "Procédé et système pour modifier une image numérique en prenant en compte son bruit." Dans cette demande, il est décrit un procédé pour calculer une image transformée à partir d'une image numérique et d'informations formatées 15 relatives à des défauts P5 d'une chaîne d'appareils P3. la chaîne d'appareils P3 comporte des appareils de capture d'image et/ou des appareils de restitution d'image. la chaîne d'appareils P3 comporte au moins un appareil. le procédé comprend l'étape de déterminer automatiquement des données caractéristiques à partir des informations formatées 15 et/ou de l'image numérique. Il résulte de la combinaison des traits techniques que l'image transformée ne présente pas de défaut visible ou gênant, notamment de défauts liés au bruit, pour son utilisation ultérieure.

### Produire des informations formatées

L'exemple suivant illustre une façon de produire les informations formatées.

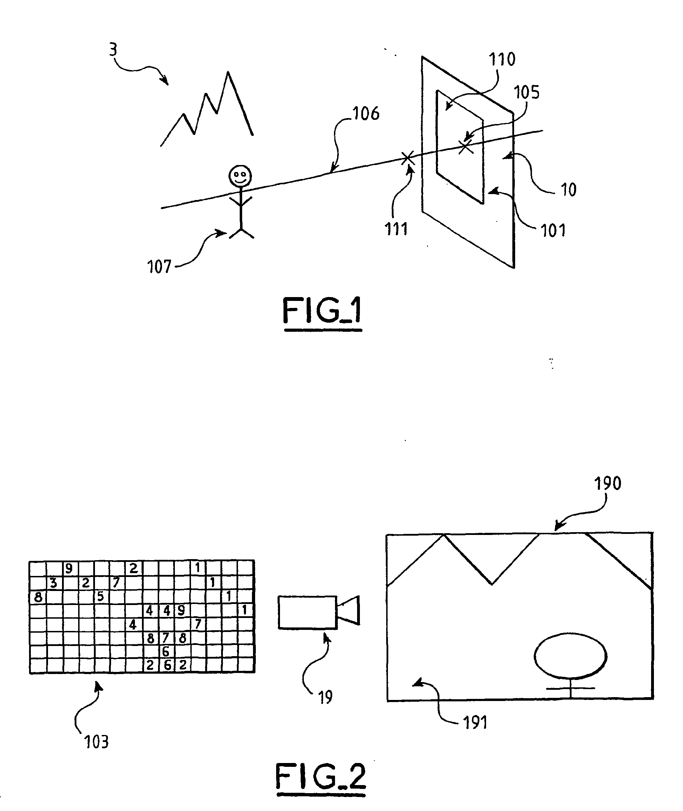

Sur la figure 1, on a représenté : une scène 3 comportant un objet 107, un capteur 101 et la surface du capteur 110, un centre optique 111, un point d'observation 105 sur une surface du capteur 110, une direction d'observation 106 passant par le point d'observation 105, le centre optique 111, la scène 3, une surface 10 géométriquement associée à la surface du capteur 110.

Sur la figure 2, on a représenté une image 103, un moyen de restitution d'image 19 et une image restituée 191 obtenue sur le support de restitution 190.

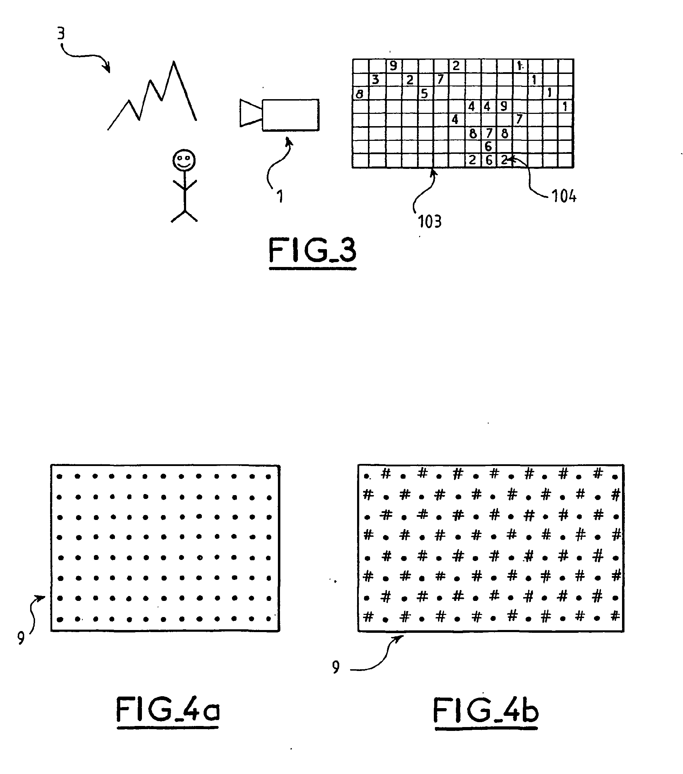

Sur la figure 3 on a représenté une scène 3, un appareil de capture d'image 1 et une image 103 constituée de pixels 104.

Sur les figures 4a et 4b, on a représenté deux variantes d'une scène de référence 9.

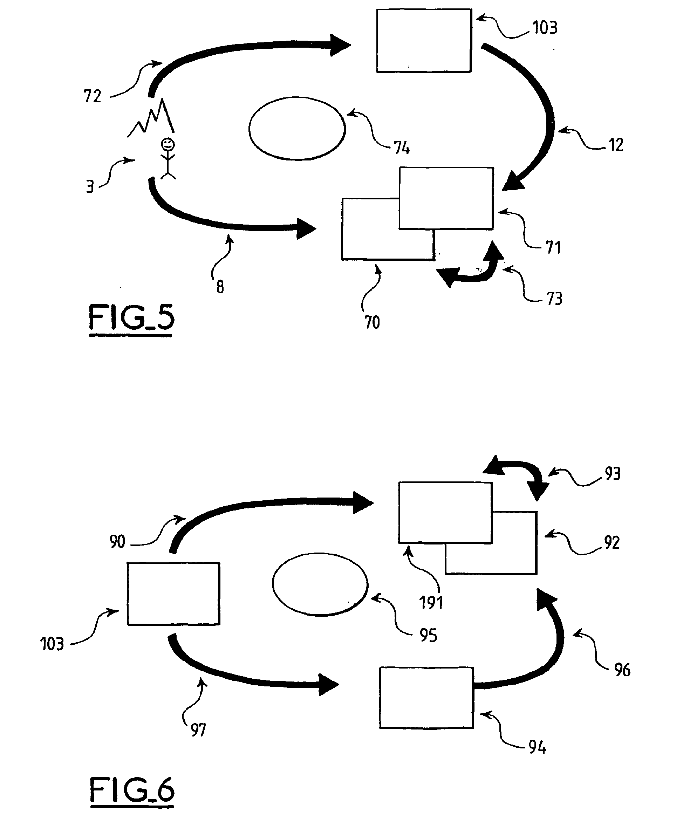

Sur la figure 5 on a représenté un organigramme mettant en oeuvre une scène 3, une projection mathématique 8 donnant une image mathématique 70 de la scène 3, une projection réelle 72 donnant une image 103 de la scène 3 pour les caractéristiques utilisées 74, un modèle de transformation paramétrable 12 donnant une image corrigée 71 de l'image 103, l'image corrigée 71 présentant une différence 73 avec l'image mathématique 70.

Sur la figure 6 on a représenté un organigramme mettant en oeuvre une image 103, une projection réelle de restitution 90 donnant une image restituée 191 de l'image 103 pour les caractéristiques de restitution utilisées 95, un modèle de transformation paramétrable de restitution 97 donnant une image corrigée de restitution 94 de l'image 103, une projection mathématique de restitution 96 donnant une image mathématique de restitution 92 de l'image corrigée de restitution 94 et présentant une différence de restitution 93 avec l'image restituée 191.

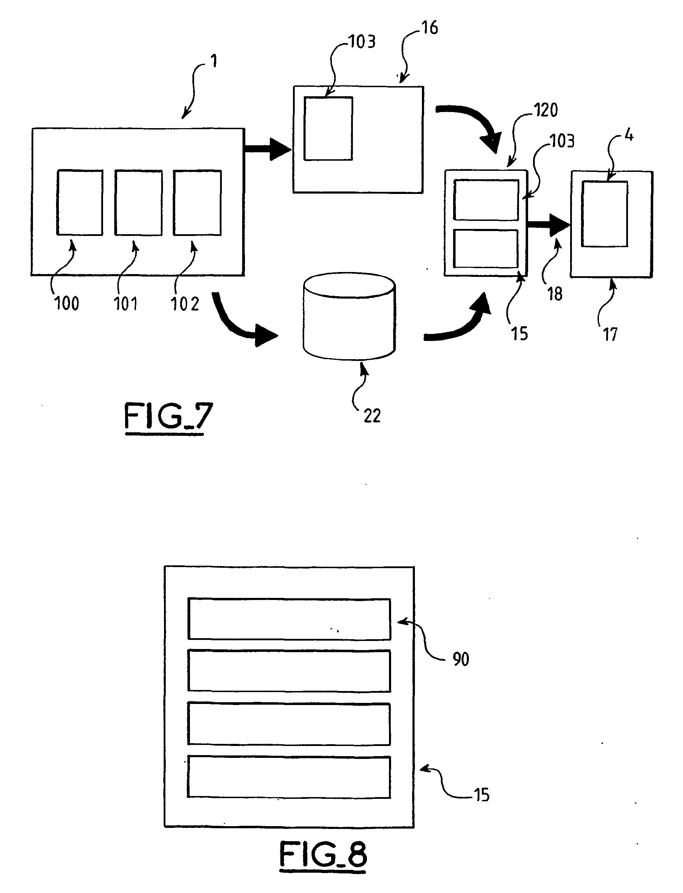

Sur la figure 7 on a représenté un système comprenant un appareil de capture d'image 1 constitué d'une optique 100, d'un capteur 101 et d'une électronique 102. Sur la figure 7 on a également représenté une zone mémoire 16 contenant une image 103, une base de données 22 contenant des informations formatées 15, des moyens de transmission 18 de l'image complétée 120 constituée de l'image 103 et des informations formatées 15 vers des moyens de calcul 17 contenant des logiciels de traitement d'image 4.

Sur la figure 8 on a représenté des informations formatées 15 constituées de champs 90.

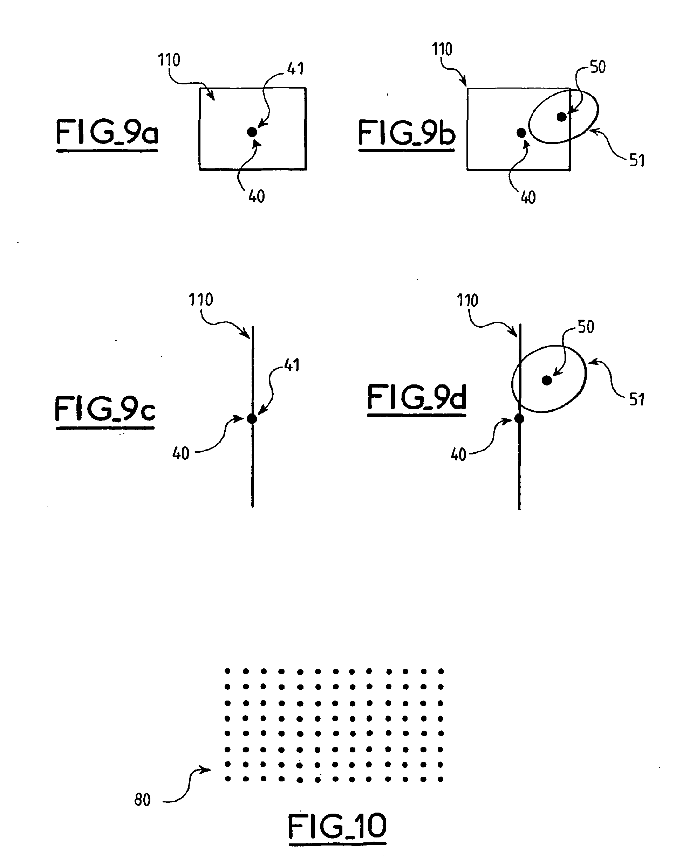

Sur les figures 9a à 9d on a représenté une image mathématique 70, une image 103, la position mathématique 40 d'un point, la forme mathématique 41 d'un point, comparés à la position réelle 50 et à la forme réelle 51 du point correspondant de l'image.

Sur la figure 10 on a représenté une grille 80 de points caractéristiques.

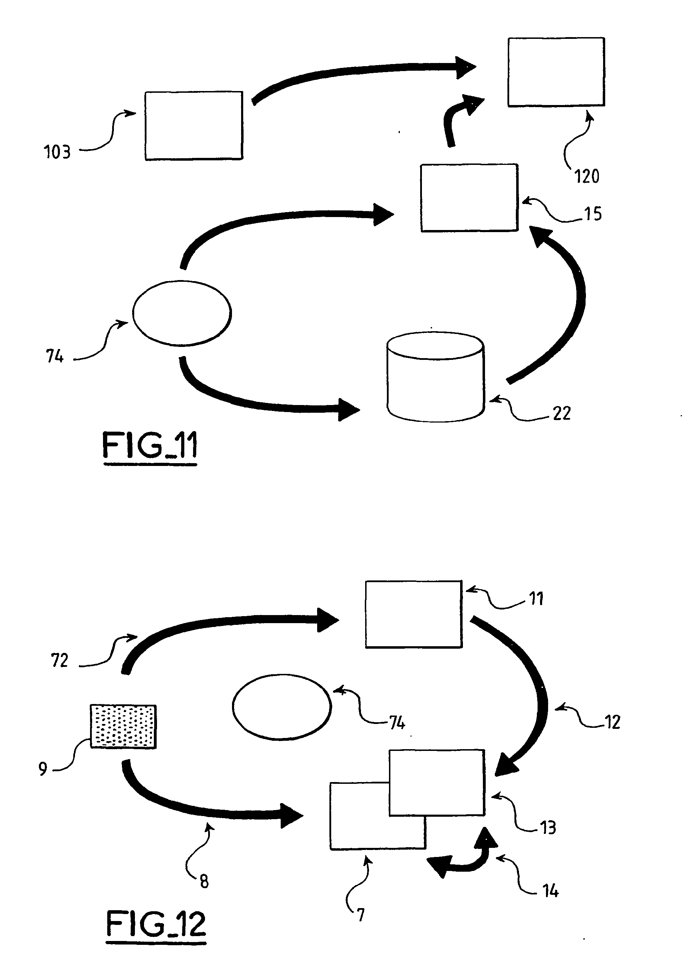

Sur la figure 11 on a représenté un organigramme mettant en oeuvre une image 103, des caractéristiques utilisées 74, une base de données de caractéristiques 22. Les informations formatées 15 sont obtenues à partir des caractéristiques utilisées 74 et stockées dans la base de données 22. L'image complétée 120 est obtenue à partie de l'image 103 et des informations formatées 15.

Sur la figure 12 on a représenté un organigramme mettant en oeuvre une scène de référence 9, une projection mathématique 8 donnant une classe d'image de synthèse 7 de la scène de référence 9, une projection réelle 72 donnant une image de référence 11 de la scène de référence 9 pour les caractéristiques utilisées 74. Cet organigramme met également en oeuvre un modèle de transformation paramétrable 12 donnant une image transformée 13 de l'image de référence 11. L'image transformée 13 présente un écart 14 avec la classe d'image de synthèse 7.

### Définitions et description détaillée

D'autres caractéristiques et avantages de l'invention apparaîtront à la lecture :
- des définitions, ci-après explicitées, des termes techniques employés illustrées en se référant aux exemples indicatifs et non limitatifs des figures 1 à 12,
- de la description des figures 1 à 12.

### Scène

On appelle scène 3 un lieu dans l'espace à trois dimensions, qui comprend des objets 107 éclairés par des sources lumineuses.

### Appareil de capture d'image, Image, Capture d'image

On va maintenant décrire en se référant aux figures 3 et 7, ce que l'on entend par appareil de capture d'image 1 et image 103. On appelle appareil de capture d'image 1, un appareil constitué d'une optique 100, d'un ou de plusieurs capteurs 101, d'une électronique 102, d'une zone mémoire 16. Ledit appareil de capture d'image 1 permet à partir d'une scène 3 d'obtenir des images numériques fixes 103 ou animées enregistrées dans la zone mémoire 16 ou transmises à un dispositif externe. Des images animées sont constituées d'une succession dans le temps, d'images fixes 103. Ledit appareil de capture d'image 1 peut prendre la forme notamment d'un appareil photo, d'un caméscope, d'une caméra reliée ou intégrée à un PC, d'une caméra reliée ou intégrée à un assistant personnel, d'une caméra reliée ou intégrée à un téléphone, d'un appareil de visioconférence ou d'une caméra ou appareil de mesure sensible à d'autres longueurs d'onde que celles de la lumière visible comme par exemple une caméra thermique.

On appelle capture d'image le procédé consistant en le calcul de l'image 103 par l'appareil de capture d'image 1.

Dans le cas où un appareil comporte plusieurs sous-ensembles interchangeables, en particulier une optique 100, on appelle appareil de capture d'image 1, une configuration particulière de l'appareil.

### Moyen de restitution d'image, Image restituée, Restitution d'image

On va maintenant décrire en se référant à la figure 2 ce que l'on entend par moyen de restitution d'image 19. Un tel moyen de restitution d'image 19 peut prendre la forme notamment d'un écran de visualisation, d'un téléviseur, d'un écran plat, d'un projecteur, de lunettes de réalité virtuelle, d'une imprimant.

Un tel moyen de restitution d'image 19 comprend :
- une électronique,
- une ou plusieurs sources de lumière, d'électrons ou d'encre,
- un ou plusieurs modulateurs : dispositifs de modulation de lumière, d'électrons ou d'encre,
- un dispositif de focalisation, se présentant notamment sous la forme d'une optique dans le cas d'un projecteur lumineux, ou sous la forme de bobines de focalisation de faisceau électronique dans le cas d'un écran à tube cathodique, ou sous la forme de filtres dans le cas d'un écran plat,
- d'un support de restitution 190 se présentant notamment sous la forme d'un écran dans le cas d'un écran à tube cathodique, d'un écran plat ou d'un projecteur, sous la forme d'un support d'impression sur lequel l'impression est effectuée dans le cas d'une imprimante, ou sous la forme d'une surface virtuelle dans l'espace dans le cas d'un projecteur à image virtuelle.

Ledit moyen de restitution d'image 19 permet à partir d'une image 103 d'obtenir une image restituée 191 sur le support de restitution 190.

Des images animées sont constituées d'une succession dans le temps, d'images fixes.

On appelle restitution d'image le procédé consistant en l'affichage ou l'impression de l'image par le moyen de restitution d'image 19.

Dans le cas où un moyen de restitution 19 comporte plusieurs sous-ensembles interchangeables ou pouvant se déplacer relativement l'un par rapport à l'autre, en particulier le support de restitution 190, on appelle moyen de restitution d'image 19 une configuration particulière.

### Surface du capteur, Centre optique, Distance focale

On va maintenant décrire en se référant à la figure 1 ce que l'on appelle surface du capteur 110.

On appelle surface du capteur 110, la forme dans l'espace dessinée par la surface sensible du capteur 101 de l'appareil de capture d'image 1 au moment de la capture d'image. Cette surface est généralement plane.

On appelle centre optique 111 un point dans l'espace associé à l'image 103 au moment de la capture d'image. On appelle distance focale la distance entre ce point 111 et le plan 110, dans le cas où la surface du capteur 110 est plane.

### Pixel, Valeur de pixel, Temps de pose.

On va maintenant décrire, en se référant à la figure 3, ce que l'on entend par pixel 104 et valeur de pixel.

On appelle pixel 104, une zone élémentaire de la surface du capteur 110 obtenue en créant un pavage généralement régulier, de ladite surface du capteur 110. On appelle valeur de pixel, un nombre associé à ce pixel 104.

Une capture d'image consiste à déterminer la valeur de chaque pixel 104. L'ensemble de ces valeurs constitue l'image 103.

Lors d'une capture d'image, la valeur de pixel est obtenue par l'intégration sur la surface du pixel 104, pendant une période de temps appelée temps de pose, d'une partie du flux lumineux provenant de la scène 3 à travers l'optique 100 et par conversion du résultat de cette intégration en valeur numérique. L'intégration du flux lumineux et/ou la conversion du résultat de cette intégration en valeur numérique sont effectuées au moyen de l'électronique 102.

Cette définition de la notion de valeur de pixel s'applique au cas des images 103 en noir et blanc ou en couleur, qu'elles soient fixes ou animées.

Cependant, selon les cas, la partie du flux lumineux concernée est obtenue de diverses façons :
a) Dans le cas d'une image 103 en couleurs, la surface du capteur 110 comporte généralement plusieurs types de pixels 104, respectivement associés à des flux lumineux de longueurs d'onde différentes, tels que par exemple des pixels rouges, verts et bleus.
b) Dans le cas d'une image 103 en couleurs, il peut également y avoir plusieurs capteurs 101 juxtaposés qui reçoivent chacun une partie du flux lumineux.
c) Dans le cas d'une image 103 en couleurs, les couleurs utilisées peuvent être différentes de rouge, vert et bleu, comme par exemple pour la télévision NTSC américaine, et peuvent être en nombre supérieur à trois.
d) Enfin, dans le cas d'une caméra de télévision à balayage dit entrelacé, les images animées produites sont constituées d'une alternance d'images 103 comportant les lignes paires, et d'images 103 comportant les lignes impaires.

### Configuration utilisée, Réglages utilisés, Caractéristiques utilisées.

On appelle configuration utilisée la liste des sous-ensembles amovibles de l'appareil de capture d'image 1, par exemple l'optique 100 effectivement montée sur l'appareil de capture d'image 1 si elle est interchangeable. La configuration utilisée est caractérisée notamment par :
- le type de l'optique 100,
- le numéro de série de l'optique 100 ou toute autre désignation.

On appelle réglages utilisés :
- la configuration utilisée telle que définie ci-dessus, ainsi que
- la valeur des réglages manuels ou automatiques disponibles dans la configuration utilisée et ayant un impact sur le contenu de l'image 103. Ces réglages peuvent être effectués par l'utilisateur, notamment à l'aide de boutons, ou calculés par l'appareil de capture d'image 1. Ces réglages peuvent être stockés dans l'appareil, notamment sur un support
amovible, ou sur tout dispositif connecté à l'appareil. Ces réglages peuvent inclure notamment les réglages de focalisation, de diaphragme, et de focale de l'optique 100, les réglages de temps de pose, les réglages de balance des blancs, les réglages de traitement d'image intégrés comme le zoom numérique, la compression, le contraste,

On appelle caractéristiques utilisées 74 ou jeu de caractéristiques utilisées 74 :
a) Des paramètres liés aux caractéristiques techniques intrinsèques de l'appareil de capture d'image 1, déterminées au moment de la conception de l'appareil de capture d'image 1. Par exemple, ces paramètres peuvent comprendre la formule de l'optique 100 de la configuration utilisée impactant les défauts géométriques et le piqué des images capturées ; la formule de l'optique 100 de la configuration utilisée inclut notamment la forme, la disposition et le matériau des lentilles de l'optique 100. Ces paramètres peuvent en outre comprendre :
   - la géométrie du capteur 101, à savoir la surface du capteur 110 ainsi que la forme et la disposition relative des pixels 104 sur cette surface,
   - le bruit généré par l'électronique 102,
   - la loi de conversion flux lumineux en valeur de pixel.
b) Des paramètres liés aux caractéristiques techniques intrinsèques de l'appareil de capture d'image 1, déterminées au moment de la fabrication de l'appareil de capture d'image 1, et notamment :
   - le positionnement exact des lentilles dans l'optique 100 de la configuration utilisée,
   - le positionnement exact de l'optique 100 par rapport au capteur 101.
c) Des paramètres liés aux caractéristiques techniques de l'appareil de capture d'image 1, déterminées au moment de la capture de l'image 103 et notamment :
   - la position et l'orientation de la surface du capteur 110 par rapport à la scène 3,
   - les réglages utilisés,
   - les facteurs extérieurs, tels que la température, s'ils ont une influence.
d) Les préférences de l'utilisateur, notamment la température de couleur à utiliser pour la restitution d'images. Ces préférences sont par exemple sélectionnées par l'utilisateur à l'aide de boutons.

### Point d'observation, direction d'observation

On va maintenant décrire en se référant à la figure 1 ce que l'on entend par point d'observation 105 et direction d'observation 106.

On appelle surface mathématique 10 une surface géométriquement associée à la surface du capteur 110. Par exemple, si la surface du capteur est plane, la surface mathématique 10 pourra être confondue avec celle du capteur.

On appelle direction d'observation 106 une droite passant par au moins un point de la scène 3 et par le centre optique 111. On appelle point d'observation 105 l'intersection de la direction d'observation 106 et de la surface 10.

### Couleur observée, Intensité observée

On va maintenant décrire en se référant à la figure 1 ce que l'on entend par couleur observée et intensité observée. On appelle couleur observée la couleur de la lumière émise, transmise ou réfléchie par ladite scène 3 dans ladite direction d'observation 106 à un instant donné, et observée depuis ledit point d'observation 105. On appelle intensité observée l'intensité de la lumière émise par ladite scène 3 dans ladite direction d'observation 106 au même instant, et observée depuis ledit point d'observation 105.

La couleur peut être notamment caractérisée par une intensité lumineuse fonction d'une longueur d'onde, ou encore par deux valeurs telles que mesurées par un colorimètre. L'intensité peut être caractérisée par une valeur telle que mesurée avec un photomètre.

Ladite couleur observée et ladite intensité observée dépendent notamment de la position relative des objets 107 dans la scène 3 et des sources d'éclairage présentes ainsi que des caractéristiques de transparence et de réflexion des objets 107 au moment de l'observation.

### Projection mathématique, Image mathématique, Point mathématique, Couleur mathématique d'un point, Intensité mathématique d'un point, Forme mathématique d'un point, Position mathématique d'un point.

On va ci-après décrire en se référant notamment aux figures 1, 5, 9a, 9b, 9c et 9d les notions de projection mathématique 8, image mathématique 70, point mathématique, couleur mathématique d'un point, intensité mathématique d'un point, forme mathématique 41 d'un point, position mathématique 40 d'un point.

On va maintenant décrire en se référant à la figure 5 comment on réalise une image mathématique 70 par projection mathématique déterminée 8 d'au moins une scène 3 sur la surface mathématique 10.

Préalablement, on va décrire ce que l'on entend par projection mathématique déterminée 8.

Une projection mathématique déterminée 8 associe :
- à une scène 3 au moment de la capture d'une image 103,
- et aux caractéristiques utilisées 74,
   une image mathématique 70.

Une projection mathématique déterminée 8 est une transformation qui permet de déterminer les caractéristiques de chaque point de l'image mathématique 70 à partir de la scène 3 au moment de la capture d'image et des caractéristiques utilisées 74.

De manière préférentielle, la projection mathématique 8 est définie de la façon qui sera ci-après décrite.

On appelle position mathématique 40 du point la position du point d'observation 105 sur la surface mathématique 10.

On appelle forme mathématique 41 du point la forme géométrique, ponctuelle, du point d'observation 105.

On appelle couleur mathématique du point la couleur observée.

On appelle intensité mathématique du point l'intensité observée.

On appelle point mathématique l'association de la position mathématique 40, de la forme mathématique 41, de la couleur mathématique et de l'intensité mathématique pour le point d'observation 105 considéré. L'image mathématique 70 est constituée de l'ensemble desdits point mathématiques.

La projection mathématique 8 de la scène 3 est l'image mathématique 70.

### Projection réelle, Point réel, couleur réelle d'un point, intensité réelle d'un point, forme réelle d'un point, position réelle d'un point

On va ci-après décrire en se référant notamment aux figures 3, 5, 9a, 9b, 9c et 9d les notions de projection réelle 72, point réel, couleur réelle d'un point, intensité réelle d'un point, forme réelle 51 d'un point, position réelle 50 d'un point.

Lors d'une capture d'image, l'appareil de capture d'image 1 associé aux caractéristiques utilisées 74 produit une image 103 de la scène 3. La lumière provenant de la scène 3 selon une direction d'observation 106, traverse l'optique 100 et arrive sur la surface du capteur 110.

On obtient alors pour ladite direction d'observation ce que l'on appelle un point réel qui présente des différences par rapport au point mathématique.

En se référant aux figures 9a à 9d, on va maintenant décrire les différences entre le point réel et le point mathématique.

La forme réelle 51 associée à ladite direction d'observation 106 n'est pas un point sur la surface du capteur, mais a une forme de nuage dans l'espace à trois dimensions, qui a une intersection avec un ou plusieurs pixels 104. Ces différences ont en particulier pour origine le coma, l'aberration sphérique, l'astigmatisme, le regroupement en pixels 104, l'aberration chromatique, la profondeur de champ, la diffraction, les réflexions parasites , la courbure de champ de l'appareil de capture d'image 1. Elles donnent une impression de flou, de manque de piqué de l'image 103.

En outre, la position réelle 50 associée à ladite direction d'observation 106 présente une différence par rapport à la position mathématique 40 d'un point. Cette différence a en particulier pour origine la distorsion géométrique, qui donne une impression de déformation : par exemple, les murs verticaux paraissent courbes. Elle tient aussi au fait que le nombre de pixels 104 est limité et que par conséquent la position réelle 50 ne peut prendre qu'un nombre fini de valeurs.

En outre, l'intensité réelle associée à ladite direction d'observation 106 présente des différences par rapport à l'intensité mathématique d'un point. Ces différences ont en particulier pour origine le gamma et le vignettage : par exemple les bords de l'image 103 paraissent plus sombres. En outre du bruit peut s'ajouter au signal.

Enfin, la couleur réelle associée à ladite direction d'observation 106 présente des différences par rapport à la couleur mathématique d'un point. Ces différences ont en particulier pour origine le gamma et la dominante colorée. En outre du bruit peut s'ajouter au signal.

On appelle point réel l'association de la position réelle 50, de la forme réelle 51, de la couleur réelle et de l'intensité réelle pour la direction d'observation 106 considérée.

La projection réelle 72 de la scène 3 est constituée par l'ensemble des points réels.

### Modèle de transformation paramétrable, Paramètres, Image corrigée

On appelle modèle de transformation paramétrable 12 (ou de manière condensée, transformation paramétrable 12), une transformation mathématique permettant d'obtenir à partir d'une image 103, et de la valeur de paramètres une image corrigée 71. Lesdits paramètres pouvant notamment être calculés à partir des caractéristiques utilisées 74 comme il est indiqué ci-après.

Ladite transformation permet en particulier de déterminer pour chaque point réel de l'image 103, la position corrigée dudit point réel, la couleur corrigée dudit point réel, l'intensité corrigée dudit point réel, la forme corrigée dudit point réel, à partir de la valeur des paramètres, de la position réelle dudit point réel et des valeurs des pixels de l'image 103. La position corrigée peut être par exemple calculée à l'aide de polynômes de degré fixé en fonction de la position réelle, les coefficients des polynômes dépendant de la valeur des paramètres. La couleur corrigée et l'intensité corrigée peuvent être par exemple des sommes pondérées des valeurs des pixels, les coefficients dépendant de la valeur des paramètres et de la position réelle, ou encore des fonctions non linéaires des valeurs des pixels de l'image 103.

Les paramètres peuvent inclure notamment : la focale de l'optique 100 de la configuration utilisée ou une valeur liée telle que la position d'un groupe de lentilles, la focalisation de l'optique 100 de la configuration utilisée ou une valeur liée telle que la position d'un groupe de lentilles, l'ouverture de l'optique 100 de la configuration utilisée ou une valeur liée telle que la position du diaphragme.

### Différence entre l'image mathématique et l'image corrigée

En se référant à la figure 5, on appelle différence 73 entre l'image mathématique 70 et l'image corrigée 71 pour une scène 3 donnée et des caractéristiques utilisées 74 données, une ou plusieurs valeurs déterminées à partir des nombres caractérisant la position, la couleur, l'intensité, la forme de tout ou partie des points corrigés et de tout ou partie des points mathématiques.

Par exemple, la différence 73 entre l'image mathématique 70 et l'image corrigée 71 pour une scène 3 donnée et des caractéristiques utilisées 74 données peut être déterminée de la façon suivante :
- On choisit des points caractéristiques qui peuvent être par exemple les points d'une grille orthogonale 80 de points disposés régulièrement comme présenté sur la figure 10.
- On calcule la différence 73 par exemple en effectuant la somme pour chaque point caractéristique des valeurs absolues des différences entre chaque nombre caractérisant la position, la couleur, l'intensité, la forme respectivement pour le point corrigé et pour le point mathématique. La fonction somme des valeurs absolues des différences peut être remplacée par une autre fonction comme la moyenne, la somme des carrés ou toute autre fonction permettant de combiner les nombres.

### Scène de référence

On appelle scène de référence 9 une scène 3 dont certaines caractéristiques sont connues. A titre d'exemple, la figure 4a présente une scène de référence 9 constituée d'une feuille de papier comportant des cercles remplis de noir et disposés régulièrement. La figure 4b présente une autre feuille de papier comportant les mêmes cercles auxquels s'ajoutent des traits et des surfaces colorées. Les cercles servent à mesurer la position réelle 50 d'un point, les traits la forme réelle 51 d'un point, les surfaces colorées la couleur réelle d'un point et l'intensité réelle d'un point. Cette scène de référence 9 peut être constituée d'un autre matériau que le papier.

### Image de référence

En se référant à la figure 12, on va maintenant définir la notion d'image de référence 11. On appelle image de référence 11, une image de la scène de référence 9 obtenue avec l'appareil de capture d'image 1.

### Image de synthèse, Classe d'images de synthèse

En se référant à la figure 12, on va maintenant définir la notion d'image de synthèse et de classe d'images de synthèse 7. On appelle image de synthèse, une image mathématique 70 obtenue par projection mathématique 8 d'une scène de référence 9. On appelle classe d'images de synthèse 7, un ensemble d'images mathématiques 70 obtenues par projection mathématique 8 d'une ou plusieurs scènes de référence 9, ce pour un ou plusieurs jeux de caractéristiques utilisées 74. Dans le cas où il n'y a qu'une scène de référence 9 et qu'un jeu de caractéristiques utilisées 74, la classe d'images de synthèse 7 ne comprend qu'une image de synthèse.

### Image transformée

En se référant à la figure 12, on va maintenant définir la notion d'image transformée 13. On appelle image transformée 13, l'image corrigée obtenue par application d'un modèle de transformation paramétrable 12 à une image de référence 11.

### Image transformée proche d'une classe d'images de synthèse, Ecart.

On va maintenant décrire, en se référant à la figure 12, la notion d'image transformée 13 proche d'une classe d'images de synthèse 7 et la notion d'écart 14.

On définit la différence entre une image transformée 13 et une classe d'images de synthèse 7 comme la plus faible différence entre ladite image transformée 13 et l'une quelconque des images de synthèse de ladite classe d'images de synthèse.

Ensuite, on va décrire comment on choisit parmi les modèles de transformation paramétrables 12 celui permettant de transformer chaque image de référence 11 en une image transformée 13 proche de la classe d'images de synthèse 7 de la scène de référence 9 correspondant à ladite image de référence 11, et ce dans différents cas de scènes de référence 9 et caractéristiques utilisées 74.
- Dans le cas d'une scène de référence 9 donnée associée à un jeu de caractéristiques utilisées 74 données, on choisit la transformation paramétrable 12 (et ses paramètres) qui permet de transformer l'image de référence 11 en l'image transformée 13 qui présente la plus faible différence avec la classe d'images de synthèse 7. La classe d'image de synthèse 7 et l'image transformée 13 sont alors dites proches. On appelle écart 14 ladite différence.
- Dans le cas d'un groupe de scènes de référence données associées à des jeux de caractéristiques utilisées 74 donnés, on choisit la transformation paramétrable 12 (et ses paramètres) en fonction des différences entre l'image transformée 13 de chaque scène de référence 9 et la classe d'images de synthèse 7 de chaque scène de référence 9 considérée. On choisit la transformation paramétrable 12 (et ses paramètres) qui permet de transformer les images de référence 11 en des images transformées 13 telle que la somme desdites différences soit la plus faible. La fonction somme peut être remplacée par une autre fonction comme le produit. La classe d'image de synthèse 7 et les images transformées 13 sont alors dites proches. On appelle écart 14 une valeur obtenue à partir desdites différences, par exemple en en calculant la moyenne.
- Dans le cas où certaines caractéristiques utilisées 74 sont inconnues, il est possible de les déterminer à partir de la capture de plusieurs images de référence 11 d'au moins une scène de référence 9. Dans ce cas, on détermine simultanément les caractéristiques inconnues et la transformation paramétrable 12 (et ses paramètres) qui permet de transformer les images de référence 11 en des images transformées 13 telles que la somme desdites différences soit la plus faible, notamment par calcul itératif ou par résolution d'équations concernant la somme desdites différences et/ou leur produit et/ou toute autre combinaison appropriée desdites différences. La classe d'image de synthèse 7 et les images transformées 13 sont alors dites proches. Les caractéristiques inconnues peuvent par exemple être les positions et les orientation relatives de la surface du capteur 110 et de chaque scène de référence 9 considérée. On appelle écart 14 une valeur obtenue à partir desdites différences, par exemple en en calculant la moyenne.

### Meilleure transformation

On appelle meilleure transformation la transformation qui, parmi les modèles de transformation paramétrables 12, permet de transformer chaque image de référence 11 en une image transformée 13 proche de la classe d'images de synthèse 7 de la scène de référence 9 correspondant à ladite image de référence 11.

### Calibrage

On appelle calibrage un procédé qui permet d'obtenir des données relatives aux caractéristiques intrinsèques de l'appareil de capture d'image 1, ce pour une ou plusieurs configurations utilisées constituées chacune d'une optique 100 associée à un appareil de capture d'image 1.

Cas 1 : dans le cas où il n'y a qu'une configuration, ledit procédé comprend les étapes suivantes :
- l'étape de monter ladite optique 100 sur ledit appareil de capture d'image 1,
- l'étape de choisir une ou plusieurs scènes de référence 9,
- l'étape de choisir plusieurs caractéristiques utilisées 74,
- l'étape de capturer des image desdites scènes de référence 9 pour lesdites caractéristiques utilisées,
- l'étape de calculer la meilleure transformation pour chaque groupe de scènes de référence 9 correspondant aux mêmes caractéristiques utilisées 74.

Cas 2 : dans le cas où on considère toutes les configurations correspondant à un appareil de capture d'image 1 donné et à toutes les optiques 100 d'un même type, ledit procédé comprend les étapes suivantes :
- l'étape de choisir une ou plusieurs scènes de référence 9,
- l'étape de choisir plusieurs caractéristiques utilisées 74,
- l'étape de calculer des images 103 à partir des caractéristiques utilisées 74 et notamment des formules de l'optique 100 de la configuration utilisée et des valeurs de paramètres, ce par exemple à l'aide d'un logiciel de calcul d'optique par tracé de rayons,
- l'étape de calculer la meilleure transformation pour chaque groupe de scènes de référence 9 correspondant aux mêmes caractéristiques utilisées.

Cas 3 : dans le cas où on considère toutes les configurations correspondant à une optique 100 donnée et à tous les appareils de capture d'image 1 d'un même type, ledit procédé comprend les étapes suivantes :
- l'étape de monter ladite optique 100 sur un appareil de capture d'image 1 du type considéré,
- l'étape de choisir une ou plusieurs scènes de référence 9,
- l'étape de choisir plusieurs caractéristiques utilisées 74,
- l'étape de capturer des images desdites scènes de référence 9 pour lesdites caractéristiques utilisées,
- l'étape de calculer la meilleure transformation pour chaque groupe de scènes de référence 9 correspondant aux mêmes caractéristiques utilisées.

Le calibrage peut être effectué, de manière préférentielle, par le constructeur de l'appareil de capture d'image 1, ce pour chaque appareil et configuration dans le cas 1. Cette méthode est plus précise mais plus contraignante et bien adaptée dans le cas ou l'optique 100 n'est pas interchangeable.

Le calibrage peut alternativement être effectué par le constructeur de l'appareil de capture d'image 1, ce pour chaque type et configuration d'appareil dans le cas 2. Cette méthode est moins précise mais plus simple.

Le calibrage peut alternativement être effectué par le constructeur de l'appareil de capture d'image 1, ce pour chaque optique 100 et type d'appareil dans la cas 3. Cette méthode est un compromis permettant d'utiliser une optique 100 sur tous les appareils de capture d'image 1 d'un type sans refaire le calibrage pour chaque combinaison d'appareil de capture d'image 1 et d'optique 100.

Le calibrage peut alternativement être effectué par le revendeur ou installateur de l'appareil, ce pour chaque appareil de capture d'image 1 et configuration dans le cas 1.

Le calibrage peut alternativement être effectué par le revendeur ou installateur de l'appareil, ce pour chaque optique 100 et type d'appareil dans le cas 3.

Le calibrage peut alternativement être effectué par l'utilisateur de l'appareil, ce pour chaque appareil et configuration dans le cas 1.

Le calibrage peut alternativement être effectué par l'utilisateur de l'appareil, ce pour chaque optique 100 et type d'appareil dans le cas 3.

### Conception d'optique numérique

On appelle conception d'optique numérique, un procédé pour diminuer le coût de l'optique 100, consistant à :
- concevoir ou choisir dans un catalogue une optique 100 ayant des défauts, notamment de positionnement des points réels,
- diminuer le nombre de lentilles, et/ou
- simplifier la forme des lentilles, et/ou
- utiliser des matériaux, traitements ou procédés de fabrication moins coûteux.

Ledit procédé comprend les étapes suivantes :
- l'étape de choisir une différence (au sens ci-dessus défini) acceptable,
- l'étape de choisir une ou plusieurs scènes de référence 9,
- l'étape de choisir plusieurs caractéristiques utilisées 74.

Ledit procédé comprend en outre l'itération des étapes suivantes :
- l'étape de choisir une formule optique comprenant notamment la forme, le matériau et la disposition des lentilles,
- l'étape de calculer des images 103 à partir des caractéristiques utilisées 74 et notamment des formules de l'optique 100 de la configuration utilisée, en mettant en oeuvre,
par exemple, un logiciel de calcul d'optique par tracé de rayons, ou en effectuant des mesures sur un prototype,
- l'étape de calculer la meilleure transformation pour chaque groupe de scènes de référence 9 correspondant aux mêmes caractéristiques utilisées 74,
- l'étape de vérifier si la différence est acceptable, jusqu'à ce que la différence soit acceptable.

### Informations formatées

On appelle informations formatées 15 associées à l'image 103 ou informations formatées 15, tout ou partie des données suivantes :
- des données relatives aux caractéristiques techniques intrinsèques de l'appareil de capture d'image 1, notamment les caractéristiques de distorsion, et/ou
- des données relatives aux caractéristiques techniques de l'appareil de capture d'image 1 au moment de la capture d'image, notamment le temps de pose, et/ou
- des données relatives aux préférences dudit utilisateur, notamment la température de couleurs, et/ou
- des données relatives aux écarts 14.

### Base de données de caractéristiques

On appelle base de données de caractéristiques 22 ou base de données 22, une base de données comprenant, pour un ou plusieurs appareils de capture d'image 1 et pour une ou plusieurs images 103, des informations formatées 15.

Ladite base de donnée de caractéristiques 22 peut être stockée de manière centralisée ou répartie, et peut être notamment :
- intégrée dans l'appareil de capture d'image 1,
- intégrée dans l'optique 100,
- intégrée sur un dispositif de stockage amovible,
- intégrée dans un PC ou autre ordinateur relié aux autres éléments pendant la capture d'image,
- intégrée dans un PC ou autre ordinateur relié aux autres éléments après la capture d'image,
- intégrée dans un PC ou autre ordinateur capable de lire un support de stockage commun avec l'appareil de capture d'image 1,
- intégrée dans un serveur distant relié à un PC ou autre ordinateur lui même relié aux autre éléments de la capture d'image.

### Champs

On va maintenant définir la notion de champs 90 en se référant à la figure 8. Les informations formatées 15 associées à l'image 103 peuvent être enregistrées sous plusieurs formes et structurées en une ou plusieurs tables mais elles correspondent logiquement à tout ou partie des champs 90, comprenant :
(a) la distance focale,
(b) la profondeur de champ,
(c) les défauts géométriques.

Lesdits défauts géométriques comprennent les défauts de géométrie de l'image 103 caractérisés par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la position corrigée d'un point de l'image 103.

Lesdits défauts géométriques comprennent en outre le vignetage caractérisé par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer l'intensité corrigée d'un point de l'image 103.

Lesdits défauts géométriques comprennent en outre la dominante colorée caractérisée par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la couleur corrigée d'un point de l'image 103.

Lesdits champs 90 comprennent en outre (d) le piqué de l'image 103.

Ledit piqué comprend le flou de résolution de l'image 103 caractérisé par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la forme corrigée d'un point de l'image 103. Le flou couvre en particulier le coma, l'aberration sphérique, l'astigmatisme, le regroupement en pixels 104, l'aberration chromatique, la profondeur de champ, la diffraction, les réflexions parasites, la courbure de champ.

Ledit piqué comprend en outre le flou de profondeur de champ, notamment les aberrations sphériques, le coma, l'astigmatisme. Ledit flou dépend de la distance des points de la scène 3 par rapport à l'appareil de capture d'image 1 et est caractérisé par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la forme corrigée d'un point de l'image 103.

Lesdits champs 90 comprennent en outre (e) des paramètres de la méthode de quantification. Lesdits paramètres dépendent de la géométrie et la physique du capteur 101, de l'architecture de l'électronique 102 et d'éventuels logiciels de traitement.

Lesdits paramètres comprennent une fonction représentant les variations de l'intensité d'un pixel 104 en fonction de la longueur d'onde et du flux lumineux provenant de ladite scène 3. Ladite fonction comprend notamment les information de gamma.

Lesdits paramètres comprennent en outre :
- la géométrie dudit capteur 101, notamment la forme, la position relative et le nombre des éléments sensibles dudit capteur 101,
- une fonction représentant la distribution spatiale et temporelle du bruit de l'appareil de capture d'image 1,
- une valeur représentant le temps de pose de la capture d'image.

Lesdits champs 90 comprennent en outre (f) des paramètres des traitements numériques effectués par l'appareil de capture d'image 1, notamment le zoom numérique, la compression. Ces paramètres dépendent du logiciel de traitement de l'appareil de capture d'image 1 et des réglages de l'utilisateur.

Lesdits champs 90 comprennent en outre :
(g) des paramètres représentant les préférences de l'utilisateur, notamment en ce qui concerne le degré de flou, la résolution de l'image 103.
(h) les écarts 14.

### Calcul des informations formatées

Les informations formatées 15 peuvent être calculées et enregistrées dans la base de données 22 en plusieurs étapes.
a) Une étape à l'issue de la conception de l'appareil de capture d'image 1.

Cette étape permet d'obtenir des caractéristiques techniques intrinsèques de l'appareil de capture d'image 1, et notamment :
- la distribution spatiale et temporelle du bruit généré par l'électronique 102,
- la loi de conversion flux lumineux en valeur de pixel,
- la géométrie du capteur 101.
   b) Une étape à l'issue du calibrage ou conception d'optique numérique.

Cette étape permet d'obtenir d'autres caractéristiques techniques intrinsèques de l'appareil de capture d'image 1, et notamment, pour un certain nombre de valeurs de caractéristiques utilisées, la meilleure transformation associée et l'écart 14 associé.
c) Une étape de choix des préférences de l'utilisateur à l'aide de boutons, menus ou support amovible ou connexion à un autre dispositif.
d) Une étape de capture d'image.

Cette étape (d) permet d'obtenir des caractéristiques techniques de l'appareil de capture d'image 1 au moment de la capture d'image, et notamment le temps de pose, déterminé par les réglages manuels ou automatiques effectués.

L'étape (d) permet en outre d'obtenir la distance focale. La distance focale est calculée à partir :
- d'une mesure de la position du groupe de lentilles de focale variable de l'optique 100 de la configuration utilisée, ou
- d'une consigne donnée au moteur de positionnement, ou
- d'une donnée constructeur si la focale est fixe.

Ladite distance focale peut enfin être déterminée par l'analyse du contenu de l'image 103.

L'étape (d) permet en outre d'obtenir la profondeur de champ. La profondeur de champ est calculée à partir :
- d'une mesure de la position du groupe de lentilles de focalisation de l'optique 100 de la configuration utilisée, ou
- d'une consigne donnée au moteur de positionnement, ou
- d'une donnée constructeur si la profondeur de champ est fixe.

L'étape (d) permet en outre d'obtenir les défauts de géométrie et de piqué. Les défauts de géométrie et de piqué correspondent à une transformation calculée à l'aide d'une combinaison des transformations de la base de données de caractéristiques 22 obtenues à l'issue de l'étape (b). Cette combinaison est choisie pour représenter les valeurs de paramètres correspondant aux caractéristiques utilisées 74, notamment la distance focale.

L'étape (d) permet en outre d'obtenir les paramètres de traitement numériques effectués par l'appareil de capture d'image 1. Ces paramètres sont déterminés par les réglages manuels ou automatiques effectués.

Le calcul des informations formatées 15 selon les étapes (a) à (d) peut être réalisé par :
- un dispositif ou logiciel intégré à l'appareil de capture d'image 1, et/ou
- un logiciel pilote dans un PC ou autre ordinateur, et/ou
- un logiciel dans un PC ou autre ordinateur, et/ou
- une combinaison des trois.

Les transformations ci-dessus mentionnées à l'étape (b) et à l'étape (d) peuvent être stockées sous la forme :
- d'une formule mathématique générale,
- d'une formule mathématique pour chaque point,
- d'une formule mathématique pour certains points caractéristiques.

Les formules mathématiques peuvent être décrites par :
- une liste de coefficients,
- une liste de coefficients et de coordonnées.

Ces différentes méthodes permettent de faire un compromis entre la taille de la mémoire disponible pour stocker les formules et la puissance de calcul disponible pour calculer les images corrigées 71.

En outre, afin de retrouver les données, des identifiants associés aux données sont enregistrés dans la base de données 22. Ces identifiants comprennent notamment :
- un identifiant du type et de la référence de l'appareil de capture d'image 1,
- un identifiant du type et de la référence de l'optique 100 si elle est amovible,
- un identifiant du type et de la référence de tout autre élément amovible ayant un lien avec les informations stockées,
- un identifiant de l'image 103,
- un identifiant de l'information formatée 15.

### Image complétée

Comme décrit par la figure 11, on appelle image complétée 120, l'image 103 associée aux informations formatées 15. Cette image complétée 120 peut prendre la forme, de manière préférentielle, d'un fichier. L'image complétée 120 peut également être répartie dans plusieurs fichiers.

L'image complétée 120 peut être calculée par l'appareil de capture d'image 1. Elle peut être également calculée par un dispositif de calcul externe, par exemple un ordinateur.

### Logiciel de traitement d'image

On appelle logiciel de traitement d'image 4, un logiciel qui prend en entrée une ou plusieurs images complétées 120 et qui effectue des traitements sur ces images. Ces traitements peuvent comprendre, notamment :
- de calculer d'une image corrigée 71,
- d'effectuer des mesures dans le monde réel,
- de combiner plusieurs images,
- d'améliorer la fidélité des images par rapport au monde réel,
- d'améliorer la qualité subjective des images,
- de détecter des objets ou personnes 107 dans une scène 3,
- d'ajouter des objets ou personnes 107 dans une scène 3,
- de remplacer ou modifier des objets ou personnes 107 dans une scène 3,
- de retirer les ombres d'une scène 3,
- d'ajouter des ombres dans une scène 3,
- de rechercher des objets dans une base d'images. Ledit logiciel de traitement d'image peut être :
- intégré à l'appareil de capture d'image 1,
- exécuté sur des moyens de calcul 17 reliés à l'appareil de capture d'image 1 par des moyens de transmission 18.

### Optique numérique

On appelle optique numérique, la combinaison d'un appareil de capture d'image 1, d'une base de données de caractéristiques 22 et d'un moyen de calcul 17 permettant :
- la capture d'image d'une image 103,
- le calcul de l'image complétée,
- le calcul de l'image corrigée 71.

De manière préférentielle, l'utilisateur obtient directement l'image corrigée 71. S'il le souhaite, l'utilisateur peut demander la suppression de la correction automatique.

La base de données de caractéristiques 22 peut être :
- intégrée dans l'appareil de capture d'image 1,
- intégrée dans un PC ou autre ordinateur relié aux autres éléments pendant la capture d'image,
- intégrée dans un PC ou autre ordinateur relié aux autres éléments après la capture d'image,
- intégrée dans un PC ou autre ordinateur capable de lire un support de stockage commun avec l'appareil de capture d'image 1,
- intégrée dans un serveur distant relié à un PC ou autre ordinateur lui même relié aux autre éléments de la capture d'image.

Le moyen de calcul 17 peut être :
- intégré sur un composant avec le capteur 101,
- intégré sur un composant avec une partie de l'électronique 102,
- intégré dans l'appareil de capture d'image 1,
- intégré dans un PC ou autre ordinateur relié aux autres éléments pendant la capture d'image,
- intégré dans un PC ou autre ordinateur relié aux autres éléments après la capture d'image,
- intégré dans un PC ou autre ordinateur capable de lire un support de stockage commun avec l'appareil de capture d'image 1,
- intégré dans un serveur distant relié à un PC ou autre ordinateur lui même relié aux autres éléments de la capture d'image.

### Traitement de la chaîne complète

Dans les précédents paragraphes, on a essentiellement précisé les concepts et la description du procédé et du système selon l'invention pour fournir à des logiciels de traitement d'images 4 des informations formatées 15 liées aux caractéristiques des appareils de capture d'image 1.

Dans les paragraphes qui suivent, on va élargir la définition des concepts et compléter la description du procédé et du système selon l'invention pour fournir à des logiciels de traitement d'images 4 des informations formatées 15 liées aux caractéristiques des moyens de restitution d'image 19. On aura ainsi exposé le traitement d'une chaîne complète.

Le traitement de la chaîne complète permet :
- d'améliorer la qualité de l'image 103 d'un bout à l'autre de la chaîne, pour obtenir une image restituée 191 corrigeant les défauts de l'appareil de capture d'image 1 et du moyen de restitution d'image 19, et/ou
- d'utiliser des optiques de moindre qualité et de moindre coût dans un projecteur vidéo en combinaison avec un logiciel d'amélioration de la qualité des images.

### Définitions liées aux moyens de restitution d'image.

En s'appuyant sur les figures 2 et 6, on va maintenant décrire la prise en compte dans les informations formatées 15 des caractéristiques d'un moyen de restitution d'images 19 tel qu'une imprimante, un écran de visualisation ou un projecteur.

Les compléments ou modifications à apporter aux définitions dans le cas d'un moyen de restitution d'image 19 peuvent être extrapolées mutatis mutandis par un homme de métier à partir des définitions fournies dans le cas d'un appareil de capture d'image 1. Toutefois, afin d'illustrer cette méthode, on va maintenant décrire en se référant notamment à la figure 6 les principaux compléments ou modifications.

On désigne par caractéristiques de restitution utilisées 95 les caractéristiques intrinsèques des moyens de restitution d'image 19, les caractéristiques du moyen de restitution d'image 19 au moment de la restitution d'image, et les préférences de l'utilisateur au moment de la restitution des images. Notamment dans le cas d'un projecteur, les caractéristiques de restitution utilisées 95 comprennent la forme et la position de l'écran utilisé.

On désigne par modèle de transformation paramétrable de restitution 97 (ou de manière condensée, transformation paramétrable de restitution 97) une transformation mathématique similaire au modèle de transformation paramétrable 12.

On désigne par image corrigée de restitution 94 l'image obtenue par application de la transformation paramétrable de restitution 97 à l'image 103.

On désigne par projection mathématique de restitution 96 une projection mathématique qui associe à une image corrigée de restitution 94, une image mathématique de restitution 92 sur la surface mathématique de restitution géométriquement associée à la surface du support de restitution 190. Les points mathématiques de restitution de la surface mathématique de restitution ont une forme, position, couleur et intensité calculées à partir de l'image corrigée de restitution 94.

On désigne par projection réelle de restitution 90 une projection associant à une image 103 une image restituée 191. Les valeurs de pixels de l'image 103 sont converties par l'électronique des moyens de restitution 19 en un signal qui pilote le modulateur des moyens de restitution 19. On obtient des points réels de restitution sur le support de restitution 190. Lesdits points réels de restitution sont dotés d'une forme, couleur, intensité et position. Le phénomène de regroupement en pixels 104 précédemment décrit dans le cas d'un appareil de capture d'image 1 ne se produit pas dans le cas d'un moyen de restitution d'image. En revanche, un phénomène inverse se produit qui fait notamment apparaître des droites comme des marches d'escalier.

On désigne par différence de restitution 93 la différence entre l'image restituée 191 et l'image mathématique de restitution 92. Cette différence de restitution 93 est obtenue mutatis mutandis comme la différence 73.

On désigne par référence de restitution une image 103 dont les valeurs des pixels 104 sont connues.

On désigne par meilleure transformation de restitution pour une référence de restitution et des caractéristiques utilisées de restitution 95, celle qui permet de transformer l'image 103 en une image corrigée de restitution 94 telle que sa projection mathématique de restitution 92, présente la plus faible différence de restitution 93 avec l'image restituée 191.

Les procédés de calibrage de restitution et de conception d'optique numérique de restitution sont comparables aux procédés de calibrage et de conception d'optique numérique dans le cas d'un appareil de capture d'image 1. Certaines étapes comportent cependant des différences, et notamment les étapes suivantes :
- l'étape de choisir une référence de restitution ;
- l'étape d'effectuer la restitution de ladite référence de restitution ;
- l'étape de calculer la meilleure transformation de restitution.

Les informations formatées 15 liées à un appareil de capture d'image 1 et celles liées à un moyen de restitution d'image 19 peuvent être mises bout à bout pour une même image.

On a précédemment décrit la notion de champ dans le cas d'un appareil de capture d'image 1. Cette notion s'applique également mutatis mutandis dans le cas de moyens de restitution d'image 19. Toutefois, aux paramètres de la méthode de quantification on substitue les paramètres de la méthode de reconstitution du signal, à savoir : la géométrie du support de restitution 190 et sa position, une fonction représentant la distribution spatiale et temporelle du bruit du moyen de restitution d'images 19.

### Généralisation des concepts

Les traits techniques composant l'invention et figurant dans les revendications ont été définis, décrits, illustrés en se référant essentiellement à des appareils de capture d'image de type numérique, c'est-à-dire produisant des images numériques. On conçoit aisément que les mêmes traits techniques s'appliquent dans le cas d'appareils de capture d'image qui seraient la combinaison d'un appareil argentique (un appareil photographique ou cinématographique utilisant des pellicules sensibles argentiques, négatives ou inversibles) et d'un scanner produisant une image numérique à partir des pellicules sensibles développées. Certes, il y a lieu dans ce cas d'adapter au moins certaines des définitions utilisées. Ces adaptations sont à la portée de l'homme de métier. Afin de mettre en évidence le caractère évident de telles adaptations, on se bornera à mentionner que les notions de pixel et de valeur de pixel illustrées en se référant à la figure 3 doivent, dans le cas de la combinaison d'un appareil argentique et d'un scanner, s'appliquer à une zone élémentaire de la surface de la pellicule après que celle-ci ait été numérisée au moyen du scanner. De telles transpositions des définitions vont de soi et peuvent être étendues à la notion de configuration utilisée. A la liste des sous-ensembles amovibles de l'appareil de capture d'image 1 composant la configuration utilisée, on peut par exemple ajouter le type de pellicule photographique effectivement utilisée dans l'appareil argentique.

### Modification automatique de la qualité d'une image

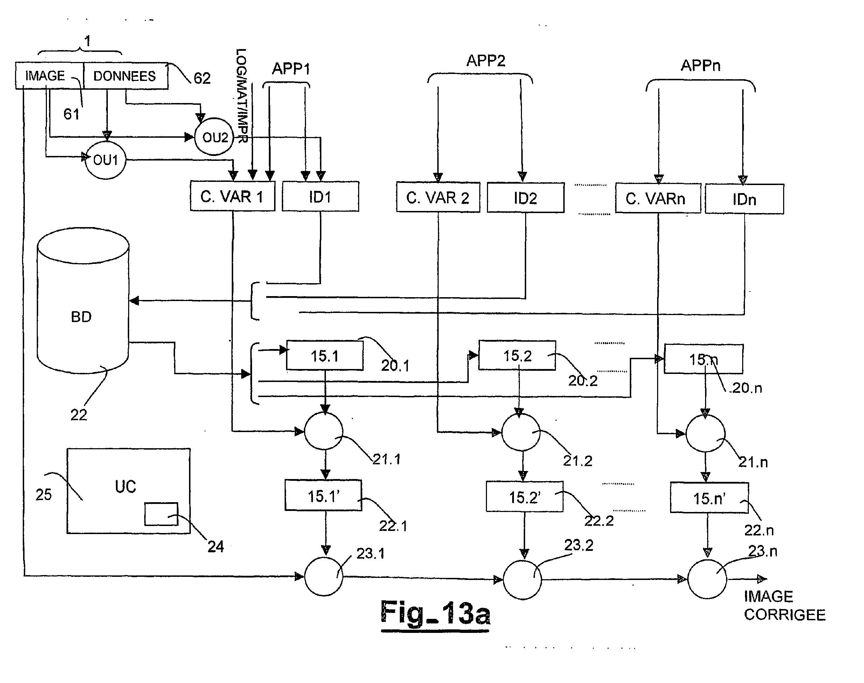

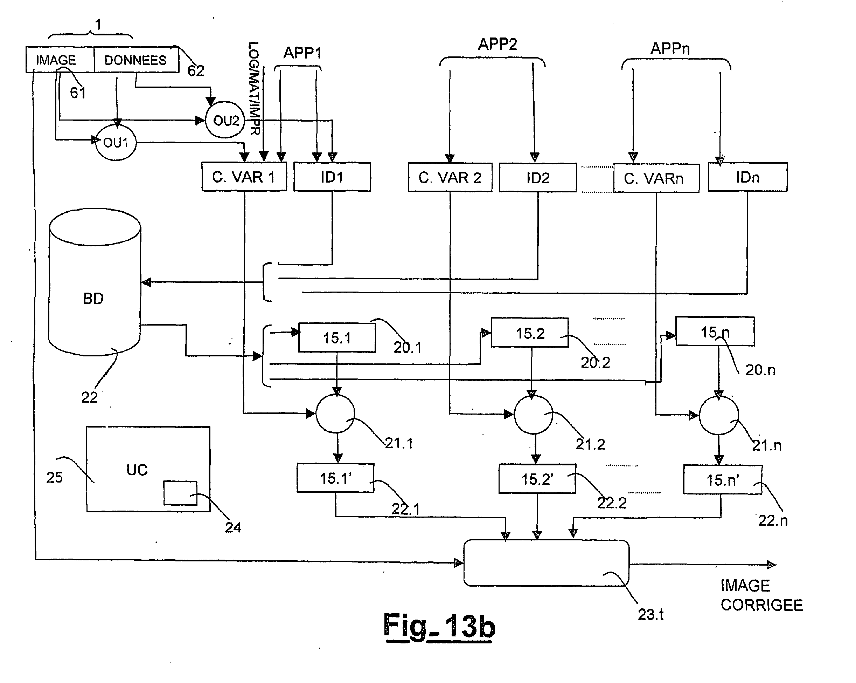

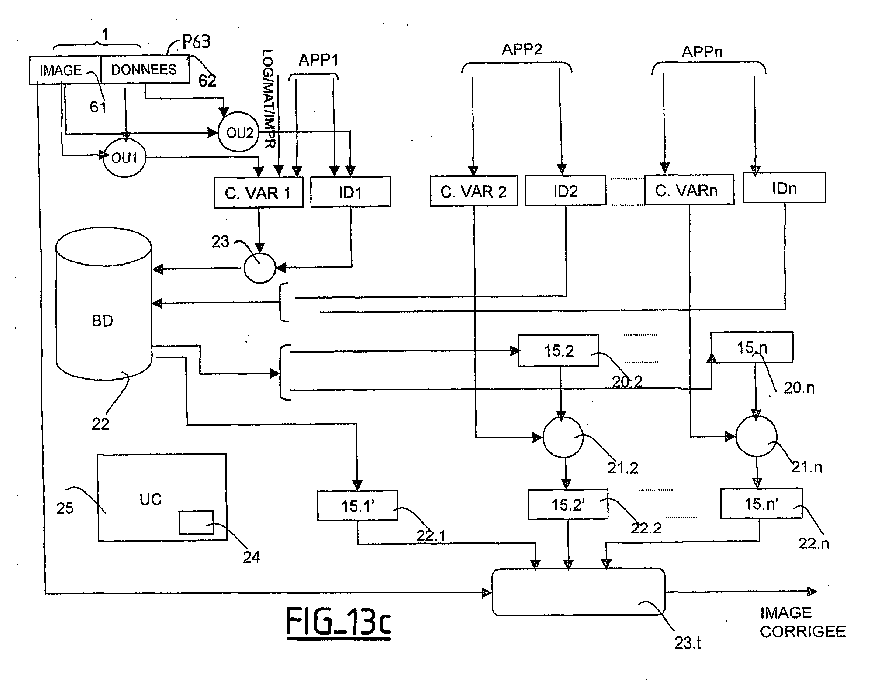

En se reportant aux figures 17, 13a, 13b et 13c, on va décrire un exemple de réalisation du procédé et système de modification automatique de la qualité d'une image P2 provenant ou destinée à une chaîne d'appareils P3, appelée également chaîne d'appareils déterminée, selon l'invention.

Dans l'exemple de réalisation, le système selon l'invention comprend des moyens de traitement informatiques P76. pour réaliser, pour l'image P2, les étapes suivantes du procédé selon l'invention:
- l'étape de répertorier des sources P50 d'informations formatées 15 relatives aux appareils de l'ensemble d'appareils P75, ces sources P50 peuvent être notamment le cas échéant le fichier image P58 contenant l'image P2, les appareils, une base de donnée 22 locale et/ou distante, des moyens de chargement P53 de l'image P2 ou de l'image modifiée, par exemple un logiciel selon le standard Twain utilisé pour un scanner ; les sources ainsi répertoriées sont appelées base de donnée 22,
- l'étape de rechercher de manière automatique parmi lesdites informations formatées 15 ainsi répertoriées, des informations formatées spécifiques P51 relatives à ladite chaîne d'appareils P3 déterminée ; une source pouvant être utilisée pour mettre à jour la base de donnée 22, par exemple via Internet,
- dans le cas où la recherche des informations formatées spécifiques P51 n'aboutit pas pour un des appareils, l'étape de calculer les informations formatées inconnues, par exemple en mesurant les défauts de l'appareil, ou en simulant l'appareil ou en calibrant l'appareil selon le procédé décrit plus haut,
- l'étape de modifier de manière automatique ladite image P2 au moyen de logiciels de traitement d'images P64 et/ou de composants de traitement d'images P65 en tenant compte desdites informations formatées spécifiques P51 ainsi obtenues.

A titre d'exemple, le procédé et système selon l'invention sera décrit en application de la restitution d'une image d'un appareil de capture d'image que ce soit un appareil photographique, un appareil de prise de vues vidéos, un appareil d'échographie, etc. Dans ces conditions, la restitution d'une image d'un tel appareil pourra faire intervenir les caractéristiques de l'appareil de prise de vue (optique notamment), le capteur ou surface photosensible (CCD, film photosensible, etc.), le scanner, le logiciel de traitement, la chaîne de transmission de l'information entre les différents appareils, l'imprimante. Comme on le verra ultérieurement, la chaîne de l'image pourra faire intervenir d'autres éléments ayant leurs caractéristiques particulières.

Chaque appareil est caractérisé par un identifiant 60 qui permet d'identifier le type d'appareil et donc d'accéder à des caractéristiques connues liées à ce type d'appareil et indirectement d'obtenir des index P52 dont l'utilisation sera décrite ultérieurement.

Certains appareils peuvent faire l'objet de réglages de fonctionnement particuliers, c'est ainsi qu'un appareil de capture peut être réglé en fonction des conditions de prise de vue ou une imprimante faire l'objet d'un agrandissement, etc. Ces fonctionnements particuliers donnent lieu à des caractéristiques variables P55 qui pourront être mises en oeuvre dans le cadre de l'invention. De plus, il peut s'agir de caractéristiques variables P55 qui peuvent avoir une influence sur les caractéristiques fixes (ou caractéristiques d'origine) de l'appareil ou de la chaîne d'appareils P3.

La figure 13a, représente un diagramme d'un exemple de réalisation du système de l'invention.

Dans la partie supérieure de ce diagramme, on a représenté des appareils ou des dispositions, qu'on appellera appareils périphériques, qui fournissent des informations, images et données au système.

Il s'agit de :
- une image 1 à traiter qui contient évidemment des informations d'image 61 mais qui peut comporter aussi des données 62 concernant des caractéristiques du support de prise de vue et des caractéristiques informant des conditions de capture d'image ou de manipulations ultérieures de l'image (la focale utilisée par exemple, ou le redimensionnement de l'image). Ces caractéristiques seront considérées dans la suite de la description comme des caractéristiques variables 66. Les
caractéristiques variables peuvent aussi être contenues dans l'image elle-même ou être calculées à partir de l'image.
- un appareil de capture d'image APP1 qui possède ses caractéristiques propres et qui peut contenir des caractéristiques variables 66. Les caractéristiques propres sont liées au type d'appareil ou à chaque appareil et peuvent être connues en connaissant l'appareil et ses caractéristiques d'origine. Notamment, elles peuvent être connues à partir de son identifiant 60 qui peut être, par exemple, un code à barres sur l'appareil ou sur un film, et auquel le système va faire correspondre ces caractéristiques propres. L'identifiant 60 peut être obtenu de diverses manières à partir de l'image, des données 62, et/ou en interrogeant le logiciel de gestion de l'appareil, ou l'appareil lui-même, ou l'utilisateur, qui sont symbolisés par LOG/MAT/IMPR sur la figure 13a. Les caractéristiques variables 66 sont généralement liées aux conditions de capture d'image et peuvent être celles mentionnées précédemment et qui peuvent être contenues dans l'image, ou dans l'appareil de capture d'image ou dans les deux à la fois :
- des périphériques APP2 à APPn comportant notamment un périphérique APP2 tel qu'une imprimante ou un scanner ayant des caractéristiques liées au type d'appareil et traduisant notamment leurs défauts, ainsi que des caractéristiques variables 66 liées au mode d'utilisation, par exemple, le rapport de grandissement pour une imprimante. Un périphérique tel que APPn peut être également un pseudo-périphérique et se présenter sous la forme d'un fichier représentant des appareils ou des fonctionnalités et contenant les caractéristiques correspondant à ces appareils ou ces fonctionnalités :
- appareil de capture d'image,
- appareil de restitution d'image,
- appareil de capture d'images différent de l'appareil APP1 en vue de simuler des photos prises par cet appareil que l'on peut désigner sous le terme de « look like » en terminologie anglo-saxonne,
- simulation d'un appareil de capture d'images différent de l'appareil APP1 pour tenir lieu de l'appareil ci-dessus et qui par analogie avec le cas précédent peut être désigné sous l'appellation « look like » virtuel,
- caractéristiques permettant de modifier la qualité d'une image en tenant compte de défauts de vision de l'oeil de l'utilisateur, ou induire des effets spéciaux,
- caractéristiques permettant de corriger ou modifier des défauts de logiciel, par exemple un flou induit par un zoom numérique,
- un logiciel effectuant un traitement sur l'image et introduisant des défauts ou présentant des caractéristiques variables 66, par exemple un recodage ou un zoom,
- caractéristiques d'installation, notamment pour un projecteur liées à l'erreur d'orthofrontalité ou de planéité de l'écran, pouvant être mesurées par exemple par une caméra,
- une combinaison de plusieurs appareils tels que décrits ci-dessus.

Ces différents dispositifs APP1 à APPn ainsi que l'image 1 constituent une chaîne d'appareils P3. Le traitement d'une image, outre ses propres défauts, fera intervenir les défauts des différents appareils qui auront tous une action sur l'image. L'ensemble de ces dispositifs sera appelé chaîne d'appareils P3. Le rôle du système est de corriger ou modifier les défauts insérés par chaque dispositif de la chaîne dans le traitement de l'image.

Parmi les caractéristiques variables 66 qu'il convient de prendre en compte, citons par exemple :
- la focale de l'optique,
- le redimensionnement appliqué à l'image (facteur de zoom numérique : grossissement d'une partie de l'image ; et/ou le sous-échantillonnage : diminution du nombre de pixels de l'image),
- la correction non linéaire de luminance, par exemple la correction de gamma,
- le rehaussement de contour, par exemple le niveau de déflouage appliqué par l'appareil,
- le bruit du capteur et de l'électronique,
- l'ouverture de l'optique,
- la distance de mise au point,
- le numéro de la vue sur un film,
- la sur ou sous exposition,
- la sensibilité du film ou du capteur,
- le type de papier utilisé dans une imprimante,
- la position du centre du capteur dans l'image,
- la rotation de l'image par rapport au capteur,
- la position d'un projecteur par rapport à l'écran,
- la balance des blancs utilisée,
- l'activation du flash et/ou sa puissance,
- le temps de pose,
- le gain du capteur,
- la compression,
- le contraste,
- un autre réglage appliqué par l'utilisateur de l'appareil, par exemple un mode de fonctionnement,
- un autre réglage automatique de l'appareil,
- une autre mesure réalisée par l'appareil.

Le système possède des interfaces de réception C.VAR1, C.VAR2, ... C.VARn destinées à recevoir les caractéristiques variables 66 expliquées précédemment. Les caractéristiques provenant de l'image peuvent être transmises par l'image elle-même ou, comme cela a été mentionné précédemment, par des données associées à l'image. On rappelle que les caractéristiques variables 66 de l'image peuvent également être transmises par l'appareil de capture.

Des interfaces ID1, ID2, ... IDn sont destinées à recevoir les identifiants 60 des différents périphériques APP1 à APPn.

La notion de périphérique peut selon le cas correspondre à un ou plusieurs appareils du même type ou non.

Les exemples suivants correspondent à plusieurs de ces cas, avec pour chaque exemple, une implémentation possible de l'identifiant 60 sous la forme d'un codage et d'un contenu :
- à un périphérique donné (par exemple, codage IA1 : nom du fabricant, type de périphérique, numéro de série du périphérique),
- à un type de périphérique donné (par exemple, codage IA2 : nom du fabricant, type de périphérique),
- à une configuration donnée (par exemple, codage IA3 : nom du fabricant, type de périphérique, type d'objectif interchangeable monté),
- à une catégorie de périphérique (par exemple codage IA4 adapté aux appareils photo jetables: nom du fabricant, type d'appareil, numéro de vue),
- à un fabricant (par exemple codage IA5 pour un fabricant),
- à plusieurs périphériques d'une chaîne (par exemple codage IA6 dans un équipement d'impression photographique, on importe des informations formatées relatives à un appareil jetable, on les combine avec celles du scanner et de l'imprimante pour les stocker dans une base locale relative à la chaîne, il faut des identifiant 60 adaptés),
- à un algorithme par exemple de zoom (par exemple codage IA7 : nom de l'algorithme, implémentation, champ disant si l'on se réfère à une modification de la qualité de l'image avant ou après l'algorithme),
- à un être humain dont on veut corriger ou modifier les défauts de vision (par exemple codage IA8 : nom de la personne ou numéro, pays),
- à un périphérique auquel on veut ressembler et dont il faut ajouter et non pas supprimer les défauts (par exemple codage IA9 : nom du fabricant, type d'appareil),
- à une version de périphérique donnée(par exemple, codage IA10 : nom du fabricant, type de périphérique, version du logiciel du périphérique),
- à un protocole (par exemple codage IA11 _{:} données issues du protocole Twain),
   à un périphérique générique (par exemple codage IA12 : liste de source de données, identifiant de champ; valeur des champs).

Le système peut alors analyser les périphériques ou appareils de la chaîne d'appareils P3, et déterminer les identifiant 60, de diverses manières selon le cas, afin de pouvoir interroger la base de données.

Une base données contient pour chaque type d'appareil au moins une information formatée représentant les défauts et les caractéristiques de cet appareil. Les informations formatées 15 peuvent être liées aux défauts P5 de l'appareil de diverses façons. Elles peuvent représenter les défauts de l'appareil. Elles peuvent représenter l'inverse des défauts de l'appareil. Elles peuvent ne représenter qu'une approximation des défauts. Elles peuvent représenter l'écart de défauts entre deux appareils. Chaque identifiant 60 fourni par une interface telle que l'interface ID1 permet d'obtenir une information formatée telle que 15.1 qui est reçue temporairement dans un circuit 20.1. Des circuits 20.1, 20.2, ... 20.n permettent de recevoir des informations formatées relatives aux appareils APP1, APP2, ... APPn.

La base de données peut être intégrée au système ou déportée au moins en partie à distance.

Elle peut dans ce cas être gérée par un tiers au moins partiellement.

Dans le cas, par exemple, d'un appareil photo numérique qui corrige ou modifie ses propres défauts, elle peut être réduite à un enregistrement.

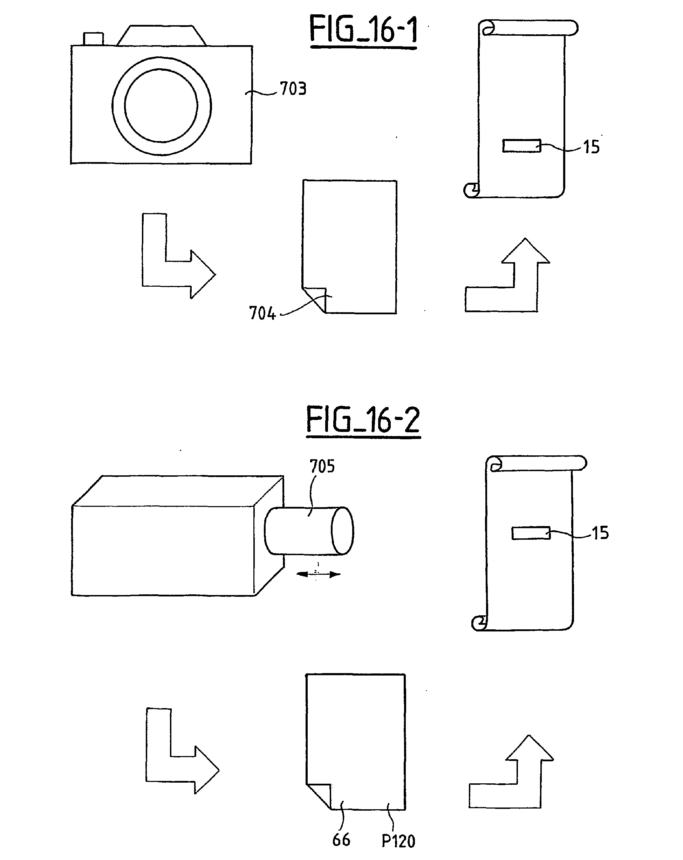

Des opérateurs de traitement d'informations formatées 21.1, 21.2, ... 21.n sont destinés à recevoir d'une part des valeurs de caractéristiques variables 66 fournies par les interfaces C.VAR1 à C.VARn et les informations formatées fournies par les circuits 20.1 à 20.N de façon que chaque opérateur traite une fraction des informations formatées à l'aide d'une ou plusieurs caractéristiques variables 66 et fournisse une information formatée modifiée à un circuit intermédiaire 22.1 à 22.n. Par exemple, l'opérateur 21.1 reçoit l'information formatée 15.1 dépendant de la focale, la traite à l'aide de la valeur de la caractéristique variable 66 (la valeur de la focale) fournie par l'interface C.VAR1 et fournit une information formatée modifiée 15.1' ne dépendant pas de la focale. C'est ainsi que la figure 16.1 représente un appareil possédant des caractéristiques faisant apparaître des défauts 704 qui donnent lieu à des informations formatées 15 comme on l'a vu précédemment. Des caractéristiques variables 66 représentant par exemple une focale variable 705 donnent lieu également à des informations formatées (voir figure 16.2).

Des opérateurs de traitement d'image 23.1, 23.2, ...23.n sont destinés chacun à recevoir chacun une information formatée modifiée. Le premier opérateur 23.1 reçoit une image à traiter, la traite à l'aide de l'information formatée modifiée 15.1' et fournit une image modifiée. Celle-ci est reçue par l'opérateur suivant 23.2 qui la traite à l'aide de l'information formatée modifiée 15.2' et fournit une nouvelle image modifiée, et ainsi de suite jusqu 'au dernier opérateur 23.n qui fournit une image modifiée finale.

Eventuellement, si un opérateur de traitement d'image ne reçoit pas d'information formatée modifiée, l'image reçue par cet opérateur n'est pas modifiée et est retransmise telle quelle à l'opérateur suivant ou vers la sortie, ou on peut par exemple utiliser des informations formatées par défaut.

Enfin, une unité centrale de commande 25 permet de gérer l'ensemble du fonctionnement du système et notamment l'échange des informations et données entre les différents éléments du système.

Dans ces conditions, l'unité centrale de commande 25 aura la charge de rechercher de manière automatique, dans la base de données 22, des informations formatées dont les adresses sont données par les interfaces ID1, ID2, ... IDn. L'unité centrale 25 gère la recherche de ces informations et déclenche le fonctionnement des opérateurs 21.1 à 21.n de traitement des informations formatées puis des opérateurs de traitement d'image 23.1 à 23.n. Les opérateurs peuvent éventuellement sur situer sur différents systèmes distants reliés entre eux.

La figure 13b représente une variante du système selon l'invention. Dans cette variante, les informations formatées modifiées sont combinées en une seule information formatée et modifient la qualité de l'image à traiter. Pour cela, un opérateur 23.t remplace les opérateurs 23.1 à 23.n. Cet opérateur reçoit les différentes informations formatées modifiées, les combine et permet de modifier la qualité de l'image à traiter pour fournir une image modifiée.

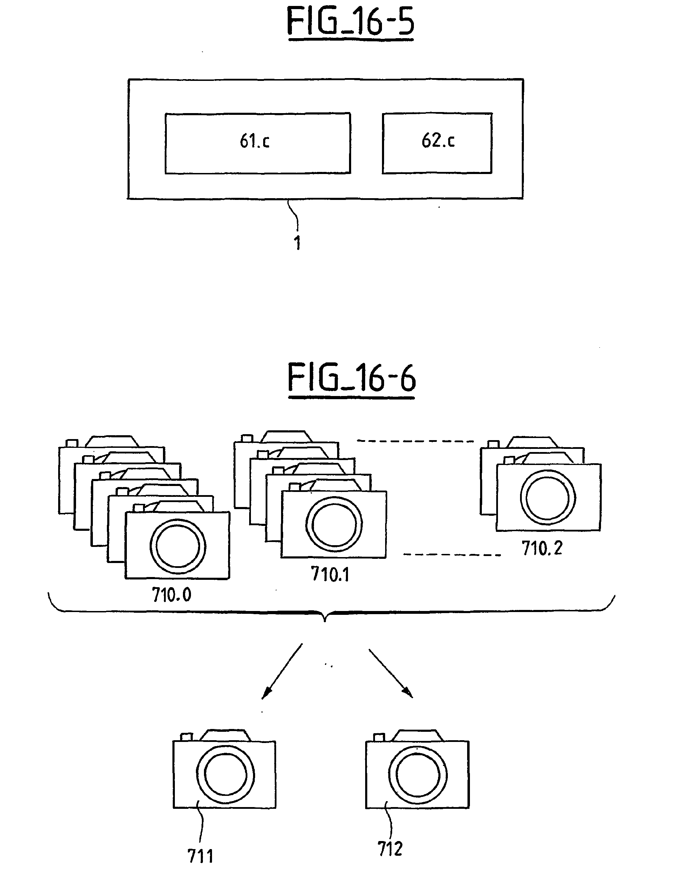

Par ailleurs selon une variante de réalisation applicable également au système de la figure 13a, il est prévu, comme cela est indiqué dans la figure 13c, de combiner les caractéristiques variables 66 d'un appareil et son identifiant 60 pour accéder directement dans la base de données 22, à une information formatée modifiée. Par exemple, les caractéristiques variables 66 fournies par C.VAR1 sont combinées à un identifiant ID1 pour former une information formatée modifiée 15.1 transmise à 22.1. Il est bien évident que sur la figure 13c, cette disposition n'a été prévue que pour l'information formatée modifiée 15.1' mais qu'elle pourrait être appliquée à tout ou partie des autres informations formatées. Le système fournit en sortie de l'opérateur 23.n pour la figure 13a et 23. et pour les figures 13b et 13c, une image modifiée. La figure 16-5 illustre le cas où à une image modifiée 61c on adjoint des informations associées 62c qui peuvent être :
- une signature numérique de l'image,
- des données de correction, c'est-à-dire les informations formatées modifiées ou leurs équivalents ou simplement un indicateur, indiquant ainsi que l'image a été corrigée ou modifiée,
- les données 62 ou informations associées P63 à l'image 1 d'origine, éventuellement modifiées ou mises à jour pour refléter les traitement apportés à l'image, par exemple des données au format Exif ou PIM,
- ou les deux types de données.

Les exemples de réalisation des figures 13a à 13c peuvent être appliqués à l'ensemble des défauts ou à chaque défaut.

Par exemple, on peut corriger la distorsion et le flou de l'appareil APP1, puis la distorsion et le flou de APP2, etc.....

Selon un autre exemple, on peut également corriger distorsion de APP1, puis distorsion de APP2 etc...., puis flou de APP1, puis flou de APP etc.....

En généralisant dans le cas de plusieurs défauts et plusieurs appareils, on peut combiner les deux approches de réalisations.

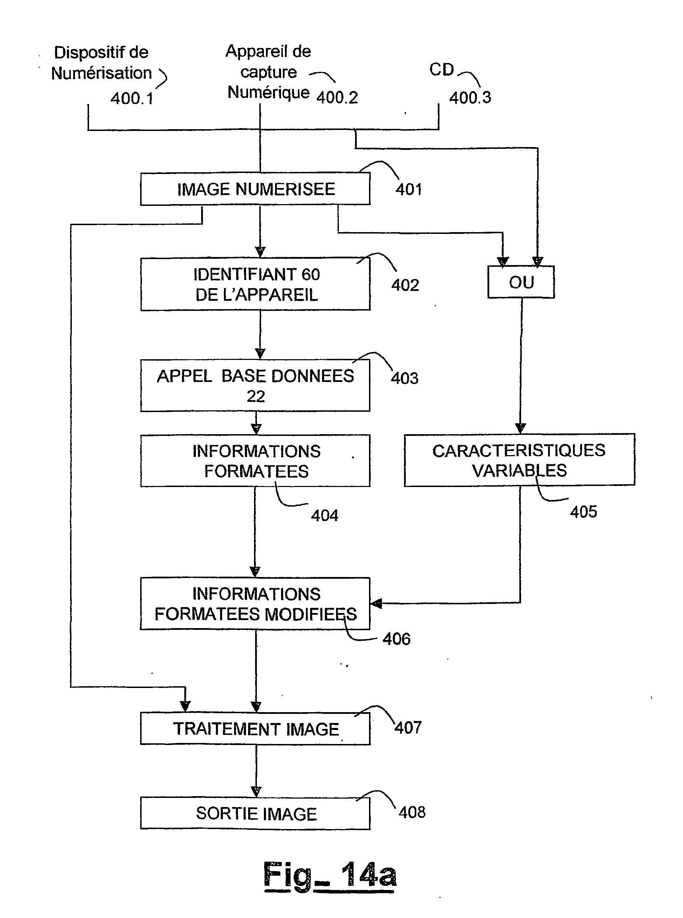

En se reportant à la figure 14a, on va maintenant décrire un exemple de réalisation simplifiée des procédés de l'invention. Cet exemple de réalisation est appliqué à un appareil de capture d'image. On suppose que le procédé ne doit modifier que les défauts dus à un seul appareil, par exemple à l'appareil de capture d'image et aux réglages de cet appareil.

L'image est mise à disposition pour être traitée sous forme numérisée par un dispositif de numérisation 400.1, un appareil de capture numérique 400.2 (appareil de photos numériques, ou scanner, ou autre), un compact disque 400.3 par exemple.

A l'étape 401 du procédé, on dispose d'une image numérisée. Par ailleurs, on connaît les caractéristiques de l'appareil de capture d'image, voire le type de cet appareil par tout moyen d'identification, par exemple un code à barres.

A l'étape 402 du procédé on procède à la saisie ou au calcul de l'identifiant 60 de l'appareil.

A l'étape 403, l'identifiant 60 permet d'accéder, à l'aide d'index P52 par exemple, dans la base de données 22 à des caractéristiques de l'appareil de capture d'image. En effet, comme mentionné précédemment, on dispose d'une base de données dans laquelle, en principe, pour chaque appareil connu ont été enregistrées les caractéristiques des appareils. Dans le cadre de l'invention, ces caractéristiques représentent des défauts à modifier. A l'étape 403, la base de données 22 est donc appelée. Dans une variante de réalisation, l'appel à la base de donnée peut en outre tenir compte de certaines caractéristiques variables 66 obtenues lors de l'étape 405, pour obtenir directement des informations formatées pertinentes pour les valeurs de caractéristiques variables 66 ainsi obtenues.

A l'étape 404, à une adresse obtenue à partir de l'identifiant 60, on lit dans la base de données 22 une information formatée 15 qui représente les caractéristiques (défauts) de l'appareil correspondant.

Par ailleurs, avec l'image à traiter, à partir d'une mémoire de l'appareil, d'un logiciel lié à l'appareil, ou à partir d'informations associées à l'image, le système dispose éventuellement des caractéristiques variables 66 (les conditions de prise de vue notamment).

A l'étape 405, ces caractéristiques sont donc disponibles.

Ensuite (étape 406), les informations formatées 15.1 à 15.n sont combinées avec les caractéristiques variables 66 pour fournir des informations formatées modifiées 15.1' à 15.n'. Ces informations formatées modifiées contiennent maintenant toutes les informations permettant de modifier la qualité de l'image.

Selon une variante de cette étape 406, les caractéristiques variables 66, et notamment leurs valeurs pour l'image à traiter, étant déterminées, elles servent à déterminer dans les informations formatées une fraction de ces informations formatées qui tiennent compte de ces caractéristiques variables 66.

A l'étape 407, ces informations formatées modifiées sont appliquées à l'image pour la traiter et la corriger ou modifier. Ce traitement se fera à l'aide d'opérateurs assistés par un logiciel de traitement d'image.

On obtient ainsi à l'étape 408, une image modifiée.

Il est bien évident que le procédé qui précède peut fonctionner en utilisant uniquement les caractéristiques inhérentes à l'appareil sans utiliser les caractéristiques variables 66. Dans ce cas les informations formatées lues en base de données sont utilisées directement pour traiter l'image.

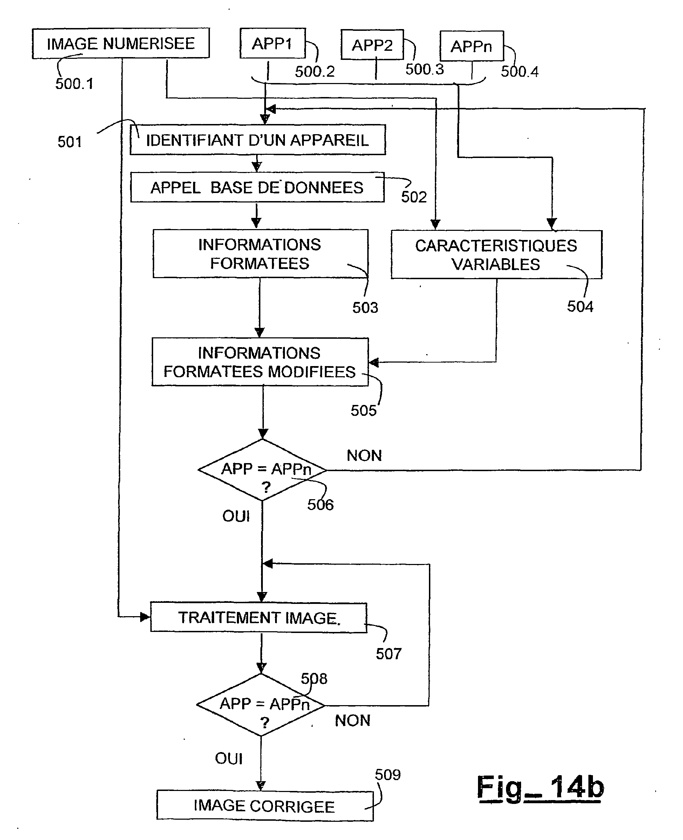

En ce reportant à la figure 14b, on va maintenant décrire un autre exemple de réalisation de l'invention. Dans ce procédé et système, on considère qu'il convient de prendre en compte les divers défauts de plusieurs appareils, voire de tous les appareils, qui interviennent dans le traitement d'une image.

Comme dans l'exemple de la figure 14a, le procédé prévoit la saisie par le système de l'image numérisée, des identifiants 60 des appareils et des caractéristiques variables 66.

Au cours de l'étape 501, l'identifiant 60 d'un appareil est pris en compte et permet d'adresser la base de données 22 (étape 502) pour obtenir une ou plusieurs informations formatées correspondant à cet identifiant 60.

Egalement, les caractéristiques variables 66 liées à cet appareil sont recherchées (étape 504).

Au cours de l'étape 505, les informations formatées ou certaines informations formatées sont modifiées en fonction des caractéristiques variables 66. Comme dans le procédé décrit en relation avec la figure 14b, après avoir déterminé les caractéristiques variables 66, celles-ci permettent de déterminer parmi les informations formatées celles qui sont utiles et qui prennent en compte les caractéristiques variables 66. Les informations formatées ainsi déterminées sont gardées en mémoire.

Puis (étape 506), on teste pour savoir si un autre appareil doit être pris en compte pour la modification de la qualité de l'image. Sur le diagramme de la figure 4b, ce test est représenté sous la forme de la question "APP = APPn ?" qui signifie "l'appareil pris en compte est-il le dernier des appareils de la chaîne ?". Si la réponse est négative le processus reprend à l'étape 501 avec l'appareil suivant. Si la réponse est positive, on a alors, à l'issue de l'étape 505, en mémoire, toutes les informations formatées relatives aux différents appareils.

L'image est alors traitée au cours de l'étape 507 par les informations formatées relatives au premier appareil et donne lieu à une première image traitée. Le système prend ensuite en compte les informations formatées relatives à l'appareil suivant et traite l'image traitée précédente et cela jusqu'à avoir traité toutes les informations formatées, c'est-à-dire en principe lorsque toutes les informations relatives aux différents appareils de la chaîne ont été prises en compte. Le test "APP = APPn ?" répond alors positivement. On obtient et délivre une image modifiée.

On notera que le procédé de l'invention peut être réalisé en ne faisant qu'un seul test "APP = APPn ?". On pourrait ne faire que le test de l'étape 508 ce qui reviendrait quasiment au même.

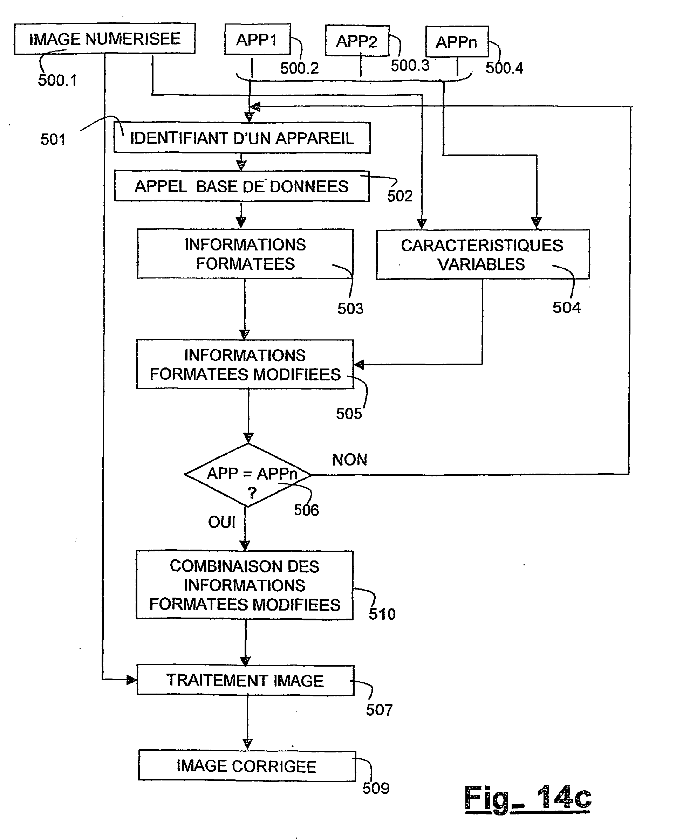

Selon une variante du procédé selon l'invention, représentée en figure 14c on prévoit, lorsque toutes les informations formatées de tous les appareils ont été obtenues, c'est-à-dire à l'issue de l'étape 506, de combiner, au cours d'une étape 510, les différentes informations formatées. De cette façon, lors de l'étape 507 on effectue en une seule fois le traitement de l'image. Comme on l'a vu précédemment, pour être traitée, une image peut nécessiter une pluralité d'appareils qui peuvent comprendre l'appareil de capture d'image, un scanner, une imprimante, des systèmes de transmission, etc. Chaque appareil est susceptible d'induire des défauts dans la chaîne de traitement. Il y a également les dispositions supplémentaires qu'on a appelées précédemment "pseudo-périphériques" et qui ont pour mission d'apporter des modifications à l'image selon un style ou en application de défauts qui correspondent à ces pseudo-périphériques.

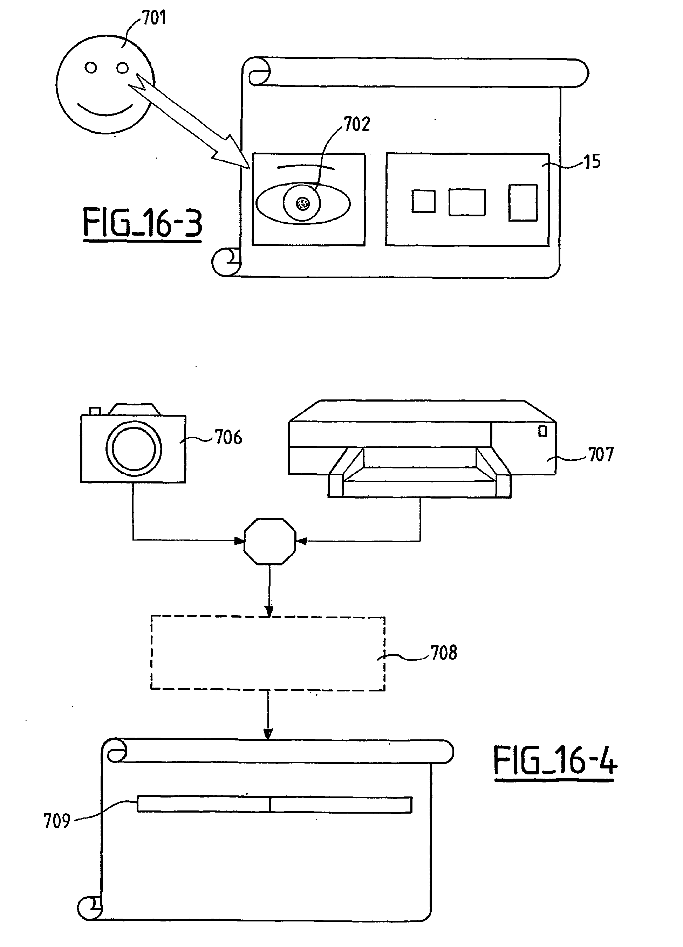

Une variante du procédé de l'invention est de considérer que l'ensemble des appareils d'une chaîne d'appareils P3 nécessaires au traitement d'une image constitue un seul appareil qu'on appellera appareil virtuel 708 et dont les défauts correspondent à l'équivalent de tout ou partie des défauts des différents appareils de la chaîne. C'est ainsi que des appareils, tels qu'un appareil de capture d'image 706 (figure 16.4) et une imprimante 707 peuvent être représentés par un appareil virtuel 708 auquel correspondent des informations formatées virtuelles 709. Si on considère qu'une information formatée peut être une expression mathématique de caractéristiques physiques, une information formatée d'un appareil virtuel 708 correspondant à deux appareils peut être la somme de deux vecteurs correspondant aux caractéristiques de ces deux appareils et/ou la convolution de deux fonctions mathématiques. On détermine donc un appareil virtuel 708 sur la figure 16.4 présentant des défauts équivalents à une partie au moins des défauts d'origine de la chaîne. On détermine les informations formatées virtuelles 709 correspondant à cet appareil virtuel. Et on enregistre les informations formatées virtuelles obtenues ou bien, on substitue ces informations formatées virtuelles aux informations formatées relatives aux défauts d'origine. Les informations formatées virtuelles sont accessibles en base de données directement à l'aide d'un identifiant 60 correspondant à la chaîne d'appareils P3 représentée par l'appareil virtuel. L'exécution du procédé peut alors être plus simple et plus rapide à mettre en oeuvre.

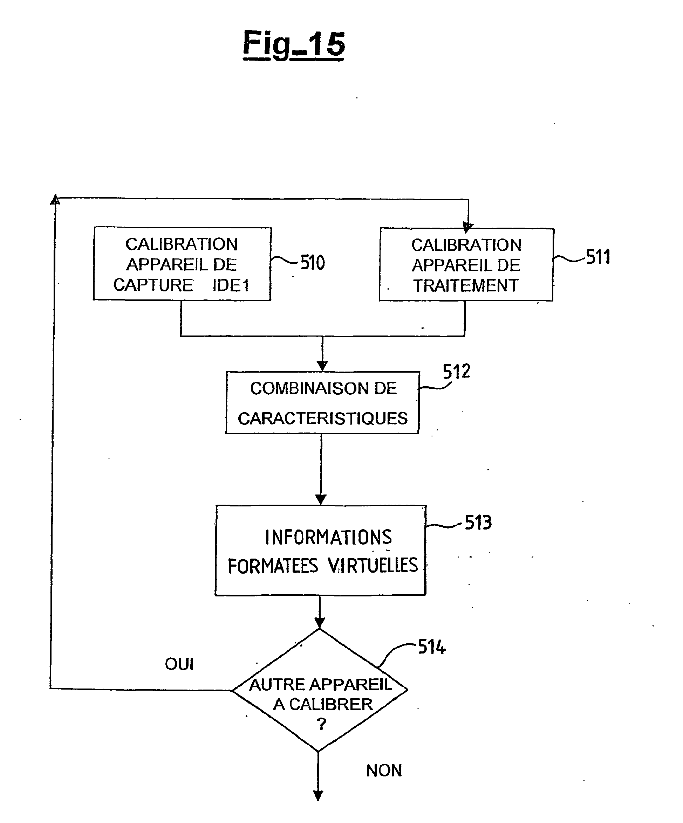

Un exemple d'organisation du procédé permettant d'obtenir des informations formatées virtuelles peut être mis en oeuvre selon l'organigramme de la figure 15. Les caractéristiques de deux appareils sont prises en compte (étapes 510 et 511). A l'étape 512, ces caractéristiques sont combinées. A l'étape 513, on calcule les informations formatées virtuelles correspondantes. A l'étape 514, on regarde si un autre appareil doit entrer dans la chaîne d'appareils virtuelle. Si oui, on recommence le processus. Si non le processus est terminé.

Dans l'exemple d'un laboratoire de développement intégré, la chaîne d'appareils P3 comprend un scanner, un appareil photos et une imprimante. L'appareil virtuel équivalent présente les défauts des trois appareils et le temps de modification de la qualité de l'image peut être divisé sensiblement par trois.

Dans le cas d'un appareil à caractéristiques variables 66, il est possible de déterminer les informations formatées liées aux défauts présentant ladite caractéristique variable 66 de la façon suivante.

Dans l'exemple où les caractéristiques variables 66 sont la focale et l'ouverture sélectionne des combinaisons :
- focale = 35 mm, ouverture = f/2,
- focale = 35 mm, ouverture = f/8,
- focale = 100 mm, ouverture = f/8,
- etc....

Pour chaque combinaison, on détermine, selon le procédé décrit précédemment, les informations formatées correspondantes.

On déduit par exemple par interpolations des informations formatées, fonction de la focale et de l'ouverture de telle sorte que la base de données contienne les informations formatées nécessaires à l'étape 404.

On voit donc, comme on l'a vu précédemment lors de la description de la figure 13a, qu'on dispose d'une information formatée dépendant d'une caractéristique variable 66 telle que la focale. Cette information formatée est traitée à l'aide de la caractéristique variable 66 pour obtenir une information formatée modifiée.

Dans la description qui précède, on a considéré que l'image à traiter était une image provenant d'un appareil de capture d'image qu'on voulait visualiser ou imprimer. L'invention est également applicable à toute chaîne de traitement d'image et donc également à une chaîne permettant de projeter une image. On va donc considérer une chaîne de restitution d'image. Comme dans les exemples précédents de réalisation du procédé de l'invention on doit obtenir les caractéristiques des différents appareils de la chaîne de restitution d'image. Ces caractéristiques permettent d'obtenir des informations formatées pour appliquer le procédé de l'invention.

On va maintenant décrire des éléments de détails ou des variantes de l'invention.

Tout d'abord, à l'occasion de la description de la figure 13a, on a mentionné que des caractéristiques fournies permettant d'obtenir des informations formatées pouvaient être des caractéristiques destinées à corriger des défauts de vision (astigmatisme par exemple) d'un observateur 701 ou à induire des effets spéciaux. Dans ces conditions les informations formatées 702 qui en résultent permettent de modifier la qualité visuelle, graphique, colorimétrique, etc. de l'image comme illustré par la figure 16.3, les informations formatées 702 liées aux défauts de vision de l'observateur 701, par exemple, sont traitées comme des informations formatées de la chaîne d'appareils P3, voire sont associées à ces informations formatées. Dans ce qui précède on a considéré le traitement d'une image ; on peut également considérer que l'image se trouve dans un fichier P57, ainsi que l'identifiant 60 ou un index P52, et éventuellement les caractéristiques variable 66 de l'appareil de capture et de tout appareil qui a pu intervenir dans le traitement de l'image enregistrée dans le fichier; on peut également considérer que l'image se trouve dans un fichier image P58, ainsi qu'une partie des informations formatées. Par extension, l'invention est donc également applicable au cas où l'image ainsi que l'information formatée sont dans la base de données 22.

La détermination de la valeur des caractéristiques variables 66 peut se faire à l'aide d'informations contenues dans le fichier P57 ou le fichier image P58. De préférence ces informations seront enregistrées dans le fichier selon un format normalisé tel que celui de la norme EXIF connue dans la technique. De cette façon le système et le procédé de l'invention sont applicables au traitement d'images prises et/ou déjà traitées à l'aide d'appareils mis sur le marché avant que les informations formatées correspondant à ces appareils n'aient été établies.

Il est bien évident que la modification de la qualité de l'image peut être simplifiée en ne prenant en compte que les défauts d'un nombre limité d'appareils de la chaîne, voire d'un seul, et en ne corrigeant que ces défauts.

Par ailleurs, comme cela a été envisagé dans la description de la figure 13a, le procédé de l'invention peut s'appliquer en simulant d'autres appareils que ceux faisant partie de la chaîne d'appareils P3 en cours d'utilisation. Egalement, des informations formatées relatives à un appareil, ou à un type d'appareils, peuvent être applicables à un autre appareil ou à un autre type d'appareil et notamment des appareils similaires. Par exemple, comme cela est représenté en figure 16.6, on a représenté plusieurs lots d'appareils 710.0, 710.1, 710.2. Des informations formatées concernent un type d'appareil 711 mais ces informations formatées peuvent également être applicables à un appareil similaire 712, ce qui permet par exemple de ne produire que les informations formatées relatives à un seul appareil de chaque type.

L'invention est applicable à la modification, notamment l'amélioration, d'images traitées ou fournies par un appareil ou une chaîne d'appareils P3. Une application intéressante sera de ne modifier que des défauts ou une partie des défauts de certains appareils seulement. Une application peut être de modifier un défaut en partie seulement, par exemple, afin d'établir un compromis qualité d'image/temps de calcul.

On prévoit également l'application de l'invention à des machines permettant de traiter des images de façon soit à induire des défauts, soit à donner un style particulier à l'image, soit à simuler la présentation d'un autre appareil, appelé appareil de référence, ou chaîne d'appareils P3 appelée chaîne d'appareils de référence, que ceux utilisés dans le cadre de l'application.

L'invention est applicable à la conception de laboratoires de développement photos intégrés, Elle peut être mise en oeuvre sur ordinateur.

Enfin elle peut être mise en oeuvre dans des projecteurs et permettre dans ce cas d'effectuer différentes corrections dont la correction de parallaxe courante dans le domaine de la projection. Pour cela une camera ou un appareil photo peuvent être utilisés pour capturer une mire projetée sur l'écran.

D'autres exemples de chaînes d'appareils peuvent inclure:
- camera informatique (WEBCAM en anglais),
- scanner,
- appareil photo numérique,
- caméscope,
- imprimante,
- écran,
- projecteur,
- jouets,
- logiciels de traitement d'images,
- système de téléconférence,
- camera de surveillance.

Les exemples suivants constituent des chaînes d'appareils:
- un seul appareil,
- un appareil de capture d'image et un appareil de restitution d'image,
- un appareil photo, un scanner, une imprimante par exemple dans un Minilab de tirage photo,
- un appareil photo numérique, une imprimante par exemple dans un Minilab de tirage photo,
- un scanner, un écran ou une imprimante, par exemple dans un ordinateur,
- un écran ou projecteur et l'oeil d'un être humain,
- un appareil et un autre appareil auquel on veut ressembler,
- un appareil photo et un scanner,
- un appareil de capture d'image, un logiciel de traitement d'images,
- un logiciel de traitement d'images, un appareil de restitution d'image,
- une combinaison des exemples précédents,
- un autre ensemble d'appareils.

Ledit procédé peut être mis en oeuvre sous différentes formes:
- système d'exploitation,
- extension d'un logiciel de traitement tel que celui connu sous la marque "PHOTO SHOP" par exemple,
- logiciels embarqués,
- composants électroniques intégrés,
- services sur Internet,
- ou toute combinaison de ces formes de mise en oeuvre etc. ... .

### Image Couleur

On va maintenant décrire, en se référant notamment à la figure 18, la notion d'image couleur P21, de plan couleur P20, de couleur déterminée P22, de donnée relative à une couleur déterminée P23. La variante de réalisation décrite ci-après s'applique au cas où l'image P2 est une image couleur P21. L'image couleur P21 peut être décomposée en plans couleur P20 de diverses façons : nombre de plans (1, 3 ou plus), précision (8 bits non signé, 16 bit signés, flottant...) et signification des plans (par rapport à un espace de couleur standard). L'image couleur P21 peut être décomposée de diverses façons en plans couleur P20: rouge, vert, bleu (RVB) ou luminance, saturation, teinte... ; d'autre part il existe des espaces de couleur tels PIM, ou des valeurs de pixels négatives sont possibles afin de permettre la représentation de couleurs soustractives qu'il n'est pas possible de représenter en RVB positif ; enfin il est possible de coder une valeur de pixel sur 8bits, 16bits, ou en utilisant des valeurs flottantes. Les informations formatées 15 comprennent des données permettant de décomposer l'image P2 en plans couleur P20, compatibles des différents défauts P5 à traiter ; chaque plan couleur P20 étant caractérisé par une couleur déterminée P22 ; lesdites informations formatées 15 comprenant des données relatives à ladite couleur déterminée P23, par exemple des coordonnées dans un espace de couleur standard CIE ou XYZ ou LAB ou sRGB ; lesdites données relatives à ladite couleur déterminée P23 permettant de calculer le plan couleur P20 de l'image 1 et de déterminer la fraction desdites informations formatées 15 qu'il convient de mettre en oeuvre pour modifier la qualité dudit plan couleur P20.

Dans le cas d'un appareil compatible du standard PIM, il est possible de choisir par exemple de travailler en couleur positive sur 8 bits en espace X,Y,Z ou de travailler en 16 bits signés en espace RVB.

### Informations formatées mesurées, informations formatées étendues

Les informations formatées 15 ou une fraction des informations formatées 15 peuvent comprendre des informations formatées mesurées P101, pour représenter une mesure brute, par exemple un champ mathématique lié aux défauts géométriques de distorsion en un certain nombre de points caractéristiques d'une grille 80. Les informations formatées 15 ou une fraction des informations formatées 15 peuvent comprendre des informations formatées étendues P102, qui peuvent être calculées à partir des informations formatées mesurées P101, par exemple par interpolation pour les autres points réels que les points caractéristiques de la grille 80. Dans ce qui précède, on a vu qu'une information formatée 15 pouvait dépendre de caractéristiques variables 66. On appelle selon l'invention combinaison P120, une combinaison constituée de caractéristiques variables 66 et de valeurs de caractéristiques variables telle que par exemple une combinaison P120 constituée de la focale, de la mise au point, de l'ouverture de diaphragme, de la vitesse de capture, de l'ouverture, etc. et de valeurs associées. Il est difficilement pensable de calculer les informations formatées 15 relatives aux différentes combinaisons P120 d'autant que certaines caractéristiques de la combinaison P120 peuvent varier de façon continue telles que notamment la focale et la distance.

L'invention prévoit de calculer les informations formatées 15 sous la forme d'informations formatées étendues P102 par interpolation à partir d'informations formatées mesurées P101 relatives à une sélection prédéterminée des combinaisons P120 de caractéristiques variables 66 connues.

Par exemple, on utilise des informations formatées mesurées P101 relatives aux combinaisons P120 « focale=2, distance=7, vitesse de capture=1/100 », la combinaison « focale=10, distance=7, vitesse de capture=1/100 », la combinaison « focale=50, distance=7, vitesse de capture=1/100 » pour calculer des informations formatées étendues P102 dépendantes de la caractéristique variable 66 focale. Ces informations formatées étendues P102 permettent notamment de déterminer des informations formatées relatives à la combinaison « focale=25, distance=7 et vitesse de capture=1/100 ».

Les informations formatées mesurées P101 et les informations formatées étendues P102 peuvent présenter un écart d'interpolation P121. L''invention peut comprendre l'étape de sélectionner zéro, une ou plusieurs des caractéristiques variables 66, de telle sorte que l'écart d'interpolation P121, pour les informations formatées étendues P102 obtenues pour les caractéristiques variables 66 ainsi sélectionnées, soit inférieur à un seuil d'interpolation prédéterminé. En effet certaines caractéristiques variables 66 peuvent avoir une influence sur le défaut P5 plus faible que d'autres et faire l'approximation qu'elles sont constantes peut n'introduire qu'une erreur minime ; par exemple le réglage de mise au point peut n'avoir qu'une influence faible sur le défaut vignetage et pour cette raison ne pas faire partie des caractéristiques variables 66 sélectionnées. Les caractéristiques variables 66 peuvent être sélectionnées au moment de la production des informations formatées 15. Il résulte de la combinaison des traits techniques que la modification de la qualité des images met en oeuvre des calculs simples. Il résulte également de la combinaison des traits techniques que les informations formatées étendues P102 sont compactes. Il résulte également de la combinaison des traits techniques que les caractéristiques variables 66 éliminées sont les moins influentes sur le défaut P5. Il résulte de la combinaison des traits techniques que les informations formatées 15 permettent de modifier la qualité des images avec une précision déterminée.

### Application de l'invention à la réduction de coût

On appelle réduction de coût, un procédé et système pour diminuer le coût d'un appareil ou d'une chaîne d'appareils P3, notamment le coût de l'optique d'un appareil ou d'une chaîne d'appareils; le procédé consistant à :
- diminuer le nombre de lentilles, et/ou
- simplifier la forme des lentilles, et/ou
- concevoir ou choisir dans un catalogue une optique ayant des défauts P5 plus importants que ceux souhaités pour l'appareil ou la chaîne d'appareils, et/ou
- utiliser des matériaux, composants, traitements ou procédés de fabrication moins coûteux pour l'appareil ou la chaîne d'appareils, ajoutant des défauts P5.

Le procédé et système selon l'invention peut être utilisé pour diminuer le coût d'un appareil ou d'une chaîne d'appareils : on peut concevoir une optique numérique, produire des informations formatées 15 relatives aux défauts P5 de l'appareil ou à la chaîne d'appareils, utiliser ces informations formatées pour permettre à des moyens de traitement d'image, intégrés ou non, de modifier la qualité des images provenant ou destinées à l'appareil ou à la chaîne d'appareils, de sorte que la combinaison de l'appareil ou la chaîne d'appareil et des moyens de traitement d'image permettent de capturer, modifier ou restituer des images de la qualité souhaitée avec un coût réduit.

## Revendications

1. Procédé pour modifier la qualité d'au moins une image (P2) provenant ou destinée à une chaîne d'appareils (P3) déterminée ; ladite chaîne d'appareils (P3) déterminée comprenant au moins un appareil de capture d'image (1) et/ou au moins un appareil de restitution d'image (19), ledit appareil étant **caractérisé par** un identifiant; lesdits appareils de capture d'image (1) et/ou lesdits appareils de restitution d'image (19) appartenant à un ensemble d'appareils (P75); lesdits appareils dudit ensemble d'appareils (P75) présentant des défauts (P5) pouvant être **caractérisés par** des informations formatées (15), un défaut étant lié aux caractéristiques de l'optique et/ou du capteur et/ou de l'électronique et/ou du logiciel intégré à un appareil ; les défauts (P5) étant par exemple la distorsion, le flou, le vignetage, les aberrations chromatiques, le rendu des couleurs, l'uniformité du flash, le bruit du capteur, le grain, l'astigmatisme, l'aberration sphérique;
ledit procédé comprenant pour ladite image (P2), les étapes suivantes :
- l'étape d'obtenir l'identifiant dudit appareil, cet identifiant étant, par exemple, obtenu à partir de l'image, dans le cas d'un appareil de capture d'image,
- l'étape de répertorier des sources (P50) d'informations formatées (15) relatives auxdits appareils dudit ensemble d'appareils (P75),
- l'étape de rechercher parmi lesdites informations formatées (15) ainsi répertoriées, à partir de l'identifiant de l'appareil, des informations formatées spécifiques relatives à ladite chaîne d'appareils (P3) déterminée,
- l'étape d'améliorer ladite image (P2) au moyen de logiciels de traitement d'images (P64) et/ou de composants de traitement d'images (P65) en tenant compte desdites informations formatées spécifiques ainsi obtenues.

2. Procédé selon la revendication 1; ledit procédé étant tel que ladite recherche est réalisée au moyen d'index (P52) obtenus directement ou indirectement à partir d'une analyse :
- de ladite image (P2), et/ou
- desdits appareils de ladite chaîne d'appareils (P3), et/ou
- des moyens de chargement de ladite image (P2) dans lesdits logiciels ou composants de traitement d'image (P64,P65), et/ou
- des moyens de chargement de l'image modifiée par lesdits logiciels ou composants de traitement d'image vers des moyens de restitution d'image (19).

3. Procédé selon la revendication 2; lesdits appareils de ladite chaîne d'appareils (P3) étant identifiés par des identifiants (60), notamment un code barre ; ladite analyse en vue de rechercher lesdites informations formatées spécifiques comportant l'étape de déterminer lesdits identifiants (60).

4. Procédé selon l'une quelconque des revendications 1 à 3 ; ledit procédé étant tel que ladite image (P2), ledit index (P52) et/ou ledit identifiant (60) sont contenus dans un même fichier (P57).

5. Procédé selon l'une quelconque des revendications 1 à 4 ; ledit procédé étant tel que ladite image (P2) et au moins une partie des informations formatées (15) spécifiques sont contenus dans un même fichier image (P58).

6. Procédé selon l'une quelconque des revendications 1 à 5 ; ledit procédé comprenant en outre l'étape de stocker au préalable au moins une partie des informations formatées (15) dans une base de données (22) ; ledit procédé comprenant en outre l'étape de mettre à jour ladite base de données (22).

7. Procédé selon l'une quelconque des revendications 1 à 6 ; ledit procédé étant tel que l'un des appareils de ladite chaîne d'appareils (P3) présente au moins une caractéristique variable (66) selon l'image (P2), notamment la focale ; une fraction desdites informations formatées (15) spécifiques étant liée aux défauts (P5) de l'appareil présentant ladite caractéristique variable (66) ; ledit procédé comprenant en outre les étapes suivantes :
- l'étape de déterminer la valeur desdites caractéristiques variables (66), pour ladite image ;
- l'étape de déterminer ladite fraction desdites informations formatées (15) spécifiques en tenant compte des valeurs desdites caractéristiques variables (66) ainsi obtenues.

8. Procédé selon la revendication 7 ; ladite image étant contenue dans un fichier (P57); ledit procédé étant tel que pour déterminer la valeur de ladite caractéristique variable (66), on utilise des données présentes dans ledit fichier (P57), notamment des données, par exemple la focale, selon un format tel que le standard Exif.

9. Procédé selon l'une quelconque des revendications 1 à 8 ; ledit procédé étant tel que pour modifier la qualité d'au moins une image (P2) provenant ou destinée à une chaîne d'appareils (P3) :
- on détermine un appareil virtuel (708) présentant des défauts (P5) équivalents à au moins une partie des défauts (P5) d'au moins un appareil de ladite chaîne d'appareils (P3), ci après dénommés les défauts (P5) d'origine,
- on détermine les informations formatées virtuelles (709) liées aux défauts (P5) dudit appareil virtuel (708),
- on substitue pour déterminer les informations formatées spécifiques liées à l'ensemble des appareils de ladite chaîne d'appareils (P3), lesdites informations formatées virtuelles (709), aux informations formatées spécifiques relatives aux défauts (P5) d'origine.

10. Procédé selon l'une quelconque des revendications 1 à 9 ; ledit procédé étant destiné à modifier la qualité d'au moins un plan couleur (P20) d'une image couleur (P21); ledit plan couleur (P20) étant **caractérisé par** une couleur déterminée (P22); lesdites informations formatées (15) spécifiques comprenant en outre des données relatives à ladite couleur déterminée (P22); pour modifier ladite image, on calcule un plan couleur (P20) en utilisant lesdites données relatives à ladite couleur déterminée (P22) et ladite image (P2).

11. Procédé selon l'une quelconque des revendications 1 à 10 ; ledit procédé comprenant en outre, dans le cas où le processus de recherche desdites informations formatées spécifiques n'aboutit pas pour un des appareils de ladite chaîne d'appareils (P3), l'étape de calculer lesdites informations formatées (15) inconnues.

12. Procédé selon la revendication 11 ; ledit procédé comprenant en outre l'étape de calculer lesdites informations formatées inconnues, liées à un appareil de ladite chaîne d'appareils (P3):
- en mesurant des défauts (P5) dudit appareil, et/ou
- en simulant ledit appareil.

13. Procédé selon l'une quelconque des revendications 11 ou 12; ledit procédé comprenant en outre, pour un appareil de capture d'images (1) de ladite chaîne d'appareils (P3), l'étape de calculer lesdites informations formatées (15) inconnues:
- en réalisant une classe d'images de synthèse (7) par projections mathématiques (8) déterminées, d'au moins une scène de référence (9), sur une surface (10),
- en capturant au moins une image de référence (11) de chaque scène de référence (9) au moyen dudit appareil de capture d'images (1),
- en choisissant dans un ensemble de modèles de transformation paramétrables (12) celui permettant de transformer ladite image de référence (11) en une image transformée (13) proche de ladite classe d'images de synthèse (7) de ladite scène de référence (9); ladite image transformée (13) présentant un écart (14) avec ladite classe d'images de synthèse (7);
lesdites informations formatées (15) inconnues étant au moins en partie composées des paramètres desdits modèles de transformation paramétrables (12) choisis.

14. Procédé selon la revendication 13; ledit procédé étant tel que l'un des appareils de ladite chaîne d'appareils (P3) présente au moins une caractéristique variable (66) selon l'image (P2), notamment la focale et/ou l'ouverture; une fraction desdites informations formatées (15) spécifiques étant liée aux défauts (P5) de l'appareil présentant ladite ou lesdites caractéristiques variables (66) ; chaque caractéristique variable (66) étant susceptible d'être associée à une valeur pour former une combinaison (P120) constituée de l'ensemble desdites caractéristiques variables (66) et desdites valeurs ;
ledit procédé comprenant en outre l'étape de déterminer ladite fraction desdites informations formatées (15) inconnues:
- en sélectionnant des combinaisons (P120) prédéterminées,
- en mettant en oeuvre un processus d'itération des étapes du procédé faisant l'objet des revendications 13 ou 14, pour chacune desdites combinaisons (120) prédéterminées,
- en mettant en oeuvre un processus d'interpolation desdites informations formatées inconnues relatives à une combinaison (P120) quelconque, à partir des informations formatées inconnues obtenues au terme du processus d'itération.

15. Procédé selon l'une quelconque des revendications 11 à 14, ledit procédé comprenant en outre, pour un moyen de restitution d'images (19) de ladite chaîne d'appareils, l'étape de produire des données caractérisant des défauts (P5) des moyens de restitution d'image (19), notamment les caractéristiques de distorsion ; lesdites informations formatées (15) inconnues étant au moins en partie composées desdites données caractérisant des défauts (P5) des moyens de restitution d'image (19).

16. Procédé selon l'une quelconque des revendications 1 à 15; ledit procédé étant tel que ladite image (P2) comporte des informations associées (P63), notamment une signature numérique; lesdites informations associées (P63) étant modifiées ou mises à jour pour refléter les traitement apportés à l'image au cours des étapes du procédé.

17. Procédé selon l'une quelconque des revendications 1 à 16; ledit procédé comportant en outre l'étape d'associer des informations à ladite image modifiée, notamment l'information indiquant qu'elle a été modifiée.

18. Procédé selon la revendication 17 ; ledit procédé étant plus particulièrement destiné à modifier la qualité visuelle de ladite image pour un observateur; lesdites informations formatées (15) liées aux défauts (P5) des appareils de ladite chaîne d'appareils (P3) comportant en outre des informations formatées liées aux caractéristiques de vision dudit observateur, notamment des anomalies de fonctionnement des yeux et/ou du cerveau dudit observateur.
**Système**

19. Système pour modifier la qualité d'au moins une image (P2) provenant ou destinée à une chaîne d'appareils (P3) déterminée ; ladite chaîne d'appareils (P3) déterminée comprenant au moins un appareil de capture d'image (1) et/ou au moins un appareil de restitution d'image (19), ledit appareil étant **caractérisé par** un identifiant; lesdits appareils dudit ensemble d'appareils (P75) présentant des défauts (P5) pouvant être **caractérisés par** des informations formatées (15),
ledit système comprenant des moyens de traitement informatique (P76) permettant, pour ladite image, de :
- obtenir l'identifiant dudit appareil de la chaîne d'appareils, cet identifiant étant, par exemple, obtenu à partir de l'image, dans le cas d'un appareil de capture d'image,
- répertorier des sources (P50) d'informations formatées (15) relatives audits appareils dudit ensemble d'appareils,
- rechercher parmi lesdites informations formatées (15) ainsi répertoriées, à partir de l'identifiant de l'appareil, des informations formatées spécifiques relatives à ladite chaînes d'appareils (P3) déterminée,
- améliorer ladite image (P2) au moyen de logiciels de traitement d'images (P64) et/ou de composants de traitement d'images (P65) en tenant compte desdites informations formatées spécifiques ainsi obtenues.

20. Système selon la revendication 19 ; ledit système étant tel que lesdits moyens de traitement informatique effectuent ladite recherche au moyen d'index (P52) ; ledit index (P52) étant obtenu directement ou indirectement par des moyens d'analyse à partir d'une analyse :
- de ladite image (P2), et/ou
- desdits appareils de ladite chaîne d'appareils (P3), et/ou
- des moyens de chargement de ladite image (P2) dans lesdits logiciels ou composants de traitement d'image (P64,P65), et/ou
- des moyens de chargement de l'image modifiée par lesdits logiciels ou composants de traitement d'image vers des moyens de restitution d'image (19).

21. Système selon la revendication 20 ; lesdits appareils de ladite chaîne d'appareils (P3) étant identifiés par des identifiants (60), notamment un code barre ; lesdits moyens d'analyse comportant des moyens d'identification pour déterminer lesdits identifiants (60).

22. Système selon l'une quelconque des revendications 19 à 21; ledit système étant tel que ladite image (P2), ledit index (P52) et/ou ledit identifiant (60) sont contenus dans un même fichier (P57).

23. Système selon l'une quelconque des revendications 19 à 22 ; ledit système étant tel que ladite image (P2) et au moins une partie des informations formatées (15) spécifiques sont contenus dans un même fichier image (P58).

24. Système selon l'une quelconque des revendications 19 à 23 ; ledit système comprenant en outre des moyens de stockage pour stocker au préalable au moins une partie des informations formatées (15) dans une base de données (22); ledit système comprenant en outre des moyens de mise à jour pour mettre à jour ladite base de données (22).

25. Système selon l'une quelconque des revendications 19 à 24 ; ledit système étant tel que l'un des appareils de ladite chaîne d'appareils (P3) présente au moins une caractéristique variable (66) selon l'image (P2), notamment la focale ; une fraction desdites informations formatées (15) spécifiques étant liée aux défauts (P5) de l'appareil présentant ladite caractéristique variable (66); ledit système comprenant en outre des moyens de calcul pour déterminer :
- la valeur desdites caractéristiques variables (66), pour ladite image,
- ladite fraction desdites informations formatées (15) spécifiques en tenant compte des valeurs desdites caractéristiques variables (66) ainsi obtenues.

26. Système selon la revendication 25 ; ladite image étant contenue dans un fichier (P57) ; ledit système étant tel que, pour déterminer la valeur de ladite caractéristique variable (66), ledit système comprend des moyens de traitement informatique pour traiter des données présentes dans ledit fichier (P57), notamment des données, par exemple la focale, selon un format tel que le standard Exif.

27. Système selon l'une quelconque des revendications 19 à 26 ; ledit système étant tel que, pour modifier la qualité d'au moins une image (P2) provenant ou destinée à une chaîne d'appareils (P3), ledit système comprend des moyens de traitement informatique (P76) pour déterminer :
- un appareil virtuel (708) présentant des défauts (P5) équivalents à au moins une partie des défauts (P5) d'au moins un appareil de ladite chaîne d'appareils (P3), ci-après dénommés les défauts (P5) d'origine,
- les informations formatées virtuelles (709) liées aux défauts (P5) dudit appareil virtuel (708) ;
ledit système étant tel que, pour déterminer les informations formatées (15) spécifiques liées à l'ensemble des appareils de ladite chaîne d'appareils (P3), lesdits moyens de traitement informatique (P76) comprennent des moyens de substitution pour substituer, lesdites informations formatées virtuelles (709), aux informations formatées spécifiques relatives aux défauts (P5) d'origine.

28. Système selon l'une quelconque des revendications 19 à 27 ; ledit système étant destiné à modifier la qualité d'au moins un plan couleur (P20) d'une image couleur (P21); ledit plan couleur (P20) étant **caractérisé par** une couleur déterminée (P22); lesdites informations formatées (15) spécifiques comprenant en outre des données relatives à ladite couleur déterminée (P22); ledit système comprenant des moyens de calcul pour calculer un plan couleur (P20) en utilisant lesdites données relatives à ladite couleur déterminée (P22) et à ladite image (P2).

29. Système selon l'une quelconque des revendications 19 à 28 ; ledit système comprenant en outre, dans le cas où le processus de recherche desdites informations formatées spécifiques n'aboutit pas pour un des appareils de ladite chaîne d'appareils (P3), des moyens de calcul pour calculer lesdites informations formatées (15) inconnues.

30. Système selon la revendication 29 ; ledit système étant tel que lesdits moyens de calcul pour calculer lesdites informations formatées inconnues, liées à un appareil de ladite chaîne d'appareils (P3), comprennent des moyens de traitement pour mesurer des défauts (P5) dudit appareil, et/ou pour simuler ledit appareil.

31. Système selon l'une quelconque des revendications 29 ou 30 ; ledit système comprenant en outre, pour un appareil de capture d'images (1) de ladite chaîne d'appareils (P3), des moyens de calcul calculant lesdites informations formatées (15) inconnues en réalisant une classe d'images de synthèse (7) par projections mathématiques (8) déterminées, d'au moins une scène de référence (9), sur une surface (10); ledit appareil de capture d'images (1) capturant au moins une image de référence (11) de chaque scène de référence (9); lesdits moyens de calcul calculant lesdites informations formatées (15) inconnues en choisissant dans un ensemble de modèles de transformation paramétrables (12) celui permettant de transformer ladite image de référence (11) en une image transformée (13) proche de ladite classe d'images de synthèse (7) de ladite scène de référence (9) ; ladite image transformée (13) présentant un écart (14) avec ladite classe d'images de synthèse (7); lesdites informations formatées (15) inconnues étant au moins en partie composées des paramètres desdits modèles de transformation paramétrables (12) choisis.

32. Système selon la revendication 31; ledit système étant tel que l'un des appareils de ladite chaîne d'appareils (P3) présente au moins une caractéristique variable (66) selon l'image (P2), notamment la focale et/ou l'ouverture; une fraction desdites informations formatées (15) spécifiques étant liée aux défauts (P5) de l'appareil présentant ladite ou lesdites caractéristiques variables (66); chaque caractéristique variable (66) étant susceptible d'être associée à une valeur pour former une combinaison (P120) constituée de l'ensemble desdites caractéristiques variables (66) et desdites valeurs ; ledit système comprenant en outre des moyens de traitement informatique (P76) pour déterminer ladite fraction desdites informations formatées (15) inconnues :
- en sélectionnant des combinaisons (P120) prédéterminées,
- en mettant en oeuvre, pour chacune desdites combinaisons (P120) prédéterminées, un processus d'itération des moyens de calcul et des moyens de traitement informatique (P76) faisant l'objet des revendications 35 ou 36, ,
- en mettant en oeuvre un processus d'interpolation desdites informations formatées (15) inconnues relatives à une combinaison (P120) quelconque, à partir des informations formatées inconnues obtenues au terme du processus d'itération.

33. Système selon l'une quelconque des revendications 29 à 32, ledit système comprenant en outre, pour un moyen de restitution d'images (19) de ladite chaîne d'appareils (P3), des moyens de traitement informatique (P76) pour produire des données caractérisant des défauts (P5) des moyens de restitution d'image (19), notamment les caractéristiques de distorsion ; lesdites informations formatées (15) inconnues étant au moins en partie composées desdites données caractérisant des défauts (P5) des moyens de restitution d'image (19).

34. Système selon l'une quelconque des revendications 19 à 33; ledit système étant tel que ladite image (P2) comporte des informations associées (P63), notamment une signature numérique; lesdites informations associées (P63) étant modifiées ou mises à jour pour refléter les traitement apportés à l'image.

35. Système selon l'une quelconque des revendications 19 à 34; ledit système comportant en outre des moyens de traitement informatique pour associer des informations à ladite image modifiée, notamment l'information indiquant qu'elle a été modifiée.

36. Système selon la revendication 35 ; ledit système étant plus particulièrement destiné à modifier la qualité visuelle de ladite image pour un observateur ; lesdites informations formatées (15) liées aux défauts (P5) des appareils de ladite chaîne d'appareils (P3) comportant en outre des informations formatées (15) liées aux caractéristiques de vision dudit observateur, notamment des anomalies de fonctionnement des yeux et/ou du cerveau dudit observateur.

## Claims

1. Method for modifying the quality of at least one image (P2) from or to a determined line of devices (P3); said determined line of devices (P3) comprising at least one image acquisition device (1) and/or at least one image restitution device (19), said device being **characterized by** an identifier; said image acquisition devices and/or said image restitution devices (19) belonging to a group of devices (P75); said devices of said group of devices (P75) having defaults (P5) that can be **characterized by** formatted information (15), a default being linked to the features of the optics and/or the sensor and/or the electronics and/or the software integrated into a device; the defaults (P5) being for example distortion, blooming, vignetting, chromatic aberrations, color rendering, flash uniformity, sensor noise, grain, astigmatism, spherical aberration;
said method comprising, for said image (P2), the following steps:
- the step of obtaining the identifier of said device, this identifier being obtained for example from the image, in the case of an image acquisition device,
- the step of listing sources (P50) of formatted information (15) relative to said devices of the group of devices (P75),
- the step of searching among said formatted information (15), thus listed from the identifier of the device, specific formatted information relative to said determined line of devices (P3),
- the step of improving said image (P2) by means of image processing programs (P64) and/or of image processing components (P65) by taking into account said specific formatted information thus obtained.

2. Method according to claim 1, wherein said method being configured in such a way that said search is performed by means of an index (P52) obtained directly or indirectly from an analysis of:
- said image (P2), and/or
- said devices of said line of devices (P3), and/or
- loading means for loading said image (P2) into said image processing programs or components (P64, P65), and/or
- loading means for loading the image, modified by said image processing programs or components, to image restitution means (19).

3. Method according to claim 2, wherein said devices of said line of devices (P2) are identified by identifiers (60), notably a bar code; said analysis for searching said specific formatted information comprising the step of determining said identifiers (60).

4. Method according to any one of the claims 1 to 3, wherein said method is configured in such a way that said image (P3), said index (P52) and/or said identifier (60) are contained in the same file (P57).

5. Method according to any one of the claims 1 to 4, wherein said method is configured in such a way that said image (P2) and at least one part of the specific formatted information (15) are contained in the same image file (P58).

6. Method according to any one of the claims 1 to 5, wherein said method further comprises the step of storing beforehand at least one part of the formatted information (15) into a data base (22); said method further comprising the step of actualizing said data base (22).

7. Method according to any one of the claims 1 to 6, wherein said method is configured in such a way that one of the devices of said line of devices (P3) has at least one variable feature (66) according to the image (P2), notably the focal distance; a fraction of said specific formatted information (15) being linked to the defaults (P5) of said device having said variable feature (66); said method further comprising the following steps:
- the step of determining the value of said variable features (66), for said image;
- the step of determining said fraction of said specific formatted information (15) by taking into account the values of said variable features (66) thus obtained.

8. Method according to claim 7, wherein said image is contained in a file (P57); said method being configured in such a way that, for determining the value of said variable feature (66), data in said file (P57), notably data, for example the focal distance, are used in a format such as the Exif standard.

9. Method according to any one of the claims 1 to 8, wherein said method is configured in such a way that for modifying the quality of at least one image (P2) from or to a line of devices (P3):
- it is determined a virtual device (708) having defaults (P5) equivalent to at least one part of the defaults (P5) of at least one device of said line of devices (P3), called thereafter original defaults (P5),
- it is determined the virtual formatted information (709) linked to the defaults (P5) of said virtual device (708),
- for determining the specific formatted information linked to the group of devices of said line of devices (P3), said virtual formatted information (709) are substituted for said specific formatted information relative to the original defaults (P5).

10. Method according to any one of the claims 1 to 9, wherein said method is intended to modify the quality of at least one color plane (P20) of a color image (P21); said color plane (P20) being **characterized by** a determined color (P22); said specific formatted information (15) further comprising data relative to said determined color (P22); for modifying said image, a color plane (20) is calculated by using said data relative to said determined color (P22) and said image (P2).

11. Method according to any one of the claims 1 to 10, wherein said method further comprising, when the searching process for said specific formatted information is unsuccessful for one of the devices of said line of devices (P3), the step of calculating said unknown formatted information (15).

12. Method according to claim 11, wherein said method further comprises the step of calculating said unknown formatted information, linked to a device of said line of devices (P3):
- by measuring defaults (P5) of said device, and/or
- by simulating said device.

13. Method according to any one of the claims 11 or 12, wherein said method further comprises, for an image acquisition device (1) of said line of devices (P3), the step of calculating said unknown formatted information (15):
- by generating a class of computer generated images (7) by means of determined mathematical projections (8) of at least one reference scene (9) on a surface (10),
- by acquiring at least one reference image (11) of each reference scene (9) by means of said image acquisition device (1),
- by selecting in a group of parametrizable transformation models (12) the model enabling to transform said reference image (11) into a transformed image (13) close to said class of computer generated images (7) of said reference scene (9); said transformed image (13) having a difference (14) from said class of computer generated images (7);
said unknown formatted information (15) being at least partially composed of the parameters of said parametrizable transformation models (12) selected.

14. Method according to claim 13, wherein said method is configured in such a way that one of the devices of said line of devices (P3) has at least one variable feature (66) according to the image (P2), notably the focal distance and/or the aperture; a fraction of said specific formatted information (15) being linked to the defaults (P5) of the device having said feature(s) (66); each variable feature (66) being likely to be associated to a value for forming a combination (P120) composed of all said variable features (66) and said values;
said method further comprising the step of determining said fraction of said unknown formatted information (15):
- by selecting predetermined combinations (P120),
- by implementing an iteration process for the steps of the method according to the claims 13 or 14, for each of said predetermined combinations (120),
- by implementing an interpolation process for said unknown formatted information relative to any combination (P120), from unknown formatted information obtained at the end of the iteration process.

15. Method according to any one of the claims 11 to 14, wherein said method further comprises, for an image restitution means (19) of said line of devices, the step of producing data characterizing defaults (P5) In the image restitution means (19), notably the distortion features; said unknown formatted information (15) being at least partially composed of said data characterizing defaults (P5) in the image restitution means (19).

16. Method according to any one of the claims 1 to 15, wherein said method is configured in such a way that said image (P2) comprises associated information (P63), notably a digital signature; said associated information (P63) being modified or actualized according to the processing operations applied to the image during the method steps.

17. Method according to any one of the claims 1 to 16, wherein said method further comprises the step of associating information to said modified image, notably information indicating that it has been modified.

18. Method according to claim 17, wherein said method is more particularly intended to modify the visual quality of said image for an observer; said formatted information (15) linked to the defaults (P5) of the devices of said line of devices (P3) further comprising formatted information linked to the vision features of said observer, notably dysfunctions of the eyes and/or the brain of said observer.

19. System for modifying the quality of at least one image (P2) from or to a determined line of devices (P3); said determined line of devices (P3) comprising at least one image acquisition device (1) and/or at least one image restitution device (19), said device being **characterized by** an identifier; said image acquisition devices and/or said image restitution devices (19) belonging to a group of devices (P75); said devices of said group of devices (P75) having defaults (P5) that can be **characterized by** formatted information (15),
said system comprising computer processing means (P76) enabling, for said image, to:
- obtain the identifier of said device of the line of devices, this identifier being obtained for example from the image, in the case of an image acquisition device,
- list sources (P50) of formatted information (15) relative to said devices of said group of devices,
- search among said formatted information (15), thus listed from the identifier of the device, specific formatted information relative to said determined line of devices (P3),
- improve said image (P2) by means of image processing programs (P64) and/or of image processing components (P65) by taking into account said specific formatted information thus obtained.

20. System according to claim 19, wherein said system being configured in such a way that said computer processing means perform said search by means of an index (P52); said index (P52) being obtained directly or indirectly by analysis means from an analysis of:
- said image (P2), and/or
- said devices of said line of devices (P3), and/or
- loading means for loading said image (P2) into said image processing programs or components (P64, P65), and/or
- loading means for loading said image (P2), modified by said image processing programs or components, to image restitution means (19).

21. System according to claim 20, wherein said devices of said line of devices (P3) are identified by identifiers (60), notably a bar code; said analysis means comprising identification means for determining said identifiers (60).

22. System according to any one of the claims 19 to 21, wherein said system is configured in such a way that said image (P2), said index (P52) and/or said identifier (60) are contained in the same file (P57).

23. System according to any one of the claims 19 to 22, wherein said system is configured in such a way that said image (P2) and at least one part of the specific formatted information (15) are contained in the same image file (P58).

24. System according to any one of the claims 19 to 23, wherein said system further comprises storage means for storing beforehand at least one part of the formatted information (15) into a data base (22); said system further comprising actualization means for actualizing said data base (22).

25. System according to any one of the claims 19 to 24, wherein said system is configured in such a way that one of the devices of said line of devices (P3) has at least one variable feature (66) according to the image (P2), notably the focal distance; a fraction of said specific formatted information (15) being linked to the defaults (P5) of said device having said variable feature (66); said system further comprising calculation means for determining:
- the value of said variable features (66), for said image;
- said fraction of said specific formatted information (15) by taking into account the values of said variable features (66) thus obtained.

26. System according to claim 25, wherein said image is contained in a file (P57); said system being configured in such a way that, for determining the value of said variable feature (66), said system comprises computer processing means for treating data in said file (P57), notably data, for example the focal distance, in a format such as the Exif standard.

27. System according to any one of the claims 19 to 26, wherein said system is configured in such a way that, for modifying the quality of at least one Image (P2) from or to a line of devices (P3), said system comprises computer processing means (P76) for determining:
- a virtual device (708) having defaults (P5) equivalent to at least one part of the defaults (P5) of at least one device of said line of devices (P3), called thereafter original defaults (P5),
- the virtual formatted information (709) linked to the defaults (P5) of said virtual device (708),
said system being configured in such a way that, for determining the specific formatted information linked to the group of devices of said line of devices (P3), said computer processing means (P76) comprise substitution means for substituting said virtual formatted information (709) for said specific formatted information relative to the original defaults (P5).

28. System according to any one of the claims 19 to 27, wherein said system is intended to modify the quality of at least one color plane (P20) of a color image (P21); said color plane (P20) being **characterized by** a determined color (P22); said specific formatted information (15) further comprising data relative to said determined color (P22); said system comprising calculation means for calculating a color plane (P20) by using said data relative to said determined color (P22) and said image (P2).

29. System according to any one of the claims 19 to 28, wherein said system further comprises, when the searching process for said specific formatted information is unsuccessful for one of the devices of said line of devices (P3), calculation means for calculating said unknown formatted information (15).

30. System according to claim 29, wherein said system is configured in such a way that said calculation means for calculating said unknown formatted information, linked to a device of said line of devices (P3), comprise processing means for measuring defaults (P5) of said device, and/or for simulating said device.

31. System according to any one of the claims 29 or 30, wherein said system further comprises, for an image acquisition device (1) of said line of devices (P3), calculation means for calculating said unknown formatted information (15) by generating a class of computer generated images (7), by means of determined mathematical projections (8), of at least one reference scene (9), on a surface (10); said image acquisition means (1) acquiring at least one reference image (11) of each reference scene (9), said calculation means calculating said unknown formatted information (15) by selecting In a group of parametrizable transformation models (12) the model enabling to transform said reference image (11) into a transformed image (13) close to said class of computer generated images (7) of said reference scene (9); said transformed image (13) having a difference (14) from said class of computer generated images (7); said unknown formatted information (15) being at least partially composed of the parameters of said parametrizable transformation models (12) selected.

32. System according to claim 31, wherein said system is configured in such a way that one of the devices of said line of devices (P3) has at least one variable feature (66) according to the image (P2), notably the focal distance and/or the aperture; a fraction of said specific formatted information (15) being linked to the defaults (P5) of the device having said feature(s) (66); each variable feature (66) being likely to be associated to a value for forming a combination (P120) composed of all said variable features (66) and said values; said system further comprising computer processing means (P76) for determining said fraction of said unknown formatted information (15):
- by selecting predetermined combinations (P120),
- by implementing, for each of said predetermined combinations (P120), an iteration process for the calculation means and computer processing means (P76) covered by the claims 35 or 36,
- by implementing an interpolation process for said unknown formatted information relative to any combination (P120), from unknown formatted information obtained at the end of the iteration process.

33. System according to any one of the claims 29 to 32, wherein said system further comprises, for an image restitution means (19) of said line of devices, computer processing means (P76) for producing data characterizing defaults (P5) in the image restitution means (19), notably distortion features; said unknown formatted information (15) being at least partially composed of said data characterizing defaults (P5) in the image restitution means (19).

34. System according to any one of the claims 19 to 33, wherein said system is configured in such a way that said image (P2) comprises associated information (P63), notably a digital signature; said associated information (P63) being modified or actualized for showing the processing operations applied to the image.

35. System according to any one of the claims 19 to 34, wherein said system further comprises computer processing means for associating information to said modified Image, notably information indicating that it has been modified.

36. System according to claim 35, wherein said system is more particularly intended to modify the visual quality of said image for an observer; said formatted information (15) linked to the defaults (P5) of the devices of said line of devices (P3) further comprising formatted information (15) linked the vision features of said observer, notably dysfunctions of the eyes and/or the brain of said observer.

## Patentansprüche

1. Verfahren zum Modifizieren der Qualität mindestens eines Bildes (P2) von oder zu einer bestimmten Vorrichtungskette (P3); wobei die genannte bestimmte Vorrichtungskette (P3) mindestens eine Bilderfassungsvorrichtung (1) und/oder mindestens einer Bildwiedergabenvorrichtung (19) umfasst, wobei die genannte Vorrichtung durch einen Identifizierer **gekennzeichnet** ist; wobei die genannten Bilderfassungsvorrichtungen (1) und/oder die genannten Bildwiedergabenvorrichtungen (19) zu einer Gruppe von Vorrichtungen (P75) gehören; wobei die genannten Vorrichtungen der genannten Gruppe von Vorrichtungen (P75) Fehler (P5) aufweisen, welche durch formatierte Informationen (15) **gekennzeichnet** werden können, wobei ein Fehler mit den Merkmalen der Optik und/oder des Aufnehmers und/oder der Elektronik und/oder der Software verbunden ist, welche in der Vorrichtung integriert sind; wobei die Fehler (P5) zum Beispiel die Verzerrung, die Unschärfe, die Vignettierung, die chromatischen Abweichungen, die Farbwiedergabe, die Flashgleichmäßigkeit, das Aufnehmergeräusch, das Korn, das Astigmatismus, die sphärische Abweichung sind;
wobei für das genannte Bild (P2) das genannte Verfahren die folgenden Schritte umfasst:
- den Schritt zum Erhalten des Identifizierers der genannten Vorrichtung, wobei bei einer Bilderfassungsvorrichtung dieser Identifizierer zum Beispiel aus dem Bild erhaltet wird,
- den Schritt zum Auflisten von Quellen (P50) von formatierten Informationen (15) über die genannten Vorrichtungen der genannten Gruppe von Vorrichtungen (P75),
- den Schritt zum Suchen unter den genannten, **dadurch** aufgelisteten formatierten Informationen (15), mittels des Identifizierers der Vorrichtung, von spezifischen formatierten Informationen über die genannte bestimmte Vorrichtungskette (P3),
- den Schritt zum Verbessern des genannten Bildes (P2) mittels Bildverarbeitungsprogramme (P64) und/oder Bildverarbeitungsbauteile (P65) unter Berücksichtigung der genannten, **dadurch** erhaltenen, spezifischen formatierten Informationen.

2. Verfahren nach Anspruch 1, wobei das genannte Verfahren derart ausgebildet ist, dass das genannte Suchen mittels eines Indexes (P52) durchgeführt wird, welches mittelbar oder unmittelbar erhaltet wird, unter Durchführung einer Analyse:
- des genannten Bildes (P2), und/oder
- der genannten Vorrichtungen der genannten Vorrichtungskette (P3),
und/oder
- der Ladenmittel für das Laden des modifizierten Bildes in die genannten Bildverarbeitungsprogramme oder-Bauteile (P64, P65), und/oder
- der Ladenmittel für das Laden des durch die genannten Bildverarbeitungsprogramme oder -Bauteile (P64, P65) modifizierten Bildes zu den Bildwiedergabemittel (19).

3. Verfahren nach Anspruch 2, wobei die genannte Vorrichtungen der genannte Vorrichtungskette (P3) mittels identifizierer (60), insbesondere einer Strichcode, **gekennzeichnet** werden; wobei die genannte Analyse zum Suchen der genannten spezifischen formatierten Informationen den Schritt zum Bestimmen der genannten Identifizierer (60) umfasst.

4. Verfahren nach einem der Ansprüche 1 bis 3, wobei das genannte Verfahren derart ausgebildet ist, dass das genannte Bild (P2), das genannte Index (P52) und/oder die genannten Identifizierer (60) in derselben Datel (P57) enthalten sind.

5. Verfahren nach einem der Ansprüche 1 bis 4, wobei das genannte Verfahren derart ausgebildet ist, dass das genannte Bild (P2) und mindestens ein Teil der spezifischen formatierten Informationen (15) in derselben Bilddatei (P58) enthalten sind.

6. Verfahren nach einem der Ansprüche 1 bis 5, wobei das genannte Verfahren den Schritt zum Speichern vorher mindestens eines Teils der formatierten Informationen (15) in eine Datenbank (22) weiter umfasst; wobei das genannte Verfahren den Schritt zum Aktualisieren der genannten Datenbank (22) weiter umfasst.

7. Verfahren nach einem der Ansprüche 1 bis 6, wobei das genannte Verfahren derart ausgebildet ist, dass eine der Vorrichtungen der genannten Vorrichtungskette (P3) mindestens ein variables Merkmal (66) nach dem Bild (P2), insbesondere die Brennweite, aufweist; wobei ein Bruchteil der genannten spezifischen formatierten Informationen (15) mit den Fehlern (P5) der Vorrichtung mit dem variablen Merkmal (66) verbunden ist; wobei das genannte Verfahren die folgenden Schritte weiter umfasst:
- den Schritt zum Bestimmen des Werts der genannten variablen Merkmale (66), für das genannte Bild;
- den Schritt zum Bestimmen des Bruchteils der genannten spezifischen formatierten Informationen (15) unter Berücksichtigung der Werte der genannten **dadurch** erhaltenen variablen Merkmale (66).

8. Verfahren nach Anspruch 7, wobei das genannte Bild in einer Datei (P57) enthalten ist; wobei das genannte Verfahren derart ausgebildet ist, dass zum Bestimmen des Werts des genannten variablen Merkmals (66) Daten in der genannten Datei (P57), insbesondere Daten, zum Beispiel die Brennweite, in einem Format, wie Exif Standard, verwendet werden.

9. Verfahren nach einem der Ansprüche 1 bis 8, wobei das genannte Verfahren derart ausgebildet ist, dass zum Modifizieren der Qualität mindestens eines Bildes (P2) von oder zu einer Vorrichtungskette (P3):
- eine virtuelle Vorrichtung (708) mit Fehlern (P5), bezeichnet weiter unten als ursprüngliche Fehler, entsprechend mindestens einem Teil der Fehler (P5) mindestens einer Vorrichtung der genannten Vorrichtungskette (P3), bestimmt wird,
- die virtuellen formatierten Informationen (709), verbunden mit den Fehlern (P5) der virtuellen Vorrichtungen (708), bestimmt werden,
- zum Bestimmen der spezifischen formatierten Informationen, verbunden mit der Gruppe von Vorrichtungen der genannten Vorrichtungskette (P3), die spezifischen formatierten Informationen über die ursprünglichen Fehler (P5) durch die genannten virtuellen formatierten Informationen (709) ersetzt werden.

10. Verfahren nach einem der Ansprüche 1 bis 9, wobei das genannte Verfahren für das Modifizieren der Qualität mindestens einer Farbebene (P20) eines Farbbildes (P21) bestimmt ist; wobei die Farbebene (P20) durch eine bestimmte Farbe (P22) **gekennzeichnet** ist; wobei die genannten spezifischen formatierten Informationen (15) Daten über die genannten bestimmten Farbe (P22) weiter umfassen; wobei zum Modifizieren des genannten Bildes eine Farbebene (P20) unter Verwendung der Daten über die genannten bestimmten Farbe (P22) und das genannte Bild (P2) gerechnet wird.

11. Verfahren nach einem der Ansprüche 1 bis 10, wobei bei einem erfolglosen Suchprozess für die spezifischen formatierten Informationen für eine der Vorrichtungen der Vorrichtungskette (P3) das genannte Verfahren einen Schritt zum Rechnen der genannten unbekannten formatierten Informationen (15) weiter umfasst.

12. Verfahren nach Anspruch 11, wobei das genannte Verfahren den Schritt zum Rechnen der genannten unbekannten formatierten Informationen, verbunden mit einer Vorrichtung der genannten Vorrichtungskette (P3), weiter umfasst:
- unter Messung von Fehlern (P5) der genannten Vorrichtungen, und/oder
- unter Simulierung der genannten Vorrichtung.

13. Verfahren nach einem der Ansprüche 11 oder 12, wobei bei einer Bilderfassungsvorrichtung (1) der genannten Vorrichtungskette (P3) das genannte Verfahren den Schritt zum Rechnen der genannten unbekannten formatierten Informationen (15) weiter umfasst:
- unter Erzeugung einer Klasse von Computererzeugten Bilden (7) mittels bestimmter mathematischer Projektionen (8) mindestens einer Referenzszene (9) auf eine Fläche (10),
- unter Erfassung mindestens eines Referenzbildes (11) jeder Referenzszene (9) mittels der genannten Bilderfassungsvorrichtung (1),
- unter Auswahl eines Modells aus einer Gruppe von parametrierbaren Transformationsmodellen (12), welches die Transformation des genannten Referenzbildes (11) zu einem transformierten Bild (13), nah an der genannte Klasse von Computererzeugten Bilden (7) der Referenzszene (9), erlaubt; wobei das genannte transformlerte Bild (13) einen Unterschied (14) zur genannten Klasse von Computererzeugten Bilden (7) aufweist;
wobei die genannten unbekannten formatierten Informationen (15) mindestens teilweise aus den Parametern der genannten ausgewählten parametrierbaren Transformationsmodelle (12) bestehen.

14. Verfahren nach Anspruch 13, wobei das genannte Verfahren derart ausgebildet ist, dass eine der Vorrichtungen der genannten Vorrichtungskette (P3) mindestens ein variables Merkmal (66) nach dem Bild (P2), insbesondere die Brennweite und/oder die Blende, aufweist; wobei ein Bruchteil der genannten spezifischen formatierten Informationen (15) mit den Fehlern (P5) der Vorrichtung mit dem oder den genannten Merkmal(en) (66) verbunden sind; wobei jedes variable Merkmal (66) mit einem Wert assoziiert werden kann, um eine Kombination (P120) aller genannten variablen Merkmale (66) und genannten Werte zu bilden;
wobei das genannte Verfahren den Schritt zum Bestimmen des genannten Bruchteils der genannten unbekannten formatierten Informationen (15) umfasst:
- unter Auswahl von vorbestimmten Kombinationen (P120),
- unter Durchführung eines Iterationsprozesses für die Verfahrenschritte nach der Ansprüche 13 oder 14, für jede der genannten vorbestimmten Kombinationen (P120),
- unter Durchführung eines Interpolationsprozesses für die genannten unbekannten formatierten Informationen über eine beliebige Kombination (P120) aus den am Ende des Iterationsprozesses erhaltenen, unbekannten formatierten Informationen.

15. Verfahren nach einem der Ansprüche 11 bis 14, wobei bei einem Bildwiedergabemittel (19) der genannten Vorrichtungskette das genannte Verfahren den Schritt zum Erzeugen der Daten weiter umfasst, welche Fehler (P5) der Bildwiedergabemittel (19), insbesondere die Verzerrungsmerkmale, kennzeichnen; wobei die genannten unbekannten formatierten Informationen (15) mindestens teilweise aus den genannten Daten bestehen, welche Fehler (P5) der Bildwiedergabemittel (19) kennzeichnen.

16. Verfahren nach einem der Ansprüche 1 bis 15, wobei das genannte Verfahren derart ausgebildet ist, dass das genannte Bild (P2) assoziierte Informationen (P63), insbesondere eine elektronische Signatur, umfasst; wobei die genannten assoziierten Informationen (P63) nach den Verarbeitungsoperationen für das Bild während der Verfahrenschritte modifiziert oder aktualisiert werden.

17. Verfahren nach einem der Ansprüche 1 bis 6, wobei das genannte Verfahren den Schritt zum Assoziieren von Informationen mit dem modifizierten Bild, insbesondere die Information über seiner Modifikation, weiter umfasst.

18. Verfahren nach Anspruch 17, wobei das genannte Verfahren ganz besonders für die Modifikation der visuellen Qualität des genannten Bildes für einen Beobachter bestimmt ist; wobei die genannten formatierten Informationen (15), verbunden mit den Fehlern (P5) der Vorrichtungen der genannten Vorrichtungskette (3), formatierte Informationen, verbunden mit den Sehmerkmalen des genannten Beobachters, insbesondere Funktionsstörungen der Augen und/oder des Hirns des genannten Beobachters, weiter enthalten.

19. System zum Modifizieren der Qualität mindestens eines Bildes (P2) von oder zu einer bestimmten Vorrichtungskette (P3); wobei die genannte bestimmte Vorrichtungskette (P3) mindestens eine Bilderfassungsvorrichtung (1) und/oder mindestens einer Bildwiedergabenvorrichtung (19) umfasst, wobei die genannte Vorrichtung durch einen Identifizierer **gekennzeichnet** ist; wobei die genannten Bilderfassungsvorrichtungen (1) und/oder die genannten Bildwiedergabenvorrichtungen (19) zu einer Gruppe von Vorrichtungen (P75) gehören; wobei die genannten Vorrichtungen der genannten Gruppe von Vorrichtungen (P75) Fehler (P5) aufweisen, welche durch formatierte Informationen (15) **gekennzeichnet** werden können,
wobei das genannte System Computerverarbeitungsmittel (P76) umfasst, welche für das genannte Bild erlauben:
- das Erhalten des Identifizierers der genannten Vorrichtung der Vorrichtungskette, wobei bei einer Bilderfassungsvorrichtung dieser Identifizierer zum Beispiel aus dem Bild erhaltet wird,
- das Auflisten der Quellen (P50) von formatierten Informationen (15) über die genannten Vorrichtungen der genannten Gruppe von Vorrichtungen,
- das Suchen der spezifischen formatierten Informationen über die genannte bestimmte Vorrichtungskette (P3) unter den genannten, **dadurch** aufgelisteten formatierten Informationen (15) mittels des identifizierers der Vorrichtung,
- das Verbessern des genannten Bildes (P2) mittels Bildverarbeitungsprogramme (P64) und/oder Bildverarbeitungsbauteile (P65) unter Berücksichtigung der genannten, **dadurch** erhaltenen, spezifischen formatierten Informationen.

20. System nach Anspruch 19, wobei das genannte System derart ausgebildet ist, dass die genannten Computerverarbeitungsmittel das genannte Suchen mittels eines Indexes (P52) durchführen; das genannte Index (P52) mittelbar oder unmittelbar durch Analysemittel erhaltet wird, unter Durchführung einer Analyse:
- des genannten Bildes (P2), und/oder
- der genannten Vorrichtungen der genannten Vorrichtungskette (P3),
und/oder
- der Ladenmittel für das Laden des modifizierten Bildes in die genannten Bildverarbeitungsprogramme oder -Bauteile (P64, P65), und/oder
- der Ladenmittel für das Laden des durch die genannten Bildverarbeitungsprogramme oder -Bauteile (P64, P65) modifizierten Bildes zu den Bildwiedergabemittel (19).

21. System nach Anspruch 20, wobei die genannte Vorrichtungen der genannte Vorrichtungskette (P3) mittels Identifizierer (60), insbesondere einer Strichcode, **gekennzeichnet** werden; wobei die genannte Analysemittel Identifizierungsmittel zum Bestimmen der genannten Identifizierer (60) umfassen.

22. System nach einem der Ansprüche 19 bis 21, wobei das genannte System derart ausgebildet ist, dass das genannte Bild (P2), das genannte Index (P52) und/oder die genannten Identifizierer (60) in derselben Datei (P57) enthalten sind.

23. System nach einem der Ansprüche 19 bis 22, wobei das genannte System derart ausgebildet ist, dass das genannte Bild (P2) und mindestens ein Teil der spezifischen formatierten Informationen (15) in derselben Bilddatei (P58) enthalten sind.

24. System nach einem der Ansprüche 19 bis 23, wobei das genannte System Speicherungsmittel zum Speichern vorher mindestens eines Teils der formatierten Informationen (15) in eine Datenbank (22) weiter umfasst; wobei das genannte System Aktualisierungsmittel zum Aktualisieren der genannten Datenbank (22) weiter umfasst.

25. System nach einem der Ansprüche 19 bis 24, wobei das genannte System derart ausgebildet ist, dass eine der Vorrichtungen der genannten Vorrichtungskette (P3) mindestens ein variables Merkmal (66) nach dem Bild (P2), insbesondere die Brennweite, aufweist; wobei ein Bruchteil der genannten spezifischen formatierten Informationen (15) mit den Fehlern (P5) der Vorrichtung mit dem genannten variablen Merkmal (66) verbunden ist; wobei das genannte System Rechnungsmittel weiter umfasst:
- zum Bestimmen des Werts der genannten variablen Merkmale (66), für das genannte Bild;
- zum Bestimmen des Bruchteils der genannten spezifischen formatierten Informationen (15) unter Berücksichtigung der Werte der genannten **dadurch** erhaltenen variablen Merkmale (66).

26. System nach Anspruch 25, wobei das genannte Bild in einer Datei (P57) enthalten ist; wobei das genannte System derart ausgebildet ist, dass zum Bestimmen des Werts des genannten variablen Merkmals (66) das System Computerverarbeitungsmittel zum Verarbeiten von Daten in der genannten Datei (P57), insbesondere von Daten, zum Beispiel die Brennweite, in einem Format wie Exif Standard umfasst.

27. System nach einem der Ansprüche 19 bis 26, wobei das genannte System derart ausgebildet ist, dass zum Modifizieren der Qualität mindestens eines Bildes (P2) von oder zu einer Vorrichtungskette (P3) das genannte System Computerverarbeitungsmittel (P76) umfasst:
- zum Bestimmen einer virtuellen Vorrichtung (708) mit Fehlern (P5), bezeichnet weiter unten als ursprüngliche Fehler, entsprechend mindestens einem Teil der Fehler (P5) mindestens einer Vorrichtung der genannten Vorrichtungskette (P3),
- zum Bestimmen der virtuellen formatierten Informationen (709), verbunden mit den Fehlern (P5) der virtuellen Vorrichtungen (708),
wobei das System derart ausgebildet ist, dass zum Bestimmen der spezifischen formatierten Informationen, verbunden mit der Gruppe von Vorrichtungen der genannten Vorrichtungskette (P3), die genannten Computerverarbeitungsmittel (P76) Ersetzungsmittel zum Ersetzen der spezifischen formatierten Informationen über die ursprünglichen Fehler (P5) durch die genannten virtuellen formatierten Informationen (709) umfassen.

28. System nach einem der Ansprüche 19 bis 27, wobei das genannte System für das Modifizieren der Qualität mindestens einer Farbebene (P20) eines Farbbildes (P21) bestimmt ist; wobei die Farbebene (P20) durch eine bestimmte Farbe (P22) **gekennzeichnet** ist; wobei die genannten spezifischen formatierten Informationen (15) Daten über die genannten bestimmten Farbe (P22) weiter umfassen.; wobei das genannte System Rechnungsmittel zum Rechen einer Farbebene (P20) unter Verwendung der Daten über die genannten bestimmten Farbe (P22) und das genannte Bild (P2) umfasst.

29. System nach einem der Ansprüche 19 bis 28, wobei bei einem erfolglosen Suchprozess für die spezifischen formatierten Informationen für eine der Vorrichtungen der Vorrichtungskette (P3) das genannte System Rechnungsmittel zum Rechnen der genannten unbekannten formatierten Informationen (15) weiter umfasst.

30. System nach Anspruch 29, wobei das genannte System derart ausgebildet ist, dass die Rechnungsmittel zum Rechnen der genannten unbekannten formatierten Informationen, verbunden mit einer Vorrichtung der genannten Vorrichtungskette (P3), Verarbeitungsmittel zum Messen von Fehlern (P5) der genannten Vorrichtungen, und/oder zum Simulieren der genannten Vorrichtung umfassen.

31. System nach einem der Ansprüche 29 oder 30, wobei bei einer Bilderfassungsvorrichtung (1) der genannten Vorrichtungskette (P3) das genannte System Rechnungsmittel zum Rechnen der genannten unbekannten formatierten Informationen (15) unter Erzeugung einer Klasse von Computererzeugten Bilden (7) mittels bestimmter mathematischer Projektionen (8) mindestens einer Referenzszene (9) auf eine Fläche (10) weiter umfasst; wobei die genannte Bilderfassungsvorrichtung (1) mindestens ein Referenzbild (11) jeder Referenzszene (9) erfasst; wobei die genannten Rechnungsmittel die genannten unbekannten formatierten Informationen (15) unter Auswahl eines Modells aus einer Gruppe von parametrierbaren Transformationsmodellen (12) rechnen, welches die Transformation des genannten Referenzbildes (11) zu einem transformierten Bild (13), nah an der genannte Klasse von Computererzeugten Bilden (7) der Referenzszene (9), erlaubt; wobei das genannte transformierte Bild (13) einen Unterschied (14) zur genannten Klasse von Computererzeugten Bilden (7) aufweist; die genannten unbekannten formatierten Informationen (15) mindestens teilweise aus den Parametern der genannten ausgewählten parametrierbaren Transformationsmodelle (12) bestehen.

32. System nach Anspruch 31, wobei das genannte System derart ausgebildet ist, dass eine der Vorrichtungen der genannten Vorrichtungskette (P3) mindestens ein variables Merkmal (66) nach dem Bild (P2), insbesondere die Brennweite und/oder die Blende, aufweist; wobei ein Bruchteil der genannten spezifischen formatierten Informationen (15) mit den Fehlern (P5) der Vorrichtung mit dem oder den genannten Merkmal(en) (66) verbunden sind; wobei jedes variable Merkmal (66) mit einem Wert assoziiert werden kann, um eine Kombination (P120) aller genannten variablen Merkmale (66) und genannten Werte zu bilden; wobei das genannte System Computerverarbeitungsmittel (P76) zum Bestimmen des genannten Bruchteils der genannten unbekannten formatierten Informationen (15) weiter umfasst:
- unter Auswahl von vorbestimmten Kombinationen (P120),
- unter Durchführung eines Iterationsprozesses für die Rechnungsmittel und die Computerverarbeitungsmittel (P76) nach der Ansprüche 35 oder 36, für jede der genannten vorbestimmten Kombinationen (P120),
- unter Durchführung eines Interpolationsprozesses für die genannten unbekannten formatierten Informationen (15) über eine beliebige Kombination (P120) aus den am Ende des Iterationsprozesses erhaltenen, unbekannten formatierten Informationen.

33. System nach einem der Ansprüche 29 bis 32, wobei bei einem Bildwiedergabemittel (19) der genannten Vorrichtungskette (P3) das genannte System Computerverarbeitungsmittel (P76) zum Erzeugen von Daten weiter umfasst, welche Fehler (P5) der Bildwiedergabemittel (19), insbesondere die Verzerrungsmerkmale, kennzeichnen; wobei die genannten unbekannten formatierten Informationen (15) mindestens teilweise aus den genannten Daten bestehen, welche Fehler (P5) der Bildwiedergabemittel (19) kennzeichnen.

34. System nach einem der Ansprüche 19 bis 33, wobei das genannte System derart ausgebildet ist, dass das genannte Bild (P2) assoziierte Informationen (P63), insbesondere eine elektronische Signatur, umfasst; wobei die genannten assoziierten Informationen (P63) nach den Verarbeitungsoperationen für das Bild während der Systemschritte modifiziert oder aktualisiert werden.

35. System nach einem der Ansprüche 19 bis 34, wobei das genannte System Computerverarbeitungsmittel zum Assoziieren von Informationen mit dem genannten modifizierten Bild, insbesondere die Information über seiner Modifikation, weiter umfasst.

36. System nach Anspruch 35, wobei das genannte System ganz besonders für die Modifikation der visuellen Qualität des genannten Bildes für einen Beobachter bestimmt ist; wobei die genannten formatierten Informationen (15), verbunden mit den Fehlern (P5) der Vorrichtungen der genannten Vorrichtungskette (P3), formatierte Informationen, verbunden mit den Sehmerkmalen des genannten Beobachters, insbesondere Funktionsstörungen der Augen und/oder des Hirns des genannten Beobachters, weiter umfassen.
